# EUROPEAN PATENT APPLICATION

(11) **EP 2 848 994 A1**
(43) Date of publication of application: **18.03.2015**
(21) Application number: 13787928.4
(22) Date of filing: 08.05.2013
(51) Int. Cl.: G03B 17/14, G03B 17/56, H04N 5/225

(54) **ACCESSORY, CAMERA BODY**

(30) Priority: 08.05.2012 JP 2012106851
(71) Applicant: Nikon Corporation, Tokyo 100-8331 (JP)
(72) Inventor: SUZUKI, Tomoaki, Tokyo 100-8331 (JP)
(74) Representative: Hoffmann Eitle
(86) International application number: PCT/JP2013/062942
(87) International publication number: WO 2013/168742

(57) **Abstract**

An accessory that is detachably mounted to a camera body, includes: a first communication unit that communicates with the camera body using a first transmission line; a second communication unit that, when a predetermined condition is satisfied, communicates with the camera body by using the first transmission line and a second transmission line that is different from the first transmission line; and a changeover unit that, when the predetermined condition is satisfied, changes over communication with the camera body from communication by the first communication unit to communication by the second communication unit.

## Description

### TECHNICAL FIELD

The present invention relates to an accessory, and to a camera body.

### BACKGROUND ART

As a camera system comprising a camera body and an accessory (including an adapter or converter, or an interchangeable lens), a camera system that includes a plurality of communication systems is per se known (refer to Patent Document #1). The camera system of Patent Document #1 includes a communication contact point group for performing communication between a camera body and an interchangeable lens, and also a communication contact point group for performing communication between an adapter and the interchangeable lens.

### CITATION LIST

### PATENT LITERATURE

Patent Document #1: Japanese Laid-Open Patent Publication H07-234432

### SUMMARY OF INVENTION

### TECHNICAL PROBLEM

In camera systems, along with the progression of technology for auto focusing and camera shake correction, there is a tendency for the amount of communication between the camera body and the accessory to increase. However, increase of the time required for communication entails increase of the time required for photography, and this causes an undesirable loss of convenience.

### SOLUTION TO TECHNICAL PROBLEM

An accessory that is detachably mounted to a camera body, according to a first aspect of the present invention comprises: a first communication unit that communicates with the camera body using a first transmission line; a second communication unit that, when a predetermined condition is satisfied, communicates with the camera body by using the first transmission line and a second transmission line that is different from the first transmission line; and a changeover unit that, when the predetermined condition is satisfied, changes over communication with the camera body from communication by the first communication unit to communication by the second communication unit.

According to a second aspect of the present invention, in the accessory according to the first aspect, it is preferable that the second communication unit includes the first communication unit.

According to a third aspect of the present invention, in the accessory according to the first or second aspect, it is preferable that the second communication unit outputs, to the second communication line, an inverse signal complementary to a signal outputted to the first transmission line.

According to a fourth aspect of the present invention, in the accessory according to any one of the first to third aspects, it is preferable to further comprise: an information storage unit that stores specification information specifying that the accessory comprises the second communication unit; wherein: the first communication unit transmits the specification information to the camera body; and the predetermined condition includes that the first communication unit has transmitted the specification information.

According to a fifth aspect of the present invention, in the accessory according to any one of the first to fourth aspects, it is preferable that a second accessory to be electrically connected to the second transmission line is detachably connected to the accessory; and the first communication unit further communicates with the second accessory by using the second transmission line.

An accessory, according to a sixth aspect of the present invention, that is employed in a camera system comprising a camera body and an interchangeable lens that is detachably mounted to the camera body and including a first transmission line and a second transmission line between the interchangeable lens and the camera body, and that is detachably mounted at least to the interchangeable lens, comprises: a communication unit that communicates with the interchangeable lens by using the first transmission line; and an interception unit that, when the interchangeable lens starts communication with the camera body by using the first transmission line and the second transmission line, intercepts communication with the interchangeable lens by the communication unit.

A camera body to which an accessory is detachably mounted, according to a seventh aspect of the present invention, comprises: a first communication unit that communicates with the accessory using a first transmission line; a second communication unit that, when a predetermined condition is satisfied, communicates with the accessory by using the first transmission line and a second transmission line that is different from the first transmission line; and a changeover unit that, when the predetermined condition is satisfied, changes over communication with the accessory from communication by the first communication unit to communication by the second communication unit.

According to an eighth aspect of the present invention, in the camera body according to the seventh aspect, it is preferable that the second communication unit includes the first communication unit.

According to a ninth aspect of the present invention, in the camera body according to the seventh or eighth aspect, it is preferable that the second communication unit outputs, to the second communication line, an inverse signal complementary to a signal outputted to the first transmission line.

According to a tenth aspect of the present invention, in the camera body according to any one of the seventh to ninth aspects, it is preferable that: the predetermined condition includes that the first communication unit has received specification information concerning that the accessory comprises an accessory side communication unit that performs communication with the second communication unit by using the first transmission line and the second transmission line.

An accessory, according to an eleventh aspect of the present invention, that is detachably mounted to a camera body including a first body contact point, a second body contact point, a third body contact point, a fourth body contact point, a fifth body contact point, and a sixth body contact point, the accessory comprises: a first accessory contact point that is connected to the first body contact point when the accessory is installed to the camera body; a second accessory contact point that is connected to the second body contact point when the accessory is installed to the camera body; a third accessory contact point that is connected to the third body contact point when the accessory is installed to the camera body; a fourth accessory contact point that is connected to the fourth body contact point when the accessory is installed to the camera body; a fifth accessory contact point that is connected to the fifth body contact point when the accessory is installed to the camera body; a sixth accessory contact point that is connected to the sixth body contact point when the accessory is installed to the camera body; a first communication unit that sets up a plurality of first transmission lines, one between the first accessory contact point and the first body contact point, one between the second accessory contact point and the second body contact point, and one between the third accessory contact point and the third body contact point, and that communicates with the camera body by using the plurality of first transmission lines; a second communication unit that, when a predetermined condition is satisfied, sets up a plurality of second transmission lines, one between the fourth accessory contact point and the fourth body contact point, one between the fifth accessory contact point and the fifth body contact point, and one between the sixth accessory contact point and the sixth body contact point, and that communicates with the camera body by using the plurality of first transmission lines and the plurality of second transmission lines; and a changeover unit that, when the predetermined condition is satisfied, changes over communication with the camera body from communication with the first communication unit to communication with the second communication unit; wherein the first communication unit: transmits and receives a read/write signal between the first accessory contact point and the first body contact point; receives a first clock pulse signal from the second body contact point via the first accessory contact point; receives a first data signal synchronized with the first clock pulse signal from the third body contact point via the third accessory contact point when the read/write signal is at a level corresponding to a first truth value; and transmits the first data signal to the third body contact point via the third accessory contact point when the read/write signal is at a level corresponding to a second truth value that is different from the first truth value; and wherein the second communication unit: transmits and receives the read/write signal between the first accessory contact point and the first body contact point, and also transmits and receives a first inverse signal complementary to the read/write signal between the fourth accessory contact point and the fourth body contact point; receives a second clock pulse signal whose frequency is higher than that of the first clock pulse signal from the second body contact point via the second accessory contact point, and also receives a second inverse signal complementary to the second clock pulse signal from the fifth body contact point via the fifth accessory contact point; when the read/write signal is at a level corresponding to the first truth value, receives a second data signal synchronized with the second clock pulse signal from the third body contact point via the third accessory contact point, and also receives a third inverse signal complementary to the second data signal from the sixth body contact point via the sixth accessory contact point; and when the read/write signal is at a level corresponding to the second truth value, transmits the second data signal to the third body contact point via the third accessory contact point, and also transmits the third inverse signal to the sixth body contact point via the sixth accessory contact point.

According to a twelfth aspect of the present invention, in the accessory according to the eleventh aspect, it is preferable that the second communication unit includes the first communication unit.

According to a thirteenth aspect of the present invention, in the accessory according to the eleventh or twelfth aspect, it is preferable to further comprise: an information storage unit that stores specification information specifying that the accessory comprises the second communication unit; wherein: the first communication unit transmits the specification information to the camera body; and the predetermined condition includes that the first communication unit has transmitted the specification information.

According to a fourteenth aspect of the present invention, in the accessory according to any one of the eleventh to thirteenth aspect, it is preferable that: a second accessory to be electrically connected to the second transmission line is detachably connected to the accessory; and the first communication unit: transmits a third clock pulse signal to the second accessory via the fourth accessory contact point when the second accessory is installed to the accessory; and transmits and receives a third data signal that is synchronized with the third clock pulse signal to and from the second accessory via the fifth accessory contact point when the second accessory is installed to the accessory.

An accessory, according to a fifteenth aspect of the present invention, that is employed in a camera system comprising a camera body including a first body contact point, a second body contact point, a third body contact point, a fourth body contact point, a fifth body contact point, and a sixth body contact point, and an interchangeable lens detachably mounted to the camera body, and that is detachably mounted at least to the interchangeable lens, wherein: the interchangeable lens comprises: a first lens contact point that is connected to the first body contact point when the interchangeable lens is installed to the camera body; a second lens contact point that is connected to the second body contact point when the interchangeable lens is installed to the camera body; a third lens contact point that is connected to the third body contact point when the interchangeable lens is installed to the camera body; a fourth lens contact point that is connected to the fourth body contact point when the interchangeable lens is installed to the camera body; a fifth lens contact point that is connected to the fifth body contact point when the interchangeable lens is installed to the camera body; a sixth lens contact point that is connected to the sixth body contact point when the interchangeable lens is installed to the camera body; a first communication unit that sets up a plurality of first transmission lines, one between the first lens contact point and the first body contact point, one between the second lens contact point and the second body contact point, and one between the third lens contact point and the third body contact point, and that communicates with the camera body by using the plurality of first transmission lines; and a second communication unit that, when a predetermined condition is satisfied, sets up a plurality of second transmission lines, one between the fourth lens contact point and the fourth body contact point, one between the fifth lens contact point and the fifth body contact point, and one between the sixth lens contact point and the sixth body contact point, and that communicates with the camera body by using the plurality of first transmission lines and the plurality of second transmission lines; and the accessory comprises: a first accessory contact point that is connected to the fifth lens contact point when the accessory is installed to the interchangeable lens; a second accessory contact point that is connected to the sixth lens contact point when the accessory is installed to the interchangeable lens; a communication unit that communicates with the interchangeable lens by using the first accessory contact point and the second accessory contact point; and an interception unit that intercepts communication by the communication unit with the interchangeable lens when the interchangeable lens starts communication with the camera body by using the second communication unit.

A camera body, according to a sixteenth aspect of the present invention, that is detachably mounted to an accessory including a first accessory contact point, a second accessory contact point, a third accessory contact point, a fourth accessory contact point, a fifth accessory contact point, and a sixth accessory contact point, comprising: a first body contact point to be connected to the first accessory contact point when the accessory is installed; a second body contact point to be connected to the second accessory contact point when the accessory is installed; a third body contact point to be connected to the third accessory contact point when the accessory is installed; a fourth body contact point to be connected to the fourth accessory contact point when the accessory is installed; a fifth body contact point to be connected to the fifth accessory contact point when the accessory is installed; a sixth body contact point to be connected to the sixth accessory contact point when the accessory is installed; a first communication unit that sets up a plurality of first transmission lines, one between the first accessory contact point and the first body contact point, one between the second accessory contact point and the second body contact point, and one between the third accessory contact point and the third body contact point, and that communicates with the accessory by using the plurality of first transmission lines; a second communication unit that, when a predetermined condition is satisfied, sets up a plurality of second transmission lines, one between the fourth accessory contact point and the fourth body contact point, one between the fifth accessory contact point and the fifth body contact point, and one between the sixth accessory contact point and the sixth body contact point, and that communicates with the accessory by using the plurality of first transmission lines and the plurality of second transmission lines; and a changeover unit that, when the predetermined condition is satisfied, changes over communication with the camera body from communication with the first communication unit to communication with the second communication unit; wherein the first communication unit: transmits and receives a read/write signal between the first accessory contact point and the first body contact point; transmits a first clock pulse signal to the second accessory contact point via the second body contact point; transmits a first data signal synchronized with the first clock pulse signal via the third body contact point to the third accessory contact point when the read/write signal is at a level corresponding to a first truth value; and receives the first data signal from the third accessory contact point via the third body contact point when the read/write signal is at a level corresponding to a second truth value that is different from the first truth value; and the second communication unit: transmits and receives the read/write signal between the first accessory contact point and the first body contact point, and also transmits and receives a first inverse signal complementary to the read/write signal between the fourth accessory contact point and the fourth body contact point; transmits a second clock pulse signal whose frequency is higher than that of the first clock pulse signal to the second accessory contact point via the second body contact point, and also transmits a second inverse signal complementary to the second clock pulse signal to the fifth accessory contact point via the fifth body contact point; when the read/write signal is at a level corresponding to the first truth value, transmits a second data signal synchronized with the second clock pulse signal via the third body contact point to the third accessory contact point, and also transmits a third inverse signal complementary to the second data signal via the sixth body contact point to the sixth accessory contact point via the sixth body contact point; and when the read/write signal is at a level corresponding to the second truth value, receives the second data signal from the third accessory contact point via the third body contact point, and also receives the third inverse signal from the sixth accessory contact point via the sixth body contact point.

### ADVANTAGEOUS EFFECTS OF INVENTION

According to the present invention, it is possible to increase the speed of communication between the camera body and the accessory.

### BRIEF DESCRIPTION OF DRAWINGS

Fig. 1 is a structural block diagram of a digital camera system comprising an interchangeable lens (i.e. an accessory) and a camera body, according to a first embodiment of the present invention;
Fig. 2 is a block diagram showing communication between the camera body and the interchangeable lens (i.e. the accessory) according to this first embodiment of the present invention;
Fig. 3 is a block diagram related to a communication control circuit that outputs signals to communication contact points of the camera body and the interchangeable lens (i.e. the accessory) according to this first embodiment of the present invention;
Fig. 4 is an example of flow charts related to communication operation;
Fig. 5 is an example of a timing chart when high speed communication starts;
Fig. 6 is a structural block diagram of a digital camera system comprising an interchangeable lens (i.e. an accessory), a camera body, and an intermediate adapter, according to a second embodiment of the present invention;
Fig. 7 is a block diagram showing communication between the camera body and the interchangeable lens (i.e. the accessory) according to this second embodiment of the present invention;
Fig. 8 is a block diagram related to a communication control circuit that outputs signals to communication contact points of the intermediate adapter;
Fig. 9 gives examples of flow charts related to communication operation;
Fig. 10 is a block diagram showing communication between a camera body and an interchangeable lens (i.e., an accessory) according to a variant of this second embodiment of the present invention;
Fig. 11 is a block diagram related to communication between a camera body and an interchangeable lens (i.e. an accessory) in the prior art;
Fig. 12 is structural block diagrams of a digital camera system comprising a camera body and an interchangeable lens (i.e. an accessory), according to a third embodiment of the present invention;
Fig. 13 is a plan view of a mounting portion of the camera body according to the third embodiment of the present invention;
Fig. 14 is a plan view of a mounting portion of the interchangeable lens (i.e., the accessory) according to the third embodiment of the present invention;
Fig. 15 is a plan view of a front mounting portion of an intermediate adapter (i.e., an accessory) according to the third embodiment of the present invention;
Fig. 16 is a plan view of a rear mounting portion of this intermediate adapter (i.e., the accessory) according to the third embodiment of the present invention;
Fig. 17 is a block diagram showing communication between the camera body and the interchangeable lens (i.e., the accessory) according to the third embodiment of the present invention;
Fig. 18 is a circuit diagram of a signal control circuit;
Fig. 19 is a table showing examples of three patterns of communication performed on transmission lines between the camera body and the interchangeable lens (i.e., the accessory), according to the third embodiment of the present invention;
Fig. 20 is a setting table for signal control circuits;
Fig. 21 is a setting table for signal control circuits;
Fig. 22 is a setting table for signal control circuits;
Fig. 23 is a setting table for signal control circuits;
Fig. 24 is a setting table for signal control circuits;
Fig. 25 is a setting table for signal control circuits;
Fig. 26 is a setting table for signal control circuits;
Fig. 27 is a flow chart related to initial communication operation performed between the camera body, the interchangeable lens (i.e., the accessory), and the intermediate adapter (i.e., the accessory), according to the third embodiment of the present invention; and
Fig. 28 is a timing chart for when communication is changed over.

### DESCRIPTION OF EMBODIMENTS

### (First Embodiment)

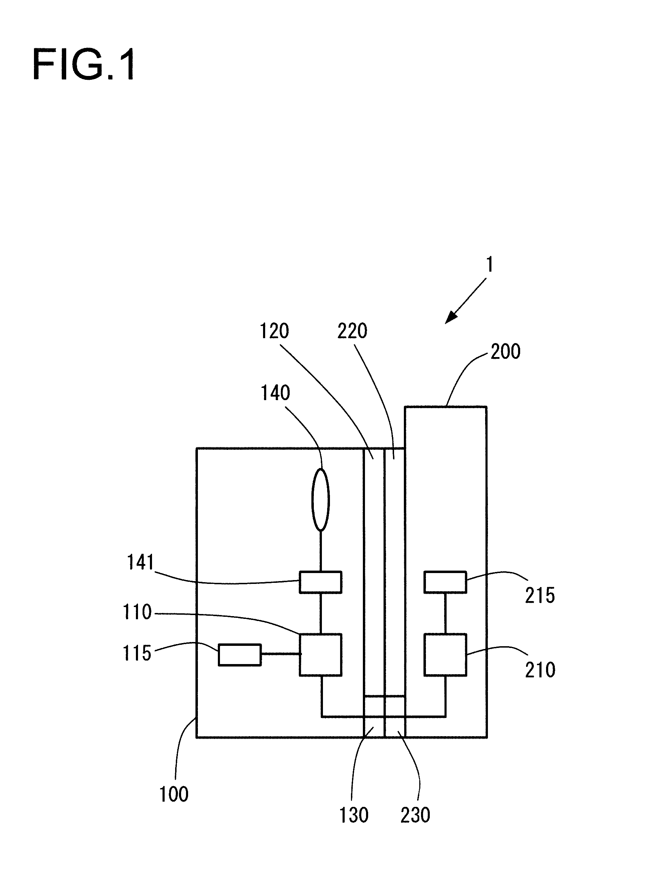

Fig. 1 is a schematic block diagram of a digital camera system comprising an accessory and a camera body, according to a first embodiment of the present invention. The digital camera system 1 of Fig. 1 comprises an interchangeable lens 100 and a camera body 200. The interchangeable lens 100 is one type of accessory, and comprises a lens side microcomputer 110, a lens side storage unit 115, a lens side mounting portion 120, and a lens side contact point group 130. And the camera body 200 comprises a body side microcomputer 210, a body side storage unit 215, a body side mounting portion 220, and a body side contact point group 230. It should be understood that, apart from the structures shown in Fig. 1, the interchangeable lens 100 and the camera body 200 also comprise a large number of other structures, such as an imaging element and so on.

The interchangeable lens 100 is detachably mounted to the camera body 200 via the lens side mounting portion 120. The lens side mounting portion 120 is detachably mounted to the body side mounting portion 220 of the camera body 200. Fig. 1 shows the state in which the lens side mounting portion 120 is installed to the body side mounting portion 220. When the lens side mounting portion 120 is installed to the body side mounting portion 220, the lens side contact point group 130 is electrically connected to the body side contact point group 230.

When processing of some type such as camera shake correction processing or auto focus processing or the like is executed, the lens side microcomputer 110 and the body side microcomputer 210 perform communication via the lens side contact point group 130 and the body side contact point group 230. For example, the lens side microcomputer 110 may transmit a signal or the like specifying lens information or specifying that camera shake correction processing is being performed to the body side microcomputer 210 via the lens side contact point group 130 and the body side contact point group 230. On the other hand, the body side microcomputer 210 transmits information related to the focal point position of a focusing lens 140 to the lens side microcomputer 110. And the lens side microcomputer 110 controls a focusing lens drive unit 141 to drive the focusing lens 140 on the basis of this information that has been received related to the focal point position of the focusing lens 140. It should be understood that the lens information includes various types of information related to the lens such as aperture F value and so on, and also specification information related to the signal output methods and the transmission methods that this interchangeable lens 100 is capable of implementing via the lens side contact point group 130. The details of the signal output methods and of the transmission methods that the interchangeable lens 100 is capable of implementing will be described hereinafter.

The lens side storage unit 115 is a non-volatile storage medium such as a flash memory or the like, and stores a control program that the lens side microcomputer 110 executes when controlling the interchangeable lens 110, and lens information and so on.

And the body side storage unit 215 is a non-volatile storage medium such as a flash memory or the like, and stores a control program that the body side microcomputer 210 executes when controlling the camera body 200, and so on.

### (Explanation of the electrical connections between the lens side microcomputer 110 and the body side microcomputer 210)

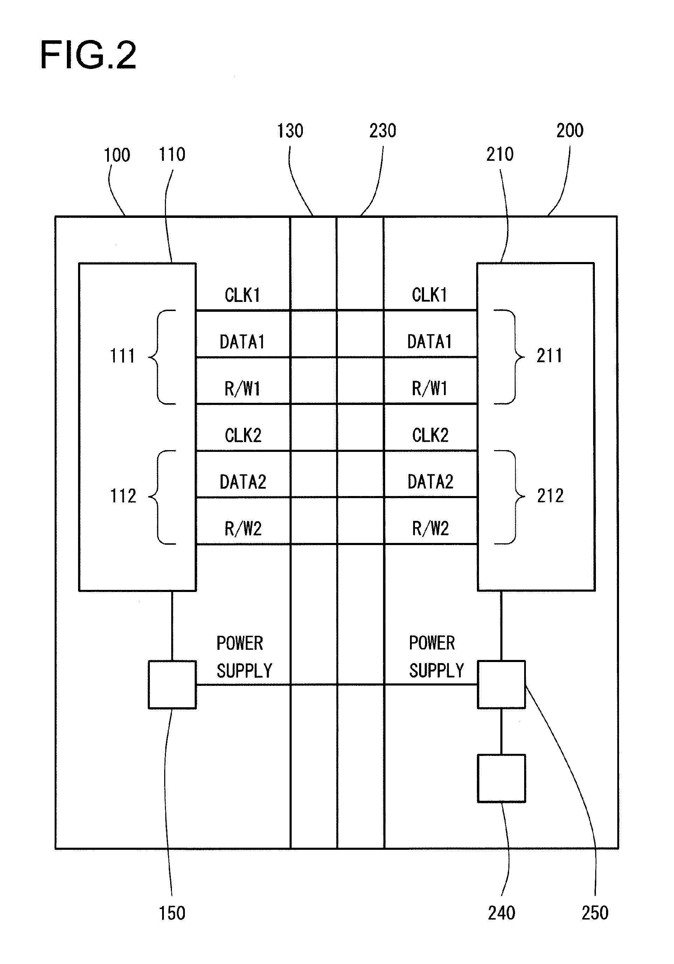

Fig. 2 is a figure showing electrical connections between the lens side microcomputer 110 and the body side microcomputer 210 via the lens side contact point group 130 and the body side contact point group 230. The lens side microcomputer 110 comprises a first lens side communication contact point group 111 and a second lens side communication contact point group 112.

For example, a terminal CLK1, a terminal DATA1, and a terminal R/W1 are included in the first lens side communication contact point group 111. And, for example, a terminal CLK2, a terminal DATA2, and a terminal R/W2 are included in the second lens side communication contact point group 112.

The body side microcomputer 210 comprises a first body side communication contact point group 211 and a second body side communication contact point group 212. Similar terminals to those of the first lens side communication contact point group 111, in other words a terminal CLK1, a terminal DATA1, and a terminal R/W1, are included in the first body side communication contact point group 211. Moreover, similar terminals to those of the second lens side communication contact point group 112, in other words a terminal CLK2, a terminal DATA2, and a terminal R/W2, are included in the second body side communication contact point group 212.

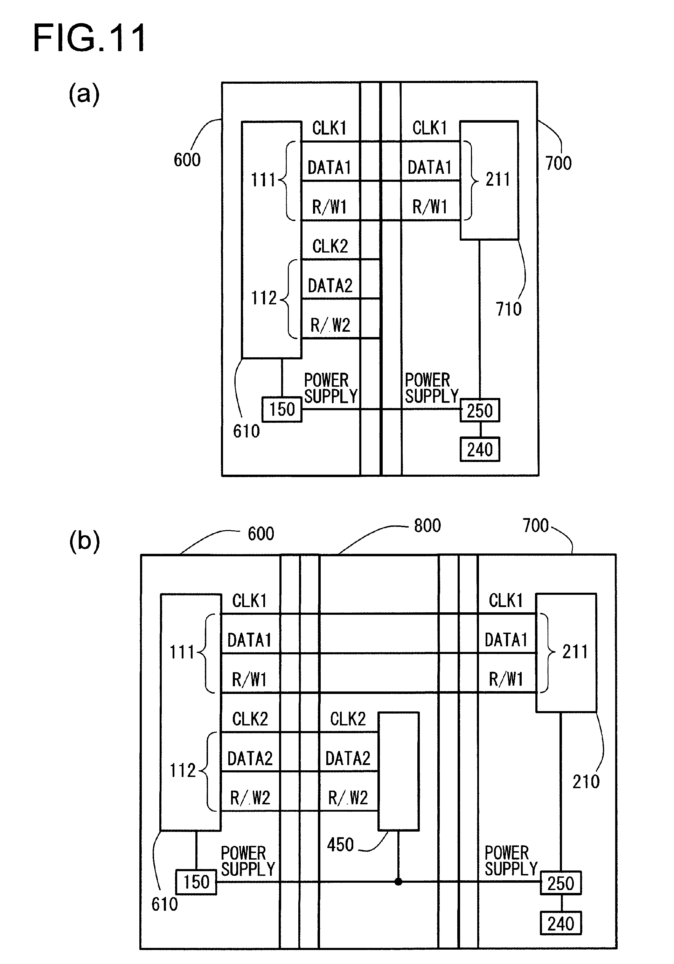

Such a first lens side communication contact point group 111, such a first body side communication contact point group 211, and such a second lens side communication contact point group 112 are utilized in a conventional digital camera system. Each of Figs. 11(a) and 11(b) shows an example of the electrical connections between an interchangeable lens and a camera body in a conventional digital camera. In Fig. 11 (a), an interchangeable lens 600 that comprises a first lens side communication contact point group 111 and a second lens side communication contact point group 112 is mounted on a camera body 700 that comprises a first body side communication contact point group 211. And, in Fig. 11 (b), this interchangeable lens 600 is connected to the camera body 700 with the interposition of an intermediate adapter 800.

When the interchangeable lens 100 of Fig. 2 is connected to the camera body 200, the terminal CLK1 of the first lens side communication contact point group 111 and the terminal CLK1 of the first body side communication contact point group 211 are electrically connected together, and thereby a transmission line is established between these two terminals CLK1. In a similar manner, the terminal DATA1 of the first lens side communication contact point group 111 and the terminal DATA1 of the first body side communication contact point group 211 are electrically connected together, and the terminal R/W1 of the first lens side communication contact point group 111 and the terminal R/W1 of the first body side communication contact point group 211 are electrically connected together, and thereby a communication line is established between each of these two pairs of terminals. The terminals CLK1 of the first lens side communication contact point group 111 and of the first body side communication contact point group 211 perform mutual communication in half duplex. In a similar manner, the terminals DATA1 of the first lens side communication contact point group 111 and of the first body side communication contact point group 211, and the terminals R/W1 of the first lens side communication contact point group 111 and of the first body side communication contact point group 211, also perform mutual communication in half duplex.

Moreover, when the interchangeable lens 100 is connected to the camera body 200, the terminal CLK2 of the second lens side communication contact point group 112 and the terminal CLK2 of the second body side communication contact point group 212 are electrically connected together, and thereby a transmission line is established between these two terminals CLK2. In a similar manner, the terminal DATA2 of the second lens side communication contact point group 112 and the terminal DATA2 of the second body side communication contact point group 212 are electrically connected together, and the terminal R/W2 of the second lens side communication contact point group 112 and the terminal R/W2 of the second body side communication contact point group 212 are electrically connected together, and thereby communication lines are established between these two pairs of terminals. The terminals CLK2 of the second lens side communication contact point group 112 and of the second body side communication contact point group 212 perform mutual communication in half duplex. In a similar manner, the terminals DATA2 of the second lens side communication contact point group 112 and of the second body side communication contact point group 212, and likewise their terminals R/W2, also perform mutual communication in half duplex.

The camera body 200 incorporates a battery 240. Via a DC/DC converter 250, output power is supplied from this battery 240 to the entire camera body 200. Moreover, via the lens side contact point group 130 and the body side contact point group 230, output power from the DC/DC converter 250 is also supplied to the interchangeable lens 100. Power is then supplied via a DC/DC converter 150 to the various sections of the interchangeable lens 100, such as the lens side microcomputer 110 and so on.

### (Communication between the lens side microcomputer 110 and the body side microcomputer 210)

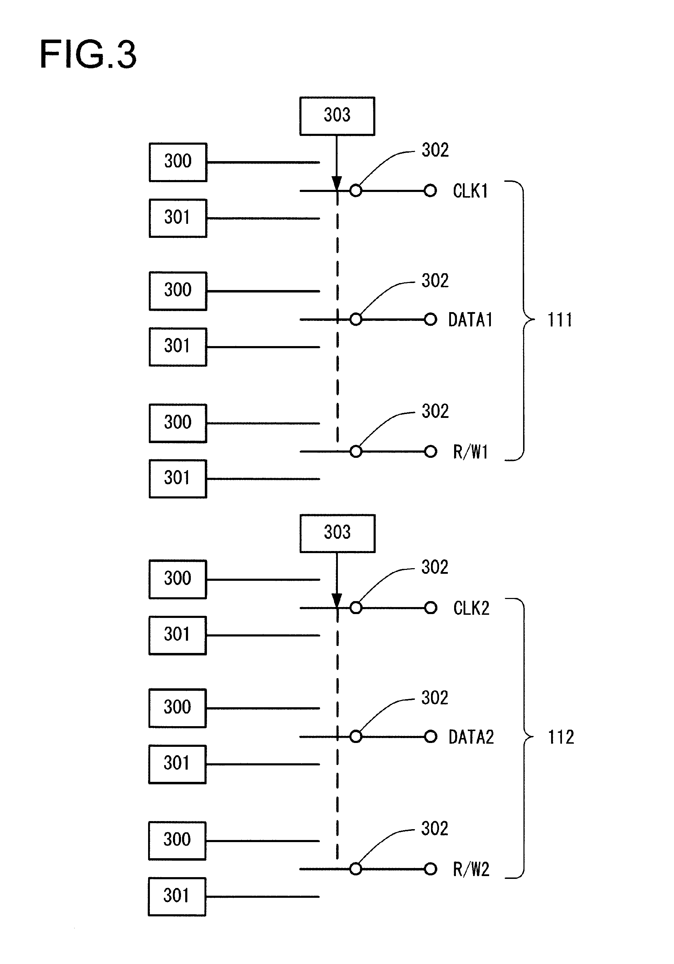

Fig. 3 is a schematic block diagram of a communication control circuit that inputs and outputs signals to and from the first lens side communication contact point group 111 and the second lens side communication contact point group 112 shown in Fig. 2. The communication control circuit shown as an example in Fig. 3 is internally provided within the lens side microcomputer 110. It should be understood that a communication control circuit that connects together the first body side communication contact point group 211 and the second body side communication contact point group 212 is also internally provided within the body side microcomputer 210, just like the one shown in Fig. 3.

As shown in Fig. 3, in this communication control circuit, a first communication circuit 300, a second communication circuit 301, and a changeover device 302 are provided for each of the terminals of the first lens side communication contact point group 111 and of the second lens side communication contact point group 112 (i.e. for the terminal CLK1, the terminal DATA1, the terminal R/W1, the terminal CLK2, the terminal DATA2, and the terminal R/W2). Each of these changeover devices 302 performs changing over or interception (i.e. disconnection, opening, breaking, or establishment of a Hi-Z state) of the communication circuits that are connected to its terminals (i.e. the first communication circuits 300 and the second communication circuits 301). Changing over by each of the changeover devices 302 is performed according to a changeover signal from changeover control circuits 303.

The first communication circuits 300 include signal output circuits of the open drain (open collector) type. And the second communication circuits 301 include signal output circuits of the CMOS type. The second communication circuits 301 can output clock pulse signals whose pulse frequency is higher (i.e. faster) than that of the first communication circuits 300. As signal output methods that the interchangeable lens 100 is capable of implementing, the open drain (open collector) type and the CMOS type are included in the specification information included in the lens information described above.

When the lens side microcomputer 110 and the body side microcomputer 210 are changed over to communication using the first communication circuits 300, then communication is performed according to the single ended method, both between the first lens side communication contact point group 111 and the first body side communication contact point group 211, and between the second lens side communication contact point group 112 and the second body side communication contact point group 212.

And, when the lens side microcomputer 110 and the body side microcomputer 210 are changed over to communication using the second communication circuits 301, then communication is performed according to the differential transmission method by using, as differential transmission lines, the transmission lines between the terminals of the first lens side communication contact point group 111 and the terminals of the first body side communication contact point group 211, and the transmission lines between the terminals of the second lens side communication contact point group 112 and the terminals of the second body side communication contact point group 212. Thus, as transmission methods that the interchangeable lens 100 is capable of implementing, the single ended method and the differential transmission method are included in the specification information included in the lens information described above.

### (Explanation of the output signals in the two transmission methods)

The terminal DATA1 and the terminal DATA2 are terminals for outputting and inputting (i.e. for transmitting and receiving) binarized data. The signal levels at the terminal DATA1 and the terminal DATA2 can be either 0 level (L level, low level) or 1 level (H level, high level).

In communication according to the single ended method using the first communication circuits 300, mutually independent data is outputted and inputted by the terminal DATA1 and the terminal DATA2.

In communication according to the differential transmission method using the second communication circuits 301, an inverse signal complementary to the data signal at the terminal DATA1 is outputted and inputted to the terminal DATA2.

The terminals CLK1 are terminals for outputting and inputting (i.e. transmitting and receiving) clock pulse signals. Data that is outputted to the terminals DATA1 is synchronized with the clock pulse signals at the terminals CLK1.

And the terminals CLK2 are terminals for outputting and inputting (i.e. transmitting and receiving) clock pulse signals. Data that is outputted to the terminals DATA2 is synchronized with the clock pulse signals at the terminals CLK2.

In communication according to the single ended method using the first communication circuits 300, separate clock pulse signals are outputted and inputted at the terminal CLK1 and at the terminal CLK2.

And, in communication according to the differential transmission method using the second communication circuits 301, an inverse signal complementary to the clock pulse signal at the terminals CLK1 is outputted and inputted at the terminals CLK2. Moreover, the clock pulse signals that are outputted and inputted in communication according to the differential transmission method using the second communication circuits 301 have a higher pulse frequency (i.e. their pulse periods are shorter) than that of the clock pulse signals outputted and inputted in communication according to the single ended method using the first communication circuits 300. In communication using the second communication circuits 301, it is possible to make the pulse frequency of the clock pulse signal higher by using a CMOS type signal output circuit or by employing the differential transmission method. In other words, communication according to the differential transmission method using the second communication circuits 301 can perform data communication at high speed, several times to ten and several times higher than communication according to the single ended method using the first communication circuits 300.

The terminals R/W1 and the terminals R/W2 are terminals for outputting and inputting (i.e. transmitting and receiving) read/write signals used in read/write control (i.e. data input and output control) by the microcomputers. The signal levels at the terminals R/W1 and at the terminals R/W2 can be either 0 level (Low level) or 1 level (High level).

In communication according to the single ended method using the first communication circuits 300, mutually independent read/write signals are outputted and inputted at the terminals R/W1 and at the terminals R/W2.

When the read/write signal level at the terminal R/W1 is L level, the lens side microcomputer 110 outputs data to the terminal DATA1.

When the read/write signal level at the terminal R/W1 is H level, the body side microcomputer 210 outputs data to the terminal DATA1.

When the read/write signal level at the terminal R/W2 is L level, the lens side microcomputer 110 outputs data to the terminal DATA2.

And, when the read/write signal level at the terminal R/W2 is H level, the body side microcomputer 210 outputs data to the terminal DATA2.

In communication according to the differential transmission method using the second communication circuits 301, an inverse signal complementary to the read/write signal at the terminals R/W1 is outputted and inputted at the terminals R/W2.

When the read/write signal level of the terminal R/W1 is L level, the read/write signal level at the terminal R/W2 becomes H level. At this time, the lens side microcomputer 110 outputs data to the terminal DATA1, and outputs the inverse signal of that data to the terminal DATA2.

And, when the read/write signal level of the terminal R/W1 is H level, the read/write signal level at the terminal R/W2 becomes L level. At this time, the body side microcomputer 210 outputs data to the terminal DATA1, and outputs the inverse signal of that data to the terminal DATA2.

In communication according to the differential transmission method using the second communication circuits 301, the microcomputer on the reception (input) side receives the pulse signal between the terminals CLK1 and the pulse signal between the terminals CLK2 as a pair of differential signals. Moreover, in a similar manner, in communication according to the differential transmission method using the second communication circuits 301, the microcomputer on the reception side receives the pulse signal between the terminals DATA1 and the pulse signal between the terminals DATA2 as a pair of differential signals, and also receives the pulse signal between the terminals R/W1 and the pulse signal between the terminals R/W2 as a pair of differential signals.

### (Communication operation)

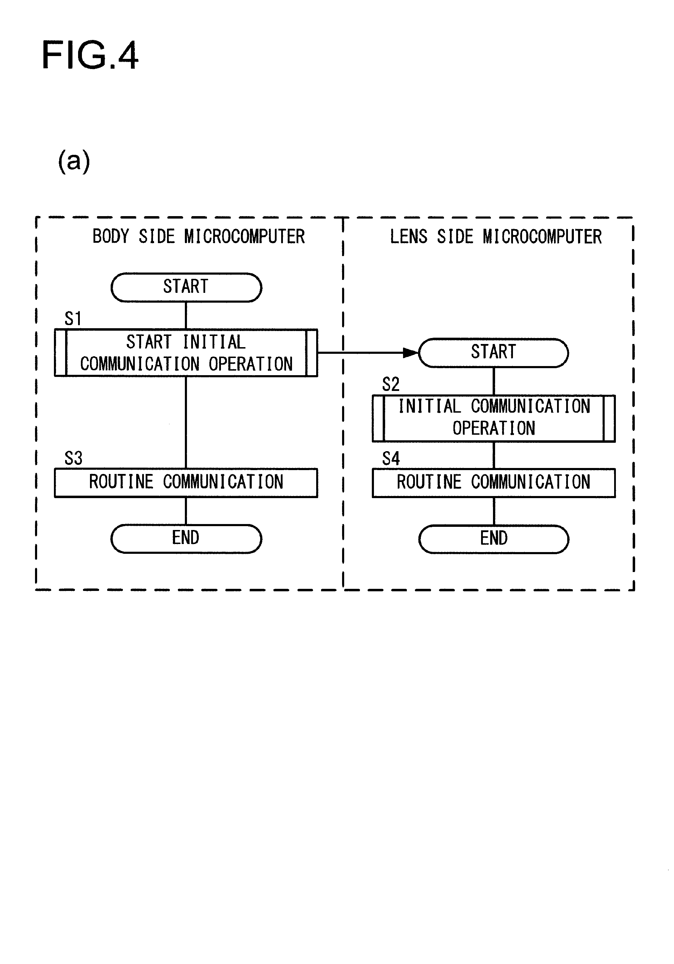

Fig. 4(a) is a flow chart related to communication operation by the digital camera 1. When the power source of the camera body 200 is turned ON, power is supplied to the various sections of the camera body 200, including the body side microcomputer 210. Upon this supply of power, the body side microcomputer 210 proceeds to perform step S1, and starts executing initial communication operation that will be described in detail hereinafter. In this initial communication operation procedure, the supply of power from the camera body 200 to the interchangeable lens 100 is started. Upon this supply of power, the lens side microcomputer 110 proceeds to perform step S2, and initial communication operation that will be described in detail hereinafter is performed. In this process of initial communication operation executed by the body side microcomputer 210 and by the lens side microcomputer 110 in steps S1 and S2, the signal output method and the transmission method that are to be used in routine communication operation are determined. In steps S3 and S4, the body side microcomputer 210 and the lens side microcomputer 110 perform routine communication using this signal output method and this transmission method that have been determined during the above process of initial communication operation.

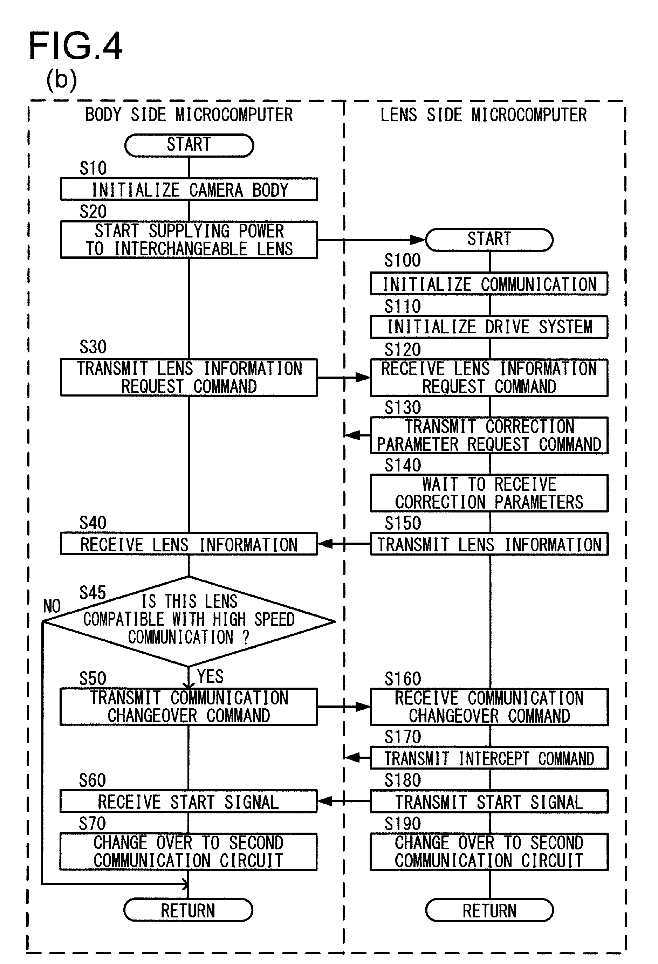

Fig. 4(b) is a flow chart related to the initial communication operation executed in steps S1 and S2 of Fig. 4(a). Upon supply of power, the body side microcomputer 210 initializes the various sections of the camera body 200 in step S10. For example, the body side microcomputer 210 changes over each of the changeover devices 302 so that the first communication circuits 300 are connected to the terminals of the first body side communication contact point group 211, and also changes over the changeover devices 302 so that the communication circuits that are connected to the terminals of the second body side communication contact point group 212 are intercepted (i.e. are disconnected, opened, broken, or put into a Hi-Z state). Here, the reason that the second communication circuits 301 are not selected from the beginning, is because there is a possibility that the interchangeable lens that is detachably mounted to the camera body 200 may not have any second lens side communication contact point group 112.

In step S20, the body side microcomputer 210 starts supply of power to the interchangeable lens 100 via the DC/DC converter 250. Upon receipt of power, the lens side microcomputer 110 of the interchangeable lens 100 starts to perform initial communication in step S2 of Fig. 4(a), and starts executing step S100. In step S100, the lens side microcomputer 100 starts control of the various sections of the interchangeable lens 100, and performs initialization of communication. For example, the lens side microcomputer 110 changes over the changeover devices 302 of the lens side microcomputer 110 so that the first communication circuits 300 are connected to the terminals of the first lens side communication contact point group 111 and of the second lens side communication contact point group 112. Thereafter, the lens side microcomputer 110 proceeds to execute step S110, and performs initialization of the drive system of the focusing lens drive unit 141 and so on.

In step S30, using the first body side communication contact point group 211, the body side microcomputer 210 transmits a lens information request command to the interchangeable lens 100.

In step S120, the lens side microcomputer 110 receives this lens information request command using the first lens side communication contact point group 111.

Subsequently, the lens side microcomputer 110 proceeds to perform step S130, and transmits a correction parameter request command using the second lens side communication contact point group 112. If an intermediate adapter is connected between the interchangeable lens and the camera body, as for example shown in Fig. 11(b), then the correction parameters include the length of the optical path as corrected by this intermediate lens. After transmitting this correction parameter request command, the lens side microcomputer 110 proceeds to perform step S140, and goes into a state of waiting for a predetermined time period for reception of the correction parameters. Since in this first embodiment no intermediate adapter is connected, accordingly the lens side microcomputer 110 does not receive any correction parameters, and times out.

Thereafter, the lens side microcomputer 110 performs step S150, and transmits lens information stored in the lens side storage unit 115 (including the specification information described above) to the camera body 200 using the first lens side communication contact point group 111.

In step S40, the body side microcomputer 210 receives the lens information (including the specification information described above) using the first body side communication contact point group 211. By receiving this lens information, the body side microcomputer 210 recognizes that communication has been established with the interchangeable lens 100 using the first communication contact point group.

In step S45, the body side microcomputer 210 analyzes the specification information included in the lens information that was received in step S40, and makes a decision as to whether or not this interchangeable lens 100 is one that is compatible with high speed communication. If information related to the CMOS type signal output method and information related to the differential transmission method are included in the specification information, then the body side microcomputer 210 decides that this interchangeable lens 100 is one that is compatible with high speed communication, and reaches an affirmative decision in step S45. However, if information related to the CMOS type signal output method or information related to the differential transmission method is not included in the specification information, then the body side microcomputer 210 reaches a negative decision in step S45. If step S45 reaches an affirmative decision, then the body side microcomputer 210 decides to perform communication by the CMOS type signal output method and moreover by the differential transmission method, in other words to perform communication using the second communication circuits 301 in routine communication, and proceeds to perform step S50.

If a negative decision is reached in step S45, then the body side microcomputer 210 decides to perform communication by the open drain type method and moreover by the single ended method, in other words to perform communication using the first communication circuits 300 in routine communication, and terminates the operation of Fig. 4(b) and starts routine communication operation.

In step S50, the body side microcomputer 210 transmits a communication changeover command to the lens side microcomputer 110 using the first body side communication contact point group 211.

In step S160, the lens side microcomputer 110 receives this communication changeover command using the first lens side communication contact point group 111. Thereafter, the lens side microcomputer 110 proceeds to perform step S170, in which it transmits an intermediate adapter intercept command by using the second lens side communication contact point group 112. Since in this first embodiment no intermediate adapter is connected between the interchangeable lens 100 and the camera body 200, accordingly this intercept command is not received.

Thereafter, the lens side microcomputer 110 proceeds to perform step S180, and transmits a start signal to the camera body 200 using the first lens side communication contact point group 111. And thereafter the lens side microcomputer 110 proceeds to perform step S190, in which it changes over each of the changeover devices 302 of the first lens side communication contact point group 111 and of the second lens side communication contact point group 112, so as to connect the second communication circuits 301 to the various terminals.

In step S60, the body side microcomputer 210 receives the start signal using the first body side communication contact point group 211. And thereafter the body side microcomputer 210 proceeds to perform step S70, and changes over the communication circuits to be connected to the terminals of the first body side communication contact point group 211 and of the second body side communication contact point group 212 to the second communication circuits 301.

Subsequently, the lens side microcomputer 110 and the body side microcomputer 210 perform mutual communication according to the differential transmission method, using the first communication contact point groups 111 and 211 and the second communication contact point groups 112 and 212. Due to this communication according to the differential transmission method, the interchangeable lens 100 and the camera body 200 transmit and receive various types of information at high speed, such as information related to the focal point position of the focusing lens 140 and so on.

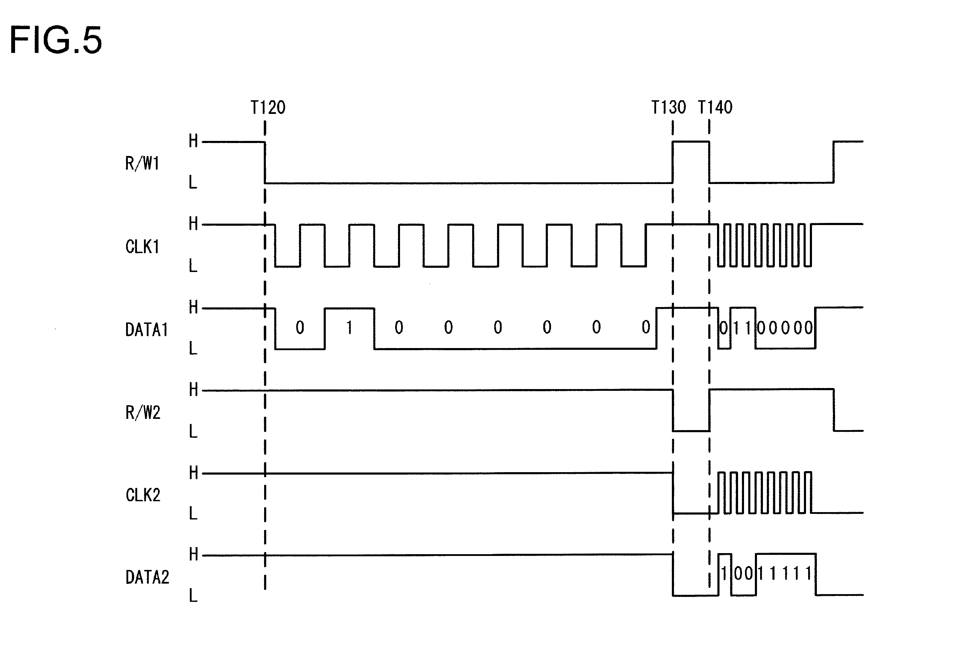

Fig. 5 is an example of a timing chart showing the signal levels at the various terminals of the first lens side communication contact point group 111 and of the second lens side communication contact point group 112 in step S180 and after. In the timing chart shown in Fig. 5, a time point T120, a time point T130, and a time point T140 are shown.

In the interval from the time point T120 to the time point T130, the lens side microcomputer 110 performs step S180 of Fig. 4(b). In order to transmit the start signal to the body side microcomputer 210, using the first communication circuits 300, the lens side microcomputer 110 changes the read/write signal level of the terminal R/W1 to L level. Next, using the first communication circuits 300, the lens side microcomputer 110 outputs the clock signal to the terminal CLK1 and outputs the start signal to the terminal DATA1. In Fig. 5, "01000000" is transmitted as an example of the start signal. It should be understood that, while the start signal is shown as being eight bits in Fig. 5, the bit length of the start signal could be 16 bits or 32 bits, or could be determined as desired.

In the interval from the time point T130 to the time point T140, the lens side microcomputer 110 performs step S190 of Fig. 4(b), while the body side microcomputer 210 performs step S70 of Fig. 4(b). Due to this, both the lens side microcomputer 110 and the body side microcomputer 210 connect the second communication circuits 301 to the terminals of the first lens side communication contact point group 111 and of the second lens side communication contact point group 112.

After the time point T140, the lens side microcomputer 110 and the body side microcomputer 210 perform mutual communication according to the differential transmission method, using the first communication contact point groups 111 and 211 and the second communication contact point groups 112 and 212. In concrete terms, after the time point T140, the inverse signal of the output signal to the terminal R/W1 is outputted to the terminal R/W2, the inverse signal of the output signal to the terminal CLK1 is outputted to the terminal CLK2, and the inverse signal "10011111" of the output signal "01100000" to the terminal DATA1 is outputted to the terminal DATA2.

The clock pulse signal outputted to the terminal CLK1 after the time point T140 (after changeover to the second communication circuits 301 has been performed) has a pulse frequency that is greater than that of the clock pulse signal before the time point T140 (before changeover to the second communication circuits 301 has been performed). It should be understood that while, in Fig. 5, the signal level of H level at each of the terminals is shown as being the same level after the time point T140 as before the time point T140, it would also be acceptable to arrange for the signal level of H level to be lower after the changeover to the second communication circuits 301 has been performed (i.e. subsequent to the time point T140). By doing this, the time period required for rise and fall of the output signals becomes shorter, and accordingly it is possible to anticipate yet further increase of the speed of communication.

### (Second Embodiment)

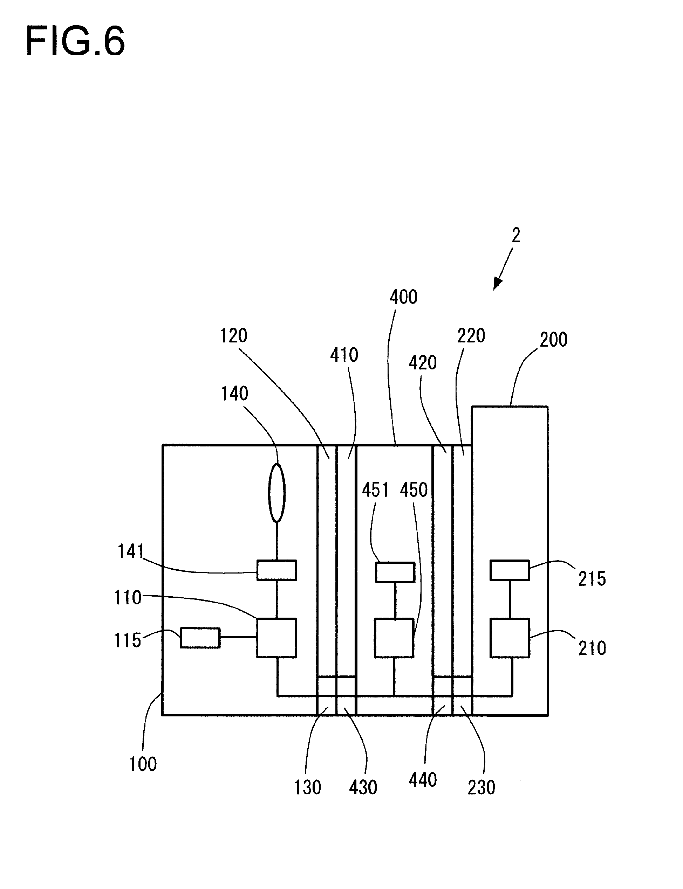

Now a second embodiment of the present invention will be explained. Fig. 6 is a schematic block diagram of a digital camera system that comprises a camera body and an accessory, according to a second embodiment of the present invention. The digital camera system 2 of Fig. 6 comprises an interchangeable lens 100 and a camera body 200, and also comprises an intermediate adapter 400 that is interposed between the interchangeable lens 100 and the camera body 200. The structures of the interchangeable lens 100 and of the camera body 200 are the same as in the first embodiment, and accordingly explanation of these structures will be omitted. It should be understood that the operation for starting high speed communication is different from that in the first embodiment, since the intermediate adapter 400 is interposed between the interchangeable lens 100 and the camera body 200.

The intermediate adapter 400 is one type of accessory, and comprises a front mounting portion 410, a rear mounting portion 420, a front contact point group 430, a rear contact point group 440, an adapter side microcomputer 450, and an adapter storage unit 451. The lens side mounting portion 120 of the interchangeable lens 100 is detachably mounted to the front mounting portion 410. And the body side mounting portion 220 of the camera body 200 is detachably mounted to the rear mounting portion 420.

When the lens side mounting portion 120 is installed to the front mounting portion 410 of the intermediate adapter 400, the front contact point group 430 is electrically connected to the lens side contact point group 130. Moreover, when the body side mounting portion 220 is installed to the rear mounting portion of the intermediate adapter 400, the rear contact point group 440 is electrically connected to the body side contact point group 230. Since electrical connection is established between each terminal of the front contact point group 430 and each terminal of the rear contact point group 440, accordingly each of the terminals of the lens side microcomputer 110 and the corresponding terminal of the body side microcomputer 210 are mutually connected via the intermediate adapter 400.

The adapter storage unit 451 is a non-volatile storage medium such as a flash memory or the like, and correction parameters for the case in which the intermediate adapter 400 has been installed, such as the corrected optical path length and so on are stored therein.

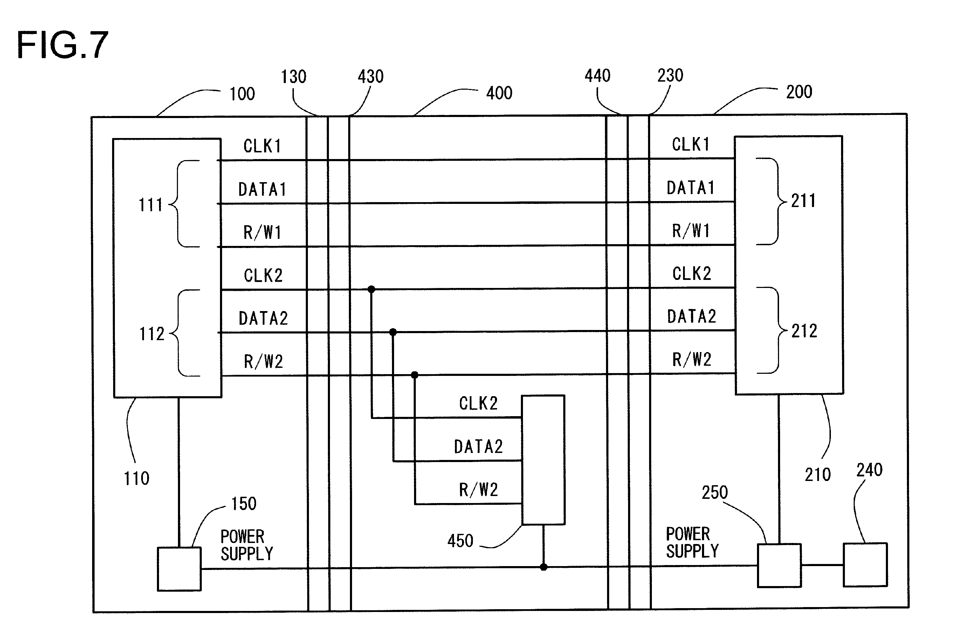

Fig. 7 is a block diagram showing the electrical connections between the lens side microcomputer 110, the body side microcomputer 210, and the adapter side microcomputer 450. Similarly to the case with Fig. 2, the lens side microcomputer 110 comprises a first lens side communication contact point group 111 and a second lens side communication contact point group 112. A terminal CLK2, a terminal DATA2, and a terminal R/W2 for communication with the second lens side communication contact point group 112 are included in the adapter side microcomputer 450.

The terminal CLK2 of the lens side microcomputer 110 is electrically connected to the terminals CLK2 of the body side microcomputer 210 and of the adapter side microcomputer 450. And the terminal DATA2 of the lens side microcomputer 110 is electrically connected to the terminals DATA2 of the body side microcomputer 210 and of the adapter side microcomputer 450. Moreover, the terminal R/W2 of the lens side microcomputer 110 is electrically connected to the terminals R/W2 of the body side microcomputer 210 and of the adapter side microcomputer 450.

The camera body 200 incorporates a battery 240. The output power supplied by this battery 240 is supplied to the entire camera body 200 via the DC/DC converter 250. Moreover, via the body side contact point group 230 and the rear contact point group 440, the output power supplied by the DC/DC converter 250 is supplied not only to the interchangeable lens 100, but also to the intermediate adapter 400.

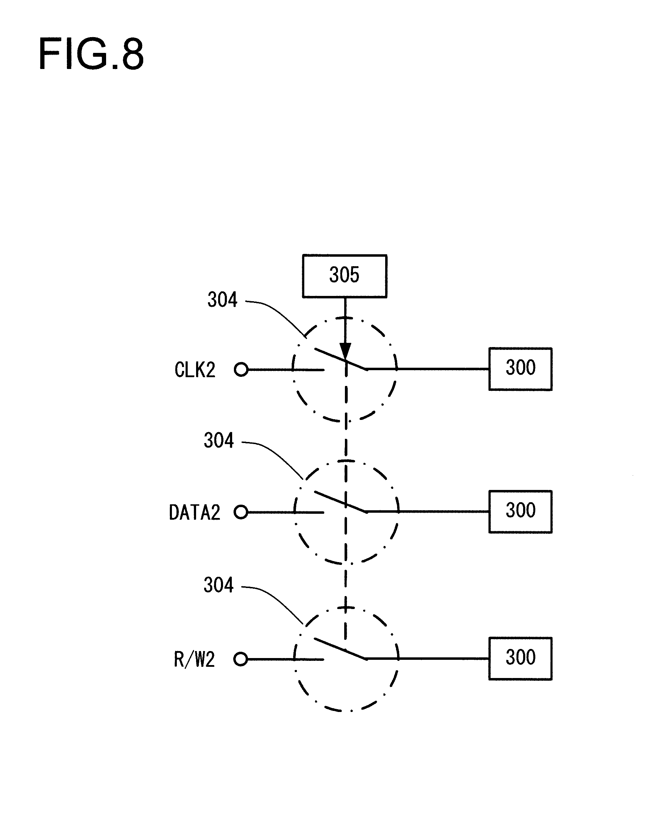

Fig. 8 is a schematic block diagram of a communication control circuit that is connected to the terminals of the adapter side microcomputer 450 (i.e. to the terminal CLK2, to the terminal DATA2, and to the terminal R/W2). The communication control circuit of Fig. 8 is housed internally to the adapter side microcomputer 450.

As shown in Fig. 8, each of the first communication circuits 300 is connected to the corresponding terminal of the adapter side microcomputer 450, via a corresponding switch 304. The opening and closing of all of the switches 304 is performed simultaneously according to a changeover signal outputted from an opening/closing control circuit 305. When the switches 304 are opened, the first communication circuits are intercepted from the corresponding terminals of the adapter side microcomputer 450 (i.e. are disconnected, opened, broken, or put into a Hi-Z state), so that communication with the intermediate adapter 400 is interrupted. At this time, the terminals CLK2 of the lens side microcomputer 110 and of the body side microcomputer 210 are mutually connected together, as are their terminals DATA2 and their terminals R/W2.

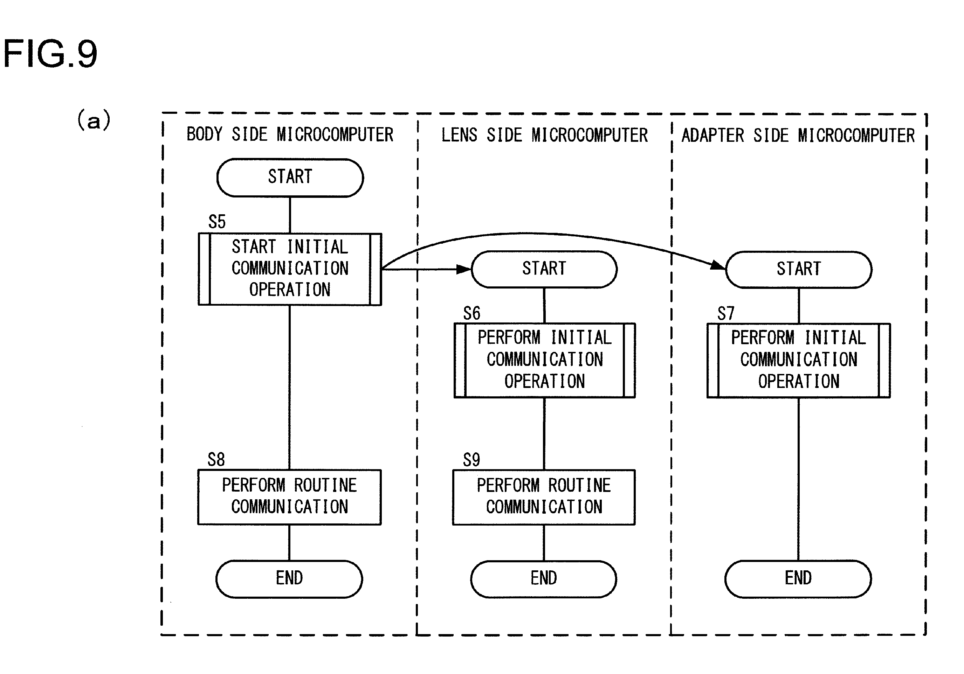

Fig. 9(a) is a flow chart related to communication operation of the digital camera 2. When the power source of the camera body 200 is turned ON, power is supplied to the various sections of the camera body 200, including the body side microcomputer 210. Upon receipt of this power supply, the body side microcomputer 210 proceeds to perform step S5, and starts to perform an initial communication operation that will be described in detail hereinafter.

With this second embodiment, in this process of initial communication operation, the supply of power from the camera body 200 is started, not only to the interchangeable lens 100, but also to the intermediate adapter 400. Upon supply of power, the lens side microcomputer 110 proceeds to perform step S6, and initial communication operation that will be described in detail hereinafter is performed. Moreover, upon supply of power, the adapter side microcomputer 450 proceeds to perform step S7, and executes initial communication operation. When this initial communication operation of step S7 has been completed, the adapter side microcomputer 450 terminates communication operation. In the process of initial communication operation executed in step S5 and step S6, the body side microcomputer 210 and the lens side microcomputer 110 determine the signal output method and the transmission method to be used during routine communication operation. Then in step S8 and step S9 the body side microcomputer 210 and the lens side microcomputer 110 perform routine communication using the signal output method and the transmission method that have been determined during the above process of initial communication operation.

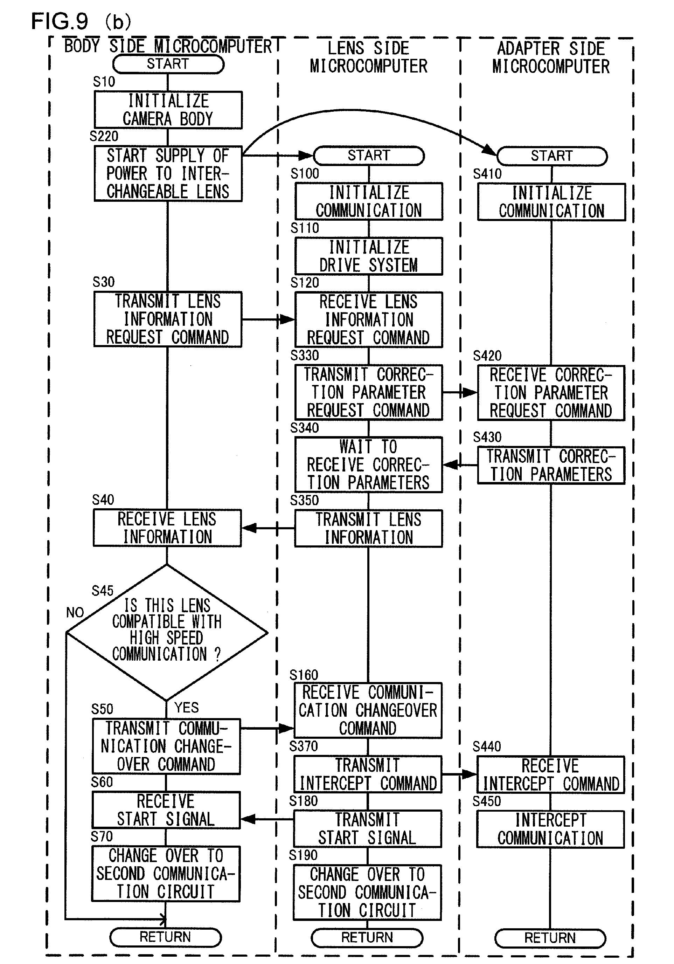

Fig. 9(b) is a flow chart related to the initial communication operation executed in steps S8 and S9 of Fig. 9(a). It should be understood that, to steps in Fig. 9(b) that specify operations similar to those of steps of Fig. 4(b), the same reference symbols are appended, and explanation thereof will be omitted.

In step S220, the body side microcomputer 210 starts supply of power to the interchangeable lens 100 and to the intermediate adapter 400 via the DC/DC converter 250. In step S410, upon receipt of power, the adapter side microcomputer 450 of the intermediate adapter 400 performs initialization of communication. And the adapter side microcomputer 450 closes the switches 304 and connects the first communication circuits 300 to their corresponding terminals.

In step S330, the lens side microcomputer 110 transmits a correction parameter request command using the second lens side communication contact point group 112, in a similar manner to step S130. Thereafter the lens side microcomputer 110 proceeds to perform step S340, and goes into a state of waiting to receive the correction parameters during an interval from after transmission of the correction parameter request command until a predetermined time period has elapsed.

In step S420, the adapter side microcomputer 420 receives this correction parameter request command that was transmitted in step S340. Then in step S430 the adapter side microcomputer 420 transmits the correction parameters that are stored in the adapter side storage unit 451 to the interchangeable lens 100. The lens side microcomputer 110, that is in a state of waiting to receive the correction parameters in step S340, receives the correction parameters transmitted in step S430. Due to this, the lens side microcomputer 110 recognizes that communication with the intermediate adapter 400 has been established using the second communication contact point group 112.

In step S350, after having corrected the lens information stored in the lens side storage unit 115 (including the specification information described above) on the basis of the correction parameters received in step S340, the lens side microcomputer 110 transmits the lens information after correction to the camera body 200 using the first lens side communication contact point group 111.

In step S370, the lens side microcomputer 110 transmits an intercept command for the intermediate adapter using the second lens side communication contact point group 112.

In step S440, the adapter side microcomputer 420 receives this intercept command for the intermediate adapter. Then in step S450 the adapter side microcomputer 420 opens the switches 304 and cuts off the first communication circuits 300 from their terminals.

Since the first communication circuits 300 of the adapter side microcomputer 450 are cut off from the contact points, accordingly, when communication between the lens side microcomputer 110 and the body side microcomputer 210 is started, the intermediate adapter 400 does not operate in an erroneous manner due to the signals for differential transmission.

### (Third Embodiment)

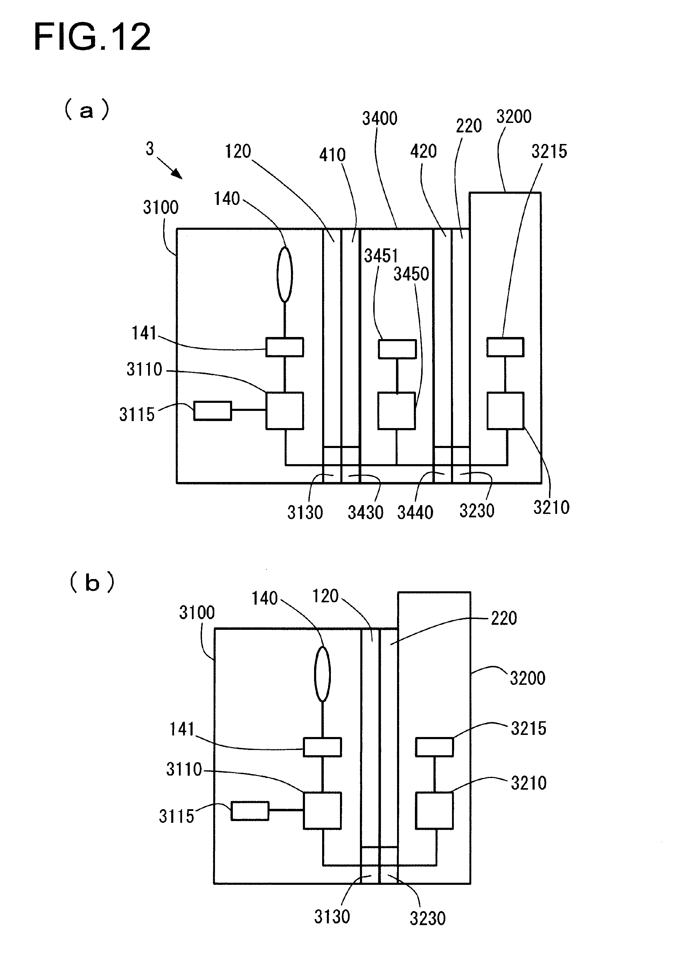

A third embodiment of the present invention will now be explained. Figs. 12(a) and 12(b) are schematic block diagrams of a digital camera system comprising an accessory and a camera body, according to this third embodiment of the present invention. The digital camera system 3 shown in Figs. 12(a) and 12(b) comprises an interchangeable lens 3100 and a camera body 3200, and also comprises an intermediate adapter 3400 between the interchangeable lens 3100 and the camera body 3200.

The interchangeable lens 3100 is one type of accessory, and comprises a lens side microcomputer 3110, a lens side storage unit 3115, a lens side mounting portion 120, and a lens side contact point group 3130. The camera body 3200 comprises a body side microcomputer 3210, a body side storage unit 3215, a body side mounting portion 220, and a body side contact point group 3230. It should be understood that, apart from the structures shown in Figs. 12(a) and 12(b), the interchangeable lens 3100 and the camera body 3200 also comprise a large number of other structures, such as an imaging element and so on. The intermediate adapter 3400 is one type of accessory, and comprises a front mounting portion 410, a rear mounting portion 420, a front contact point group 3430, a rear contact point group 3440, an adapter side microcomputer 3450, and an adapter storage unit 3451.

The lens side mounting portion 120 of the interchangeable lens 3100 is detachably mounted to the front mounting portion 410 of the intermediate adapter 3400. And the body side mounting portion 220 of the camera body 3200 is detachably mounted to the rear mounting portion 420 of the intermediate adapter 3400. In Fig. 12(a), a state is shown in which the front mounting portion 410 of the intermediate adapter 3400 is installed to the lens side mounting portion 120 of the interchangeable lens 3100, and also the rear mounting portion 420 of the intermediate adapter 3400 is installed to the body side mounting portion 220 of the camera body 3200. And, in Fig. 12(b), a state is shown in which the body side mounting portion 220 of the camera body 3200 is installed to the lens side mounting portion 120 of the interchangeable lens 3100.

When the lens side mounting portion 120 is installed to the front mounting portion 410 of the intermediate adapter 3400, the front contact point group 3430 is electrically connected to the lens side contact point group 3130. Furthermore, when the body side mounting portion 220 is installed to the rear mounting portion 420 of the intermediate adapter 3400, the rear contact point group 3440 is electrically connected to the body side contact point group 3230. The terminals of the front contact point group 3430 and the terminals of the rear contact point group 440 are electrically connected together in the interior of the intermediate adapter 3400. Due to this, the lens side contact point group 3130 and the body side contact point group 3230 are electrically connected together via the intermediate adapter 3400.

The lens side microcomputer 3110 and the body side microcomputer 3210 perform mutual communication by using the lens side contact point group 3130 and the body side contact point group 3230. For example, the lens side microcomputer 3110 may transmit to the body side microcomputer 3210 lens information or a signal indicating that camera shake correction processing is being performed, or the like. On the other hand, the body side microcomputer 3210 may transmit to the lens side microcomputer 3110 information related to the focal point position of the focusing lens 140.

The lens side microcomputer 3110 and the body side microcomputer 3210 perform mutual communication while changing over between a plurality of signal output methods and between a plurality of transmission methods. The plurality of signal output methods include the open drain type and the CMOS type, and the plurality of transmission methods include the single ended method and the differential transmission method.

The lens side storage unit 3115 is a non-volatile storage medium such as a flash memory or the like, and stores a control program that is executed by the lens side microcomputer 3110 when controlling the interchangeable lens 3100, lens information and so on. Apart from including various types of information related to the lens such as aperture F value and so on, this lens information also includes specification information related to the signal output methods and the transmission methods that the interchangeable lens 3100 is capable of implementing using the lens side contact point group 3130.

The body side storage unit 3215 is a non-volatile storage medium such as a flash memory or the like, and stores a control program that is executed by the body side microcomputer 3210 when controlling the camera body 200, and so on. Furthermore, information related to the signal output methods and the transmission methods that the camera body 3200 is capable of implementing using the body side contact point group 3230 is included in the body side storage unit 3215.

The adapter storage unit 3451 is a non-volatile storage medium such as a flash memory or the like, and stores correction parameters for the case in which the intermediate adapter 3400 is installed, such as the corrected optical path length and so on.

### (The body side contact point group 3230 and the lens side contact point group 3130)

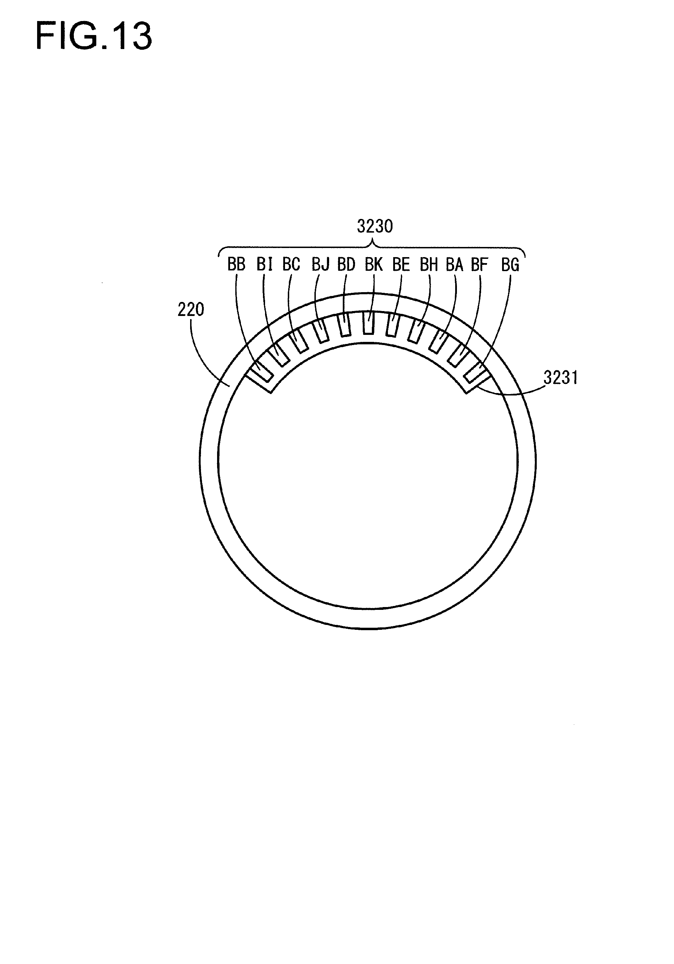

Fig. 13 is a figure giving a schematic plan view of the body side mounting portion 220. A body side supporting portion 3231 is provided in a position neighboring the body side mounting portion 220 of the camera body 3200, and eleven terminals included in the body side contact point group 3230 are held in this body side supporting portion 3231. As shown in Fig. 13, from the left side in the figure, these eleven terminals held in the body side supporting portion 3231 are termed a BB terminal, a BI terminal, a BC terminal, a BJ terminal, a BD terminal, a BK terminal, a BE terminal, a BH terminal, a BA terminal, a BF terminal, and a BG terminal.

The BA terminal, the BF terminal, and the BG terminal are terminals for supply of electrical power, while the BB terminal, the BC terminal, the BD terminal, the BE terminal, the BH terminal, the BI terminal, the BJ terminal, and the BK terminal are terminals for communication. On the basis of the signal output method and the transmission method for communication, the body side microcomputer 3210 changes over the type of signals that are transmitted and received using the terminals for communication and the communication method that is performed using the terminals for communication (for example, one-way communication or half duplex communication). Control performed by the body side microcomputer 3210 related to the type of signals and to the communication method will be described in detail hereinafter.

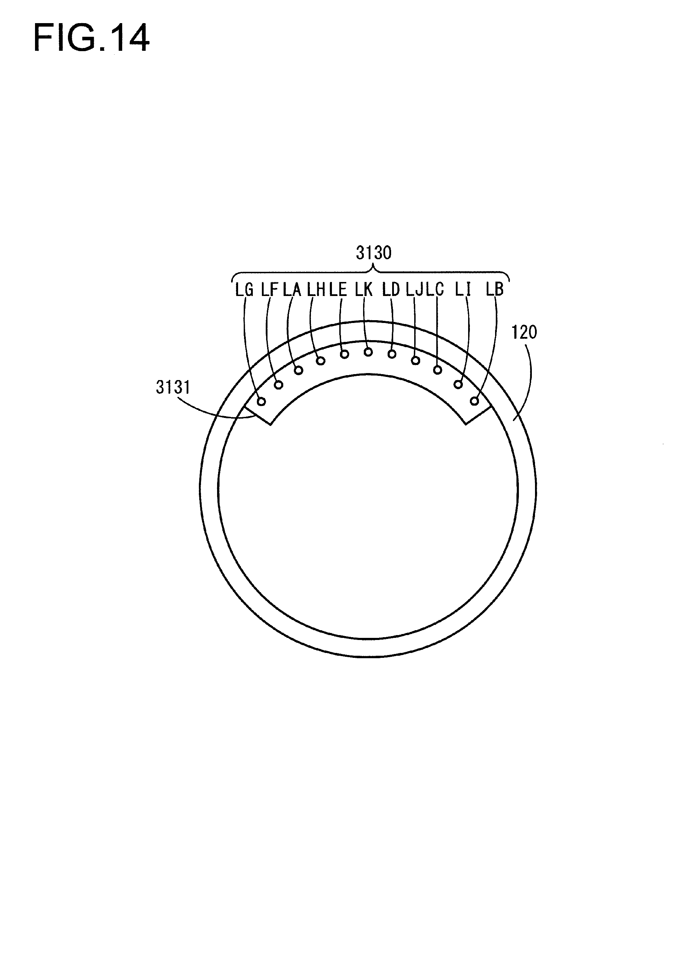

Fig. 14 is a figure giving a schematic plan view of the lens side mounting portion 120. A lens side supporting portion 3131 is provided in a position neighboring the lens side mounting portion 120 of the interchangeable lens 3100, and eleven terminals included in the lens side contact point group 3130 are held in this lens side supporting portion 3131. As shown in Fig. 14, the lens side supporting portion 3131 holds an LB terminal, an LI terminal, an LC terminal, an LJ terminal, an LD terminal, an LK terminal, an LE terminal, an LH terminal, an LA terminal, an LF terminal, and an LG terminal, respectively corresponding to the eleven terminals held in the body side supporting portion 3231.

### (The front contact point group 3430 and the rear contact point group 3440)

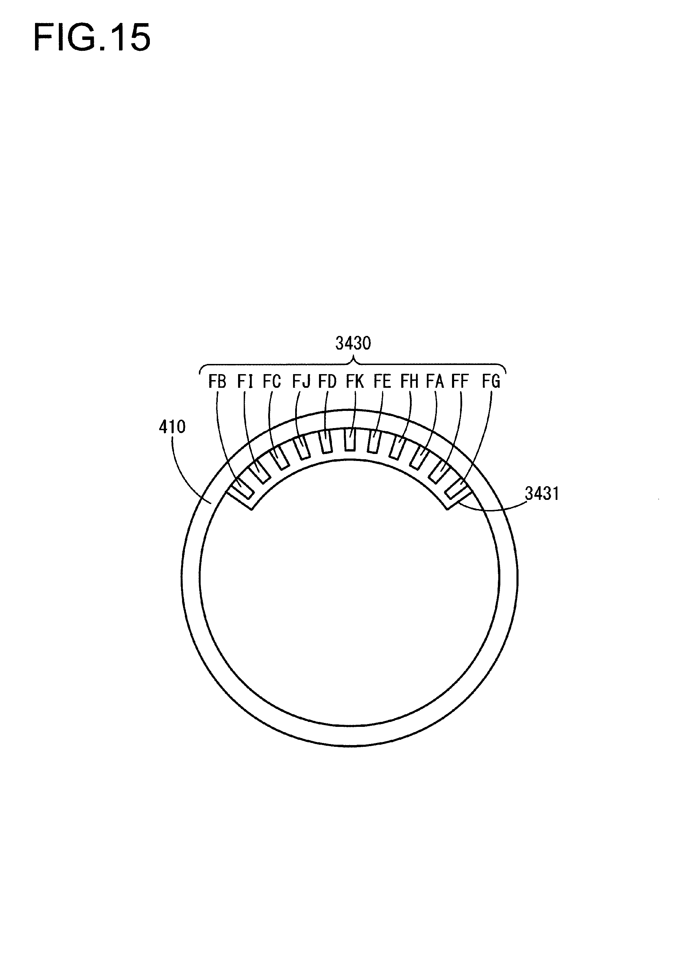

Fig. 15 gives a schematic plan view of the front mounting portion 410 of the intermediate adapter 3400. A front supporting portion 3431 in which the eleven terminals included in the front contact point group 3430 are held is provided in a position neighboring the front mounting portion 410 of the intermediate adapter 3400. As shown in Fig. 15, this front supporting portion 3431 has an FB terminal, an FI terminal, an FC terminal, an FJ terminal, an FD terminal, an FK terminal, an FE terminal, an FH terminal, an FA terminal, an FF terminal, and an FG terminal.

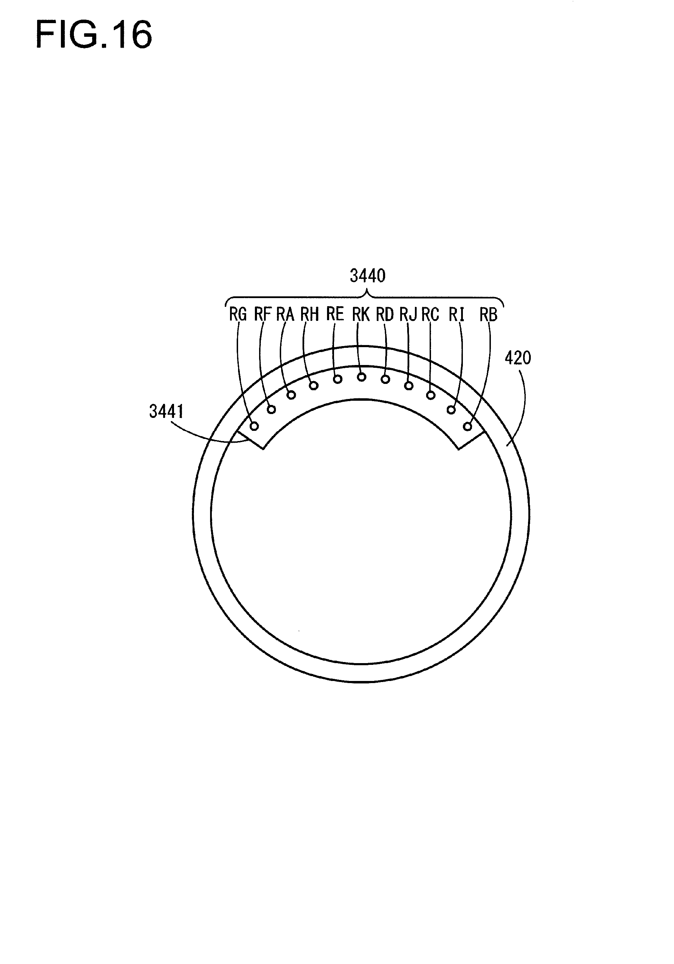

Fig. 16 gives a schematic plan view of the rear mounting portion 420 of the intermediate adapter 3400. A rear supporting portion 3441 in which the eleven terminals included in the rear contact point group 3440 are held is provided in a position neighboring the rear mounting portion 420 of the intermediate adapter 3400. As shown in Fig. 16, this rear supporting portion 3441 has an RB terminal, an RI terminal, an RC terminal, an RJ terminal, an RD terminal, an RK terminal, an RE terminal, an RH terminal, an RA terminal, an RF terminal, and an RG terminal.

### (The electrical connections between the lens side microcomputer 3110 and the body side microcomputer 3210)

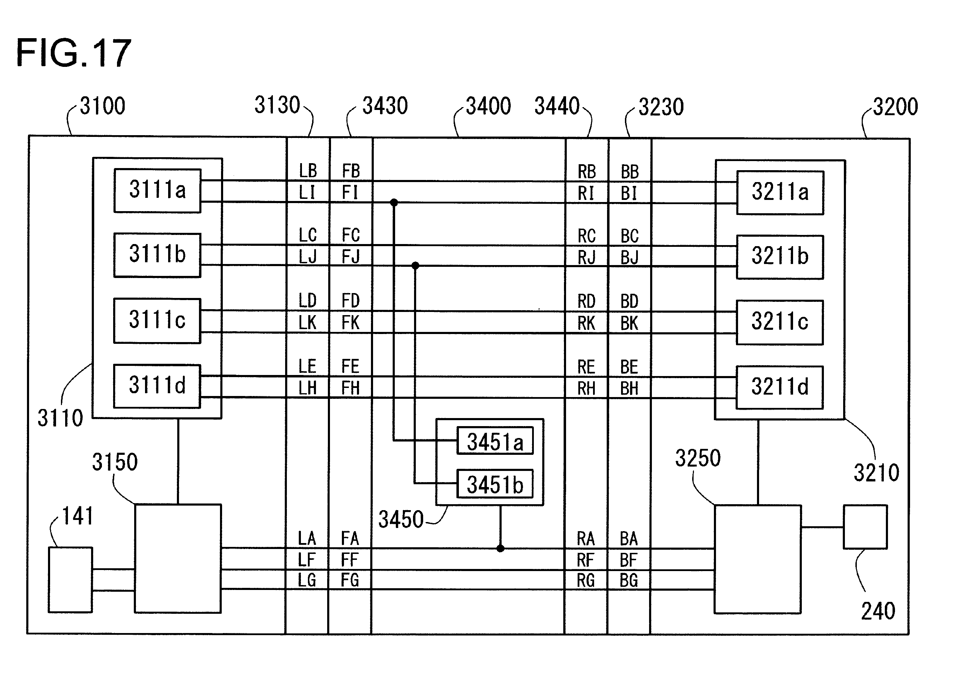

Fig. 17 is a figure showing structures related to communication between the interchangeable lens 3100, the camera body 3200, and the intermediate adapter 3400, and their electrical connections.

Among the structures of the camera body 3200, the body side microcomputer 3210, the body side contact point group 3230, a DC/DC converter 3250, and a battery 240 are shown in Fig. 17. The body side microcomputer 3210 internally houses communication control circuits 3211a through 3211d.

The communication control circuits 3211a through 3211d are circuits for performing communication under the control of the body side microcomputer 3210. The BB terminal and the BI terminal of the body side contact point group 3230 are connected to the communication control circuit 3211a, and this circuit performs communication using the BB terminal and the BI terminal. In a similar manner, the BC terminal and the BJ terminal of the body side contact point group 3230 are connected to the communication control circuit 3211b, the BD terminal and the BK terminal of the body side contact point group 3230 are connected to the communication control circuit 3211c, and the BE terminal and the BH terminal of the body side contact point group 3230 are connected to the communication control circuit 3211d. And each of these communication control circuits 3211b through 3211d performs communication by using the terminals that are connected thereto.

The BA terminal, the BF terminal, and the BG terminal of the body side contact point group 3230 are connected to the DC/DC converter 3250. The DC/DC converter 3250 transforms the output voltage of the battery 240, and generates an input voltage V1 to the microcomputer and so on, and an input voltage V2 to the drive system, such as the focusing lens drive unit 141 and so on.

The input voltage V1 to the microcomputer and so on is supplied to the body side microcomputer 3210 and so on, and also is outputted to the intermediate adapter 3400 and to the interchangeable lens 3100 via the BA terminal at the body side supporting portion 3231.

The input voltage V2 to the drive system is outputted to the intermediate adapter 3400 and to the interchangeable lens 3100 via the BF terminal at the body side supporting portion 3231. And the BG terminal is connected to the DC/DC converter 3250 and serves as a ground terminal that forms a pair with the BF terminal.

In the interchangeable lens 3100, the focusing lens drive unit 141, the lens side microcomputer 3110, the lens side contact point group 3130, and a DC/DC converter 3150 are shown in Fig. 17. The lens side microcomputer 3110 internally houses communication control circuits 3111 a through 3111 d.

The communication control circuits 3111a through 3111 d are circuits for performing communication under the control of the lens side microcomputer 3110. The LB terminal and the LI terminal of the lens side contact point group 3130 are connected to the communication control circuit 3111 a, and this circuit performs communication using the LB terminal and the LI terminal. In a similar manner, the LC terminal and the LJ terminal of the lens side contact point group 3130 are connected to the communication control circuit 3111b, the LD terminal and the LK terminal of the lens side contact point group 3130 are connected to the communication control circuit 3111c, and the LE terminal and the LH terminal of the lens side contact point group 3130 are connected to the communication control circuit 3111d. And each of these communication control circuits 3111b through 3111d performs communication using the terminals that are connected thereto.

The LA terminal, the LF terminal, and the LG terminal of the lens side contact point group 3130 are connected to the DC/DC converter 3150. The DC/DC converter 3150 supplies the input voltage inputted via the LA terminal to the lens side microcomputer 3110. Moreover, the DC/DC converter 3150 supplies the electrical power supplied via the LF terminal and the LG terminal to the drive system, such as the focusing lens drive unit 141 and so on.

In the intermediate adapter 3400, the front contact point group 3430, the rear contact point group 3440, the adapter side microcomputer 3450, and signal control circuits 3451a and 3451b are shown in Fig. 17. The FA terminal of the front contact point group 3430 is connected to the RA terminal of the rear contact point group 3440. In a similar manner, the FB through FK terminals of the front contact point group 3430 are respectively connected to the RB through RK terminals of the rear contact point group 3440. The signal control circuit 3451a is connected between the FI and RI terminals. And the signal control circuit 3451b is connected between the FJ and RJ terminals.

The signal control circuit 3451a performs communication with the lens side microcomputer 3110 via the FI terminal, and the signal control circuit 3451 b performs communication with the lens side microcomputer 3110 via the FJ terminal. The signal output method of the signal control circuit 3451a and the signal control circuit 3451b is the open drain type, and this transmission method is compatible with communication by the single ended method.

### (The communication control circuits 3111 a through 3111 d and the communication control circuits 3211a through 3211d)

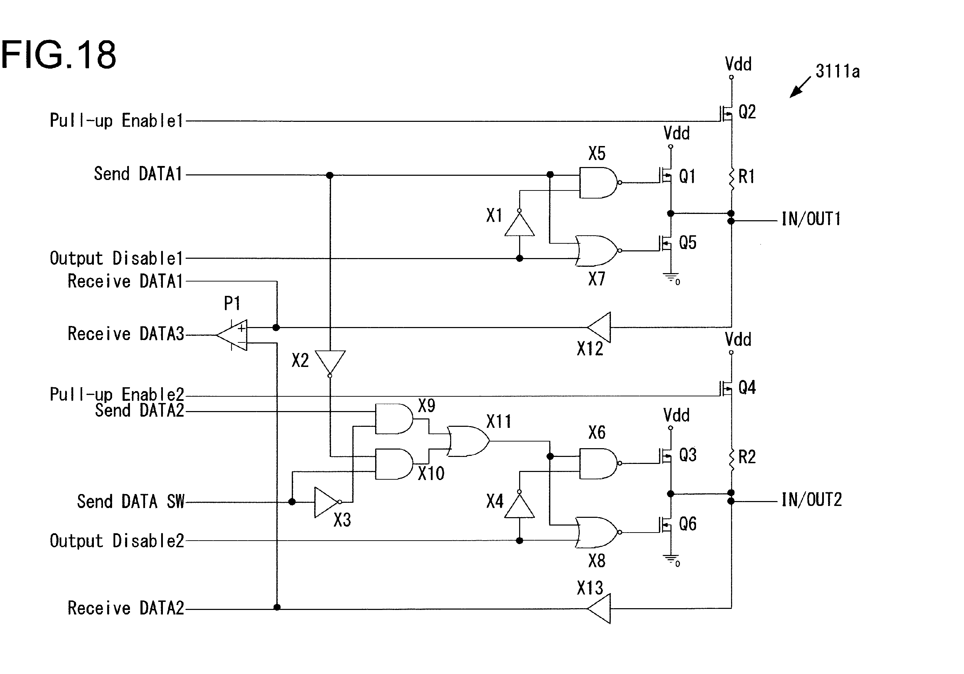

Fig. 18 is an example of a circuit diagram for the communication control circuit 3111a. The communication control circuits 3111 b through 3111 d and the communication control circuits 3211 a through 3211 d also incorporate circuitry similar to that shown in Fig. 18. As shown in Fig. 18, the communication control circuit 3111 a comprises NOT elements X1 through X4, NAND elements X5 and X6, NOR elements X7 and X8, AND elements X9 and X10, an OR element X11, buffer circuits X12 and X13, an operational amplifier P1, p channel type metal oxide semiconductor field effect transistors (MOSFETs) Q1 through Q4, n channel type metal oxide semiconductor field effect transistors (MOSFETs) Q5 and Q6, and resistors R1 and R2. In the following, these metal oxide semiconductor field effect transistors will simply be termed "field effect transistors".

Input parameters termed, respectively, Pull-up Enable1, Pull-up Enable2, Send DATA1, Send DATA2, Output Disable1, Output Disable2, and Send DATA SW are inputted to the communication control circuit 3111a from the lens side microcomputer 3110. Each of these input parameters can assume either the value L level or the value H level. L level is a signal level corresponding to the truth value False (untrue, 0), and may, for example, be a signal voltage of 0.8 V or less. And H level is a signal level corresponding to the truth value True (valid, 1), and may, for example, be a signal voltage of around 0.5 times the power supply voltage Vdd or greater.

It should be understood that one of each of these input parameters is provided for each of the communication control circuits 3111 a through 3111 d, and the lens side microcomputer 3110 is capable of controlling each of the communication control circuits 3111 a through 3111 d individually. In a similar manner, one of each of the input parameters described above is also provided for each of the communication control circuits 3211a through 3211d, and the body side microcomputer 3210 is capable of controlling each of the communication control circuits 3211a through 3211d individually.

The communication control circuit 3111a has a connection terminal IN/OUT1 that is connected to the LB terminal of the lens side contact point group 3130, and a connection terminal IN/OUT2 that is connected to the LI terminal of the lens side contact point group 3130. The connection terminal IN/OUT1 is used as an output terminal when the lens side microcomputer 3110 transmits a signal via the LB terminal, and is also used when the lens side microcomputer 3110 receives a signal via the LB terminal. In a similar manner, the communication control circuits 3111b through 3111d not shown in the drawing also have connection terminals IN/OUT1 and connection terminals IN/OUT2 that are connected to terminals of the lens side contact point group 3130. For example, in the case of the communication control circuit 3111b, the connection terminal IN/OUT1 is connected to the LC terminal of the lens side contact point group 3130, and the connection terminal IN/OUT2 is connected to the LJ terminal of the lens side contact point group 3130.

It should be understood that, in a similar manner, the communication control circuit 3211a not shown in the drawing also has a connection terminal IN/OUT1 and a connection terminal IN/OUT2, with the connection terminal IN/OUT1 being connected to the BB terminal of the body side contact point group 3230, while the connection terminal IN/OUT2 is connected to the BI terminal of the body side contact point group 3230. In a similar manner, the communication control circuits 3211 b through 3211 d not shown in the drawing also have connection terminals IN/OUT1 and connection terminals IN/OUT2 that, as shown in Fig. 17, are connected to terminals of the body side contact point group 3230.

Receive DATA1, Receive DATA2, and Receive DATA3 are signals that the communication control circuit 3111 a receives via the connection terminal IN/OUT1 and the connection terminal IN/OUT2. It should be understood that, in a similar manner, the communication control circuits 3111 b through 3111 d and the communication control circuits 3211a through 3211d also have Receive DATA1, Receive DATA2, and Receive DATA3.

The input parameter Pull-up Enable1 is inputted to the gate of the field effect transistor Q3. When the input parameter Pull-up Enable1 is L level, the field effect transistor Q3 goes into the ON state; and, when the input parameter Pull-up Enable1 is H level, the field effect transistor Q3 goes into the OFF state

The input parameter Send DATA1 is inputted to the NOT element X2, to the NAND element X5, and to the NOR element X7.

The input parameter Output Disable1 is inputted to the NOT element X1 and to the NOR element X7.

The input parameter Pull-up Enable2 is inputted to the gate of the field effect transistor Q6. Thus, when the input parameter Pull-up Enable2 is L level, the field effect transistor Q6 goes into the ON state, while, when the input parameter Pull-up Enable2 is H level, the field effect transistor Q6 goes into the OFF state.

The input parameter Send DATA2 is inputted to the AND element X9.

The input parameter Output Disable2 is inputted to the NOT element X4 and to the NOR element X8.

The input parameter Send DATA SW is inputted to the NOT element X3 and to the AND element X10. This input parameter Send DATA SW is set to H level when the signal control circuit 3111 a starts signal output according to the differential transmission method.

The NOT element X1 outputs the inverted (logic negated) value of the input parameter Output Disable1 to the NAND element X5.

The NOT element X2 outputs the inverted (logic negated) value of the input parameter Send DATA1 to the AND element X10.

The NOT element X3 outputs the inverted (logic negated) value of the input parameter Send DATA SW to the AND element X9.

The NOT element X4 outputs the inverted (logic negated) value of the input parameter Output Disable2 to the NAND element X6.

The NAND element X5 receives input of the input parameter Send DATA1 and of the result of calculation by the NOT element X2, and calculates their negative logical product. The result of this calculation is outputted to the gate of the field effect transistor Q1.

The NAND element X6 receives input of the result of logical sum calculation by the OR element X11 and of the result of logic negation calculation by the NOT element X4, and calculates their negative logical product. The result of this calculation is outputted to the gate of the field effect transistor Q4.

The NOR element X7 receives input of the input parameter Send DATA1 and of the input parameter Output Disable 1, and calculates their negative logical sum. The result of this calculation is outputted to the field effect transistor Q2.

The NOR element X8 receives input of the result of logical sum calculation by the OR element X11 and of the input parameter Output Disable2, and calculates their negative logical sum. The result of this calculation is outputted to the field effect transistor Q5.

The AND element X9 receives input of the input parameter Send DATA2 and of the result of logic negation calculation by the NOT element X3, and calculates their logical product. The result of this calculation is outputted to the OR element X11.

The AND element X10 receives input of the input parameter Send DATA SW and of the result of logic negation calculation by the NOT element X2, and calculates their logical product. The result of this calculation is outputted to the OR element X11.

The OR element X11 receives input of the result of calculation by the AND element X9 and of the result of calculation by the AND element X10, and calculates their logical sum. The result of this calculation is outputted to the NAND element X6 and to the NOR element X8.

The buffer circuit X12 outputs data inputted via the connection terminal IN/OUT1 to Receive DATA1, and also inputs it to the non-inverting input (+) of the operational amplifier P1.

The buffer circuit X13 outputs data inputted via the connection terminal IN/OUT2 to Receive DATA2, and also inputs it to the inverting input (-) of the operational amplifier P1.

The drain of the field effect transistor Q1 is connected to the power supply voltage Vdd, while its source is connected to the connection terminal IN/OUT1. The result of negative logical multiplication (NAND operation) from the NAND element X5 is inputted to the gate of the field effect transistor Q1, and the field effect transistor Q1 performs switching operation between the power supply voltage Vdd and the connection terminal IN/OUT1.

The drain of the field effect transistor Q2 is connected to the power supply voltage Vdd, while its source is connected to the connection terminal IN/OUT1 via the resistor R1. The input parameter Pull-up Enable1 is inputted to the gate of the field effect transistor Q2, and the field effect transistor Q2 performs switching operation between the power supply voltage Vdd and the connection terminal IN/OUT1. When the field effect transistor Q2 is in the ON state, the connection terminal IN/OUT1 is pulled up. At this time, the resistor R1 is employed as a pull-up resistor.

The drain of the field effect transistor Q3 is connected to the power supply voltage Vdd, while its source is connected to the connection terminal IN/OUT2. The result of negative logical multiplication calculation (NAND operation) from the NAND element X6 is inputted to the gate of the field effect transistor Q3, and the field effect transistor Q3 performs switching operation between the power supply voltage Vdd and the connection terminal IN/OUT2.

The drain of the field effect transistor Q4 is connected to the power supply voltage Vdd, while its source is connected to the connection terminal IN/OUT2 via the resistor R2. The input parameter Pull-up Enable2 is inputted to the gate of the field effect transistor Q4, and the field effect transistor Q4 performs switching operation between the power supply voltage Vdd and the connection terminal IN/OUT2. When the field effect transistor Q4 is in the ON state, the connection terminal IN/OUT2 is pulled up. At this time, the resistor R2 is employed as a pull-up resistor.

The drain of the field effect transistor Q5 is connected to the connection terminal IN/OUT2, while its source is grounded. And the result of negative logical sum calculation (NOR operation) from the NOR element X7 is inputted to the gate of the field effect transistor Q5. When the field effect transistor Q5 is in the ON state, the connection terminal IN/OUT1 is pulled down via the field effect transistor Q5.

The drain of the field effect transistor Q6 is connected to the connection terminal IN/OUT2, while its source is grounded. And the result of negative logical sum calculation (NOR operation) from the NOR element X8 is inputted to the gate of the field effect transistor Q6. When the field effect transistor Q6 is in the ON state, the connection terminal IN/OUT2 is pulled down via the field effect transistor Q6.

The resistor R1 is set so that, if the field effect transistor Q2 is in the ON state, when the field effect transistor Q5 is in the OFF state, the potential at the connection terminal IN/OUT1 becomes H level, while, when the field effect transistor Q5 is in the ON state, the potential at the connection terminal IN/OUT1 becomes L level.

The resistor R2 is set so that, if the field effect transistor Q4 is in the ON state, when the field effect transistor Q6 is in the OFF state, the potential at the connection terminal IN/OUT2 becomes H level, while, when the field effect transistor Q6 is in the ON state, the potential at the connection terminal IN/OUT2 becomes L level.

Moreover, the operational amplifier P1 is used as an amplifier that is disposed at the reception end in differential transmission, and the output terminal of the buffer circuit X12 is connected to its non-inverting input, while the output terminal of the buffer circuit X13 is connected to its inverting input. The operational amplifier P1 outputs the difference obtained by subtracting the inverting input from the non-inverting input as the signal Receive DATA3 transmitted by differential transmission.

(Communication control by the communication control circuits 3111 a through 3111d and the communication control circuits 3211a through 3211d)

The lens side microcomputer 3110 and the body side microcomputer 3210 perform communication in which the signal output method and the transmission method are combined, according to the following Communication Patterns (1) through (3).
Communication Pattern (1): open drain type, single ended method.
Communication Pattern (2): CMOS type, single ended method.
Communication Pattern (3): CMOS type, differential transmission method.

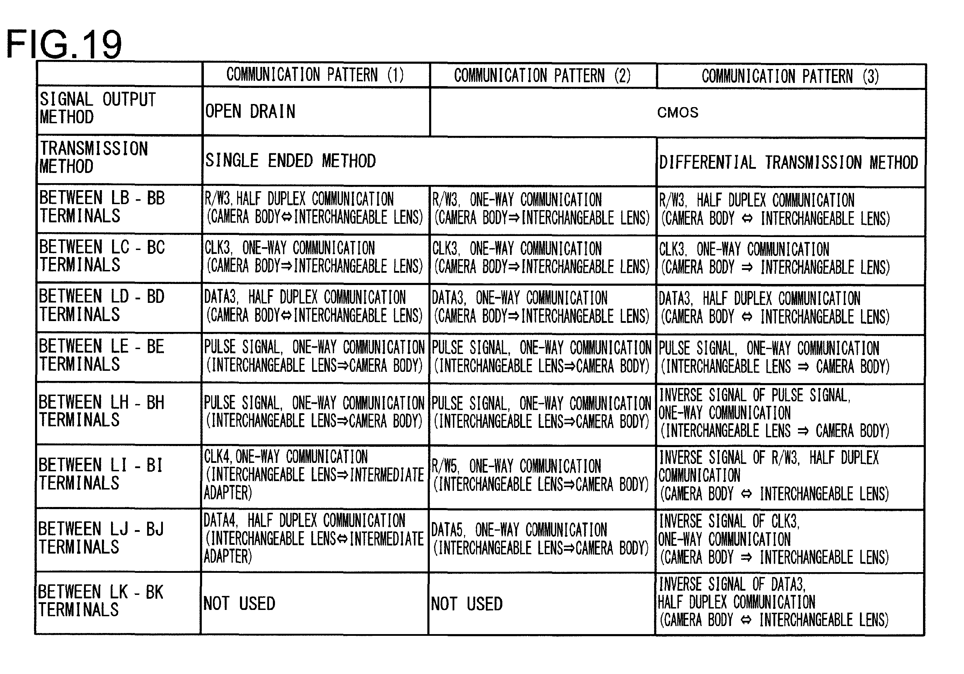

In Fig. 19, transmission and reception of signals performed upon the transmission lines between the various terminals for communication are shown for each of Communication Patterns (1) through (3). First, Communication Pattern (1) will be explained.

On the transmission line established between the LB terminal of the lens side contact point group 3130 and the BB terminal of the body side contact point group 3230 (i.e. between the LB and BB terminals), half duplex communication is performed, in which the read/write signal R/W3 is transmitted and received between the lens side microcomputer 3110 and the body side microcomputer 3210.

On the transmission line established between the LC terminal of the lens side contact point group 3130 and the BC terminal of the body side contact point group 3230 (i.e. between the LC and BC terminals), one-way communication is performed, in which a clock pulse signal CLK3 is transmitted from the body side microcomputer 3210 to the lens side microcomputer 3110.

On the transmission line established between the LD terminal of the lens side contact point group 3130 and the BD terminal of the body side contact point group 3230 (i.e. between the LD and BD terminals), half duplex communication is performed, in which a data signal DATA3 is transmitted and received between the lens side microcomputer 3110 and the body side microcomputer 3210. Commands of various types, responses to those commands, and lens information and so on are included in this data signal DATA3.

When the lens side microcomputer 3110 outputs the data signal DATA3, the data signal DATA3 is outputted between the LD and BD terminals after a read/write signal R/W3 at L level is transmitted between the LB and the BB terminals. At this time, the body side microcomputer 3210 receives this data signal DATA3.

And, when the body side microcomputer 3110 outputs the data signal DATA3, the data signal DATA3 is outputted between the LD and BD terminals after a read/write signal R/W3 at H level is transmitted between the LB and the BB terminals. At this time, the lens side microcomputer 3110 receives this data signal DATA3.

The data signal DATA3 that is transmitted and received between the LD and BD terminals is synchronized with the clock pulse signal CLK3.

On the transmission line established between the LE terminal of the lens side contact point group 3130 and the BE terminal of the body side contact point group 3230 (i.e. between the LE and BE terminals), a pulse signal showing the state of the focusing lens 140 is outputted in real time from the LE terminal to the BE terminal. And, on the transmission line established between the LH terminal of the lens side contact point group 3130 and the BH terminal of the body side contact point group 3230 (i.e. between the LH and BH terminals) as well, the same is true as for between the LE and BE terminals.

In Communication Pattern (1), the lens side microcomputer 3110 uses the LI terminal and the LJ terminal for communication with the adapter side microcomputer 3450. The lens side microcomputer 3110 transmits a clock pulse signal CLK4 from the LI terminal of the lens side contact point group 3130 to the intermediate adapter 3430 by one-way communication. Moreover, via the LJ terminal of the lens side contact point group 3130, the lens side microcomputer 3110 performs half duplex communication with the intermediate adapter 3430 to transmit and receive a data signal DATA4.

In Communication Pattern (1), the lens side microcomputer 3110 and the body side microcomputer 3210 do not perform transmission and reception of signals between the LK terminal of the lens side contact point group 3130 and the BK terminal of the body side contact point group 3230 (i.e. between the LK and BK terminals).

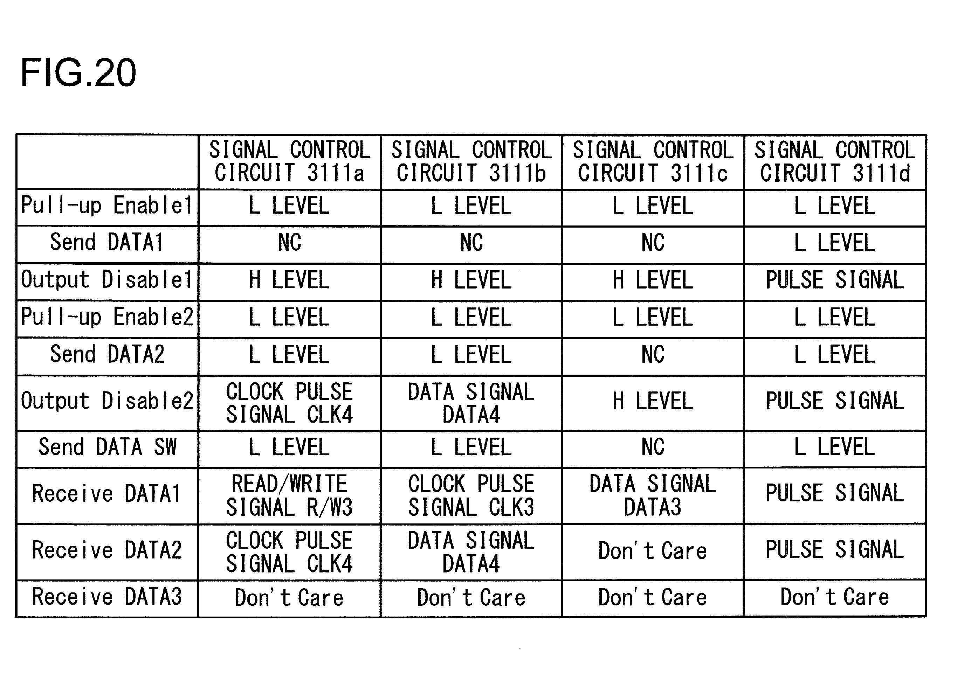

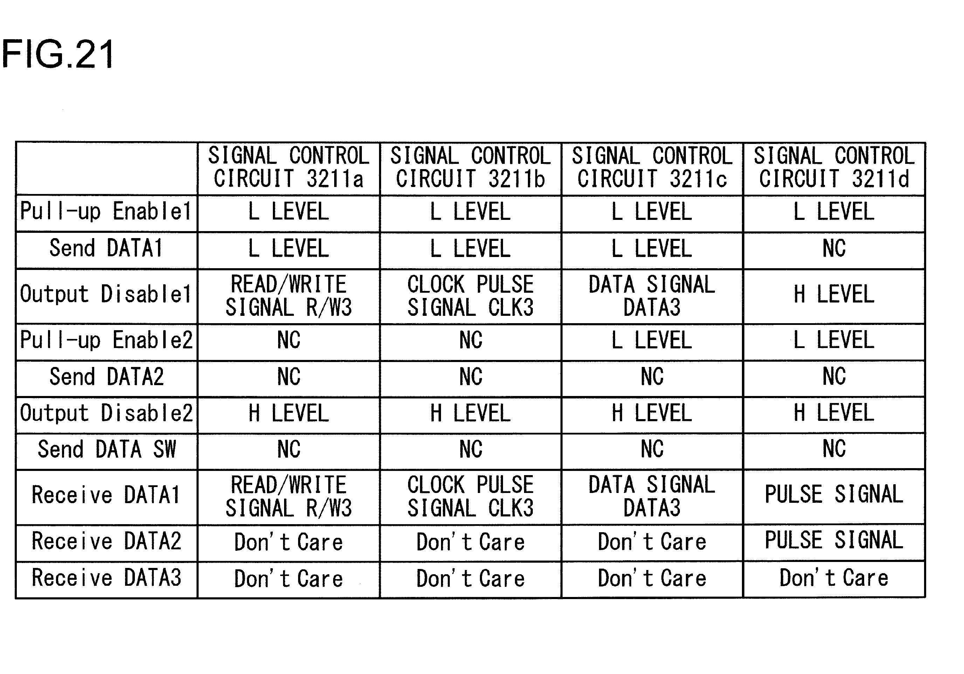

The control performed by the lens side microcomputer 3110 and the body side microcomputer 3210 when communication according to Communication Pattern (1) is performed will now be explained with reference to Figs. 18, 20, 21, and 22. The settings for the signal control circuits 3111 a through 3111d when communication according to Communication Pattern (1) is performed are shown in Fig. 20. And the settings for the signal control circuits 3211a through 3211d when communication according to Communication Pattern (1) is performed are shown in Fig. 21. It should be understood that, in the examples of control shown in Fig. 20 and Fig. 21, it is supposed that the body side microcomputer 3210 is the transmission side for half duplex communication between the lens side microcomputer 3110 and the body side microcomputer 3210. Moreover, it is supposed that the lens side microcomputer 3110 is the transmission side for half duplex communication between the lens side microcomputer 3110 and the adapter side microcomputer 3450.

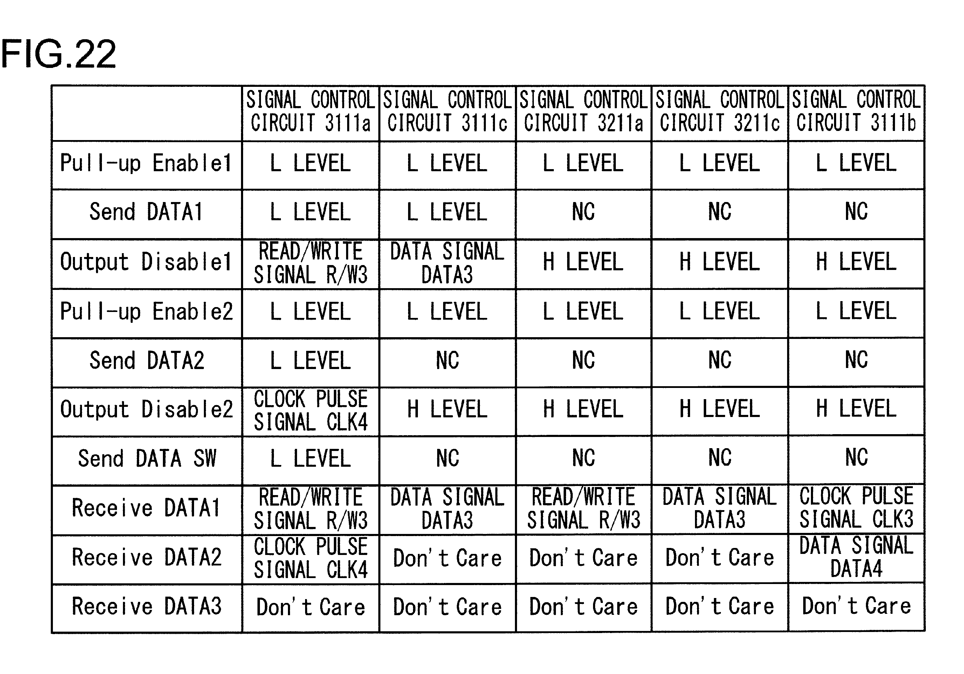

The settings are shown in Fig. 22 of the signal control circuits 3111 a and 3111c of the lens side microcomputer 3110 for the case of half duplex communication between the lens side microcomputer 3110 and the body side microcomputer 3210 when the lens side microcomputer 3110 is the transmission side. Moreover, the settings are shown in Fig. 22 of the signal control circuits 3211 a and 3211c of the body side microcomputer 3210 for this case of half duplex communication between the lens side microcomputer 3110 and the body side microcomputer 3210 when the lens side microcomputer 3110 is the transmission side. Yet further, the settings are also shown in Fig. 22 of the signal control circuit 3111 b of the lens side microcomputer 3110 for the case of half duplex communication between the lens side microcomputer 3110 and the adapter side microcomputer 3450 when the lens side microcomputer 3110 is the reception side.

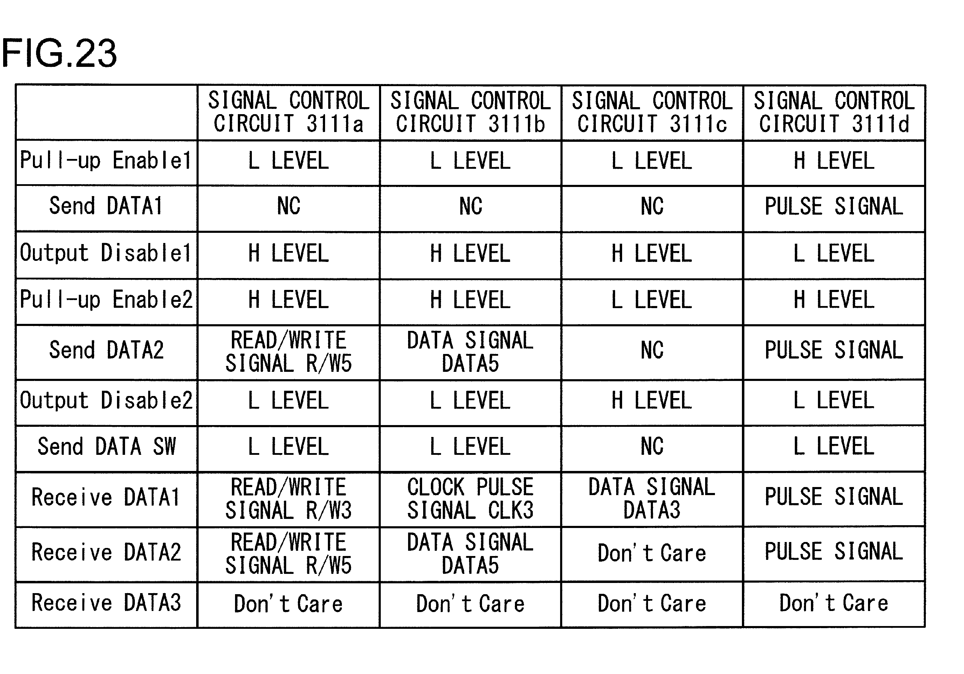

It should be understood that the term "NC" shown in Figs. 20, 21, and 22 is an abbreviation of "No Care", and indicates that it is acceptable for the input signal to be either L level or H level. Moreover, the term "Don't Care" indicates that, among the output signals to the microcomputer, this is an output signal that does not exercise any influence upon the operation of the microcomputer. These definitions also are the same for Fig. 23 and subsequent figures.

As shown in Fig. 20, for each of the signal control circuits 3111 a through 3111 d, the lens side microcomputer 3110 sets the input parameter Pull-up Enable 1 to L level. Due to this, the field effect transistor Q2 shown in Fig. 18 goes into the ON state, and the connection terminal IN/OUT1 is pulled up.

And, for each of the signal control circuits 3111a through 3111 c, the lens side microcomputer 3110 sets the input parameter Output Disable1 to H level. Due to this, in each of the signal control circuits 3111 a through 3111c, an output signal at L level is outputted from the NOR element X7 to the gate of the field effect transistor Q5, so that the field effect transistor Q5 goes into the OFF state.

Furthermore, in each of the signal control circuits 3111a through 3111c, the output of the NOT element X1 goes to L level, and an output signal at H level is outputted from the NAND element X5 to the gate of the field effect transistor Q1, so that the field effect transistor Q1 goes into the OFF state.

In other words, for each of the signal control circuits 3111a through 3111c, the lens side microcomputer 3110 establishes settings so that both of the field effect transistors Q1 and Q5 go into the OFF state.

The lens side microcomputer 3110 uses the connection terminal IN/OUT1 of each of these signal control circuits 3111a through 3111c as a terminal for reception. And, when the potential at the connection terminals IN/OUT1 of the signal control circuits 3111a through 3111c goes to H level, the output of the buffer circuit X12 of the signal control circuit 3111a through 3111c goes to H level, and the lens side microcomputer 3110 receives an H level signal as Receive DATA1. Moreover, when the potential at the connection terminal IN/OUT1 of each of the signal control circuits 3111 a through 3111c goes to L level, the output of the buffer circuit X12 goes to L level, and the lens side microcomputer 3110 receives an L level signal as Receive DATA1. The lens side microcomputer 3110 receives the read/write signal R/W3, the clock pulse signal CLK3, and the data signal DATA3 as Receive DATA1 from the signal control circuits 3111a through 3111c.

On the other hand, for the signal control circuit 3111 d, the lens side microcomputer 3110 sets the input parameter Send DATA1 to L level. Due to this, in the signal control circuit 3111 d, an output signal at H level is outputted from the NAND element X5 to the gate of the field effect transistor Q1, so that the field effect transistor Q1 goes into the OFF state.

And the lens side microcomputer 3110 outputs a pulse signal specifying the state of the focusing lens 140 to the signal control circuit 3111d as the input parameter Output Disable 1. And, in the signal control circuit 3111d, this pulse signal and the signal at L level inputted as the input parameter Send DATA1 are received as inputs by the NOR element X7, and calculation of their negative logical sum is performed. As a result, in the signal control circuit 3111b, the inverse signal of the pulse signal is outputted from the NOR element X7 to the gate of the field effect transistor Q5.

If the input parameter Output Disable 1, in other words the pulse signal, is at H level, then the field effect transistor Q5 of the signal control circuit 3111d goes into the OFF state. In this case, due to the connection terminal IN/OUT1 of the signal control circuit 3111d being pulled up, the signal level of this connection terminal IN/OUT1 becomes H level, the same as the pulse signal. Furthermore, the output of the buffer circuit X12 of the signal control circuit 3111 d also becomes H level, and the lens side microcomputer 3110 receives a signal at H level from the signal control circuit 3111 d as Receiving DATA1.

If the input parameter Output Disable 1, in other words the pulse signal, is at L level, then the field effect transistor Q5 of the signal control circuit 3111d goes into the ON state. In this case, due to the connection terminal IN/OUT1 of the signal control circuit 3111 d being pulled down, the signal level of this connection terminal IN/OUT 1 becomes L level, the same as the pulse signal. Furthermore, the output of the buffer circuit X12 of the signal control circuit 3111d also becomes L level, and the lens side microcomputer 3110 receives a signal at L level from the signal control circuit 3111 d as Receiving DATA1.

To put this in another manner, the lens side microcomputer 3110 sets the input parameters Pull-up Enable1 and Send DATA1 for the signal control circuit 3111d to L level, so that signal output of the open drain type is performed toward the connection terminal IN/OUT1 of the signal control circuit 3111d. And the lens side microcomputer 3110 inputs a pulse signal to the signal control circuit 3111 d as the input parameter Output Disable 1, and outputs a pulse signal from the connection terminal IN/OUT1 to the LE terminal by the signal output method of the open drain type. This pulse signal is transmitted to the body side microcomputer 3210 via the transmission line between the LE and BE terminals, and also is re-inputted to the lens side microcomputer 3110 via the buffer circuit X12 of the signal control circuit 3111d.

For the signal control circuits 3111a through 3111 d, the lens side microcomputer 3110 sets the input parameter Pull-up Enable2 to L level. Due to this, the field effect transistor Q4 internal to each of the signal control circuits 3111 a through 3111d goes into the ON state, and the connection terminal IN/OUT2 is pulled up.

For each of the signal control circuits 3111a, 3111b, and 3111d, the lens side microcomputer 3110 sets both of the input parameters Send DATA2 and Send DATA SW to L level. Due to this, in each of the signal control circuits 3111 a, 3111b, and 3111d, the outputs of both of the AND elements X9 and X10 go to L level, so that the output of the OR element X11 goes to L level. And, in each of the signal control circuits 3111a, 3111b, and 3111 d, an output signal at H level is outputted from the NAND element X6 to the gate of the field effect transistor Q3, so that the field effect transistor Q3 goes into the OFF state.

Moreover, for the signal control circuits 3111a, 3111b, and 3111d, the lens side microcomputer 3110 outputs, as the input parameter Output Disable2, the clock pulse signal CLK4, the data signal DATA4, and a pulse signal, respectively. In each of the signal control circuits 3111 a, 3111 b, and 3111 d, the NOR element X8 receives as inputs the signal at L level inputted from the OR element X11 and the signal outputted as the input parameter Output Disable2, and performs calculation of their negative logical sum. As a result, in each of the signal control circuits 3111 a, 3111b, and 3111 d, the inverse signal of the output signal that was inputted as the input parameter Output Disable2 is outputted from the NOR element X8 to the gate of the field effect transistor Q6.

In the signal control circuits 3111 a, 3111 b, and 3111 d, when the signal that is outputted as the input parameter Output Disable2 is H level, the field effect transistor Q6 is in the OFF state. In this case, due to each of the connection terminals IN/OUT2 being pulled up, the signal level at each of the connection terminals IN/OUT2 becomes H level, and becomes the same level as the signal outputted as the input parameter Output Disable2. Furthermore, the output of the buffer circuit X13 of each of the signal control circuits 3111 a, 3111 b, and 3111 d also becomes H level, and the lens side microcomputer 3110 receives a signal at H level as Receiving DATA2 from each of the signal control circuits 3111a, 3111b, and 3111d.

And, in the signal control circuits 3111a, 3111b, and 3111d, when the signal that is outputted as the input parameter Output Disable2 is L level, the field effect transistor Q6 is in the ON state. In this case, due to each of the connection terminals IN/OUT2 being pulled down, the signal level at each of the connection terminals IN/OUT2 becomes L level, and becomes the same level as the signal outputted as the input parameter Output Disable2. Furthermore, the output of the buffer circuit X13 of each of the signal control circuits 3111 a, 3111b, and 3111d also becomes L level, and the lens side microcomputer 3110 receives a signal at L level as Receiving DATA2 from each of the signal control circuits 3111a, 3111b, and 3111d.

To put it in another manner, by setting each of the input parameters Pull-up Enable2, Send DATA2, and Send DATA SW for the signal control circuits 3111a, 3111b, and 3111d to L level, the lens side microcomputer 3110 sets the signal control circuits 3111 a, 3111b, and 3111 d so that signal output of the open drain type is performed toward each of the connection terminals IN/OUT2. And the lens side microcomputer 3110 inputs the clock pulse signal CLK4, the data signal DATA4, and a pulse signal to the signal control circuits 3111 a, 3111 b, and 3111 d respectively as the input parameter Output Disable2, and outputs those signals from the connection terminals IN/OUT2 to the LI terminal, the LJ terminal, and the LH terminal respectively by signal output according to the open drain method. The clock pulse signal CLK4 and the data signal DATA4 are transmitted to the adapter side microcomputer 3450 via the LI terminal and the LJ terminal. And the pulse signal is transmitted to the body side microcomputer 3210 via the transmission line between the LH and BH terminals. Moreover, the clock pulse signal CLK4, the data signal DATA4, and the pulse signal are re-inputted to the lens side microcomputer 3110 via the buffer circuits X13 of the signal control circuits 3111 a, 3111 b, and 3111d.

The lens side microcomputer 3110 sets the input parameter Output Disable2 for the signal control circuit 3111 c to H level. Due to this, in the signal control circuit 3111 c, an output signal at L level is outputted from the NOR element X8 to the gate of the field effect transistor Q6, so that the field effect transistor Q6 goes into the OFF state.

Moreover, in the signal control circuit 3111c, the output of the NOT element X4 goes to L level, and an output signal at H level is outputted from the NAND element X6 to the gate of the field effect transistor Q3, so that the field effect transistor Q3 goes into the OFF state.

In other words, the lens side microcomputer 3110 sets the signal control circuit 3111c so that both the field effect transistors Q6 and Q3 go into the OFF state. As a result, signal output of the open drain type is not performed from the signal control circuit 3111 c.

As shown in Fig. 21, the body side microcomputer 3210 sets the input parameter Pull-up Enable1 for each of the signal control circuits 3211a through 3211d to L level. Due to this, the field effect transistor Q2 internal to each of the signal control circuits 3211a through 3211d goes into the ON state, and the connection terminal IN/OUT1 is pulled up.

For each of the signal control circuits 3211a through 3111 c, the body side microcomputer 3210 sets the input parameter Send DATA1 to L level. Due to this, in each of the signal control circuits 3211a through 3111c, an output signal at H level is outputted from the NAND element X5 to the gate of the field effect transistor Q1, so that the field effect transistor Q1 goes into the OFF state.

For each of the signal control circuits 3211a through 3111 c, the body side microcomputer 3210 outputs, as the input parameter Output Disable 1, the read/write signal R/W3, the clock pulse signal CLK3, and the data signal DATA3 respectively. In each of the signal control circuits 3211a through 3211c, the NOR element X7 receives as inputs said signal and the signal at L level outputted as the input parameter Send DATA1, and performs calculation of their negative logical sum. As a result, in the signal control circuit 3111 b, the inverse signal of the signal that was inputted as the input parameter Output Disable1 is outputted from the NOR element X7 to the gate of the field effect transistor Q5.

By the body side microcomputer 3210 setting the input parameters Pull-up Enable1 and Send DATA1 for each of the signal control circuits 3211a through 3211c to L level, signal output of the open drain type is performed toward each of the connection terminals IN/OUT1 of the signal control circuits 3211a through 3211c. And the body side microcomputer 3210 inputs the read/write signal R/W3, the clock pulse signal CLK3, and the data signal DATA3 to the signal control circuits 3211a, 3211b, and 3211c respectively as the input parameter Output Disable 1, and outputs those signals from the connection terminals IN/OUT1 to the BB terminal, the BC terminal, and the BD terminal respectively by signal output according to the open drain method. These signals are transmitted to the lens side microcomputer 3110 via the transmission lines between the LB and BB terminals, between the LC and BC terminals, and between the LD and BD terminals, and are received as Receive DATA1 by each of the signal control circuits 3111 a through 3111 c. Moreover, the buffer circuits X12 in each of the signal control circuits 3211a through 3211c output these signals towards the body side microcomputer 3210. The body side mounting portion 3210 receives these signals as Receive DATA1.

The body side microcomputer 3210 sets the input parameter Output Disable1 for the signal control circuit 3211d to H level. Due to this, in the signal control circuit 3211d, an output signal at L level is outputted from the NOR element X7 to the gate of the field effect transistor Q5, so that the field effect transistor Q5 goes into the OFF state.

Moreover, in the signal control circuit 3211d, the output of the NOT element X1 goes to L level, and an output signal at H level is outputted from the NAND element X5 to the gate of the field effect transistor Q1, so that the field effect transistor Q1 goes into the OFF state.

In other words, the body side microcomputer 3210 sets the signal control circuit 3211d so that both the field effect transistors Q1 and Q5 go into the OFF state.

The body side microcomputer 3210 employs the connection terminals IN/OUT1 as terminals for reception. When the pulse signal transmitted by the lens side microcomputer 3110 on the transmission line between the LE and BE terminals is inputted to the connection terminal IN/OUT1 of the signal control circuit 3211d, the buffer circuit X12 of the signal control circuit 3211d outputs a signal having the same level as the pulse signal. And the body side microcomputer 3210 receives the signal outputted by the buffer circuit X12 of the signal control circuit 3211d as Receive DATA1.

For each of the signal control circuits 3211c and 3211d, the body side microcomputer 3210 sets the input parameter Pull-up Enable2 to L level. Due to this, the field effect transistor Q4 housed internally to each of the signal control circuits 3211c and 3211d is put into the ON state, so that the connection terminal IN/OUT2 is pulled up.

Moreover, for each of the signal control circuits 3211a through 3211d, the body side microcomputer 3210 sets the input parameter Output Disable2 to H level. Due to this, in each of the signal control circuits 3211 a through 3211 d, an output signal at L level is outputted from the NOR element X8 to the gate of the field effect transistor Q6, so that the field effect transistor Q6 is put into the OFF state.

Moreover, in each of the signal control circuits 3211a through 3211d, the output of the NOT element X4 goes to L level, so that an output signal at H level is outputted from the NAND element X6 to the gate of the field effect transistor Q3, so that the field effect transistor Q3 is put into the OFF state.

In other words, the body side microcomputer 3210 establishes settings for each of the signal control circuits 3211 a through 3211 d so that both of its field effect transistors Q6 and Q3 go into the OFF state. As a result, signal output of the open drain type from each of the signal control circuits 3211 a through 3211 d is not performed.

The body side microcomputer 3210 also uses the connection terminal IN/OUT2 of the signal control circuit 3211d as a terminal for reception. When a pulse signal transmitted by the lens side microcomputer 3110 upon the transmission line between the LH and BH terminals is inputted to the connection terminal IN/OUT2 of the signal control circuit 3211d, the buffer circuit X13 of the signal control circuit 3211d outputs a signal of the same level as the pulse signal. And the body side microcomputer 3210 receives this signal outputted by the buffer circuit X13 of the signal control circuit 3211d as Receive DATA2.

The case when, during half duplex communication between the lens side microcomputer 3110 and the body side microcomputer 3210, the lens side microcomputer 3110 is set as the transmission side will now be explained with reference to Fig. 22.

When the lens side microcomputer 3110 is set as the transmission side, the lens side microcomputer 3110 performs control for the signal control circuit 3111 a, similar to the control for the signal control circuit 3111d shown in Fig. 20. However, the signals inputted as the input parameter Output Disable1 and as the input parameter Output Disable2 are changed from the pulse signal to the read/write signal R/W3 and to the clock pulse signal CLK4, respectively.

Moreover, the lens side microcomputer 3110 performs control for the signal control circuit 3111 c, similar to the control for the signal control circuit 3211c shown in Fig. 21.

And the body side microcomputer 3210 performs control for the signal control circuits 3211 a and 3211 c, similar to the control for the signal control circuit 3111c shown in Fig. 20 performed by the lens side microcomputer 3110. However, for the signal control circuit 3211a, the signal inputted as the input parameter Output Disable2 is changed from the data signal DATA3 to the read/write signal R/W3.

Next the case when, during half duplex communication between the lens side microcomputer 3110 and the adapter side microcomputer 3450, the lens side microcomputer 3110 is set as the reception side will now be explained with reference to Fig. 22.

When the lens side microcomputer 3110 is set as the reception side, in other words when the adapter side microcomputer 3450 is set as the transmission side, the lens side microcomputer 3110 performs control for the signal control circuit 3111b, similar to the control for the signal control circuit 3211d shown in Fig. 21. However, the signals received as Receive DATA1 and Receive DATA2 are respectively changed to the clock pulse signal CLK3 and the data signal DATA4.

### - Communication Pattern (2) -

Returning to Fig. 19, Communication Pattern (2) will now be explained. In Communication Pattern (2), along with the signal output method being changed over from the open drain type to the CMOS type, the method of communication that is performed between the LB and BB terminals, between the LD and BD terminals, between the LI and BI terminals, and the LJ and BJ terminals, is changed over from half duplex communication to one-way communication. In concrete terms, between the LB and BB terminals, the body side microcomputer 3210 transmits the read/write signal R/W3 from the BB terminal to the LB terminal by one-way communication. And, between the LD and BD terminals, the body side microcomputer 3210 transmits the data signal DATA3 from the BD terminal to the LD terminal by one-way communication. Moreover, between the LI and BI terminals, the lens side microcomputer 3110 transmits a read/write signal R/W5 from the LI terminal to the BI terminal by one-way communication. Yet further, between the LJ and BJ terminals, the lens side microcomputer 3110 transmits a data signal DATA5 from the LJ terminal to the BJ terminal by one-way communication.

When the data signal DATA3 is to be outputted from the BD terminal to the LD terminal, the body side microcomputer 3210 outputs the data signal DATA3 from the BD terminal to the LD terminal after having outputted the read/write signal R/W3 at L level to the BB terminal. The data signal DATA3 is synchronized with the clock pulse signal CLK3 that is transmitted by the body side microcomputer 3210 from the BC terminal to the LC terminal.

And, when the data signal DATA5 is to be outputted from the LJ terminal to the BJ terminal, the body side microcomputer 3210 outputs the data signal DATA5 from the LJ terminal to the BJ terminal after having outputted the read/write signal R/W5 at H level to the LI terminal. The data signal DATA5 is synchronized with the clock pulse signal CLK3 that is transmitted by the body side microcomputer 3210 from the BC terminal to the LC terminal.

It should be understood that, in order to prevent erroneous operation, the adapter side microcomputer 3450 intercepts (i.e. disconnects, opens, breaks, or puts into a Hi-Z state) the connection with between the LI and BI terminals and the connection with between the LJ and BJ terminals,

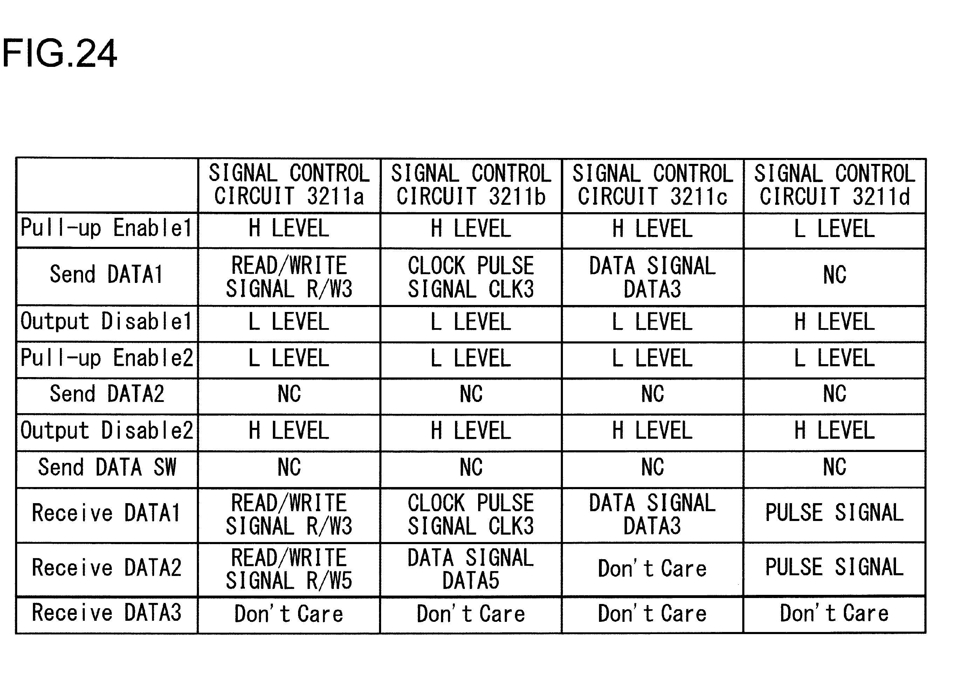

The control performed by the lens side microcomputer 3110 and by the body side microcomputer 3210 when performing communication according to Communication Pattern (2) will now be explained with reference to Figs. 18, 23, and 24. The settings for the signal control circuits 3111a through 3111d when communication according to Communication Pattern (2) is performed are shown in Fig. 23. And the settings for the signal control circuits 3211 a through 3211 d when communication according to Communication Pattern (2) is performed are shown in Fig. 24.

### (2.1) The signal control circuits 3111a through 3111c

As shown in Fig. 23, for each of the signal control circuits 3111 a through 3111 c, the lens side microcomputer 3110 sets the input parameter Pull-up Enable 1 to L level. Due to this, the field effect transistor Q2 internally housed in each of the signal control circuits 3111a through 3111c goes into the ON state, and the connection terminal IN/OUT1 is pulled up.

And, for each of the signal control circuits 3111 a through 3111 c, the lens side microcomputer 3110 sets the input parameter Output Disable1 to H level. Due to this, in each of the signal control circuits 3111a through 3111c, an output signal at L level is outputted from the NOR element X7 to the gate of the field effect transistor Q5, so that the field effect transistor Q5 goes into the OFF state.

Furthermore, in each of the signal control circuits 3111a through 3111 c, the output of the NOT element X1 goes to L level, and an output signal at H level is outputted from the NAND element X5 to the gate of the field effect transistor Q1, so that the field effect transistor Q1 goes into the OFF state.

In other words, for each of the signal control circuits 3111 a through 3111 c, the lens side microcomputer 3110 establishes settings so that both of the field effect transistors Q1 and Q5 go into the OFF state.

The lens side microcomputer 3110 uses the connection terminal IN/OUT1 of each of these signal control circuits 3111 a through 3111 c as a terminal for reception. And, when the potential at the connection terminals IN/OUT1 of the signal control circuit 3111a through 3111c goes to H level, the output of the buffer circuit X12 of the signal control circuits 3111a through 3111c goes to H level, and the lens side microcomputer 3110 receives an H level signal as Receive DATA1. Moreover, when the potential at the connection terminal IN/OUT1 of each of the signal control circuits 3111a through 3111c goes to L level, the output of the buffer circuit X12 goes to L level, and the lens side microcomputer 3110 receives an L level signal as Receive DATA1. The lens side microcomputer 3110 receives the read/write signal R/W3, the clock pulse signal CLK3, and the data signal DATA3 as Receive DATA1 from the signal control circuits 3111a through 3111c respectively.

For each of the signal control circuits 3111a and 3111 b, the lens side microcomputer 3110 sets the input parameter Pull-up Enable2 to H level. Due to this, the field effect transistor Q2 internal to each of the signal control circuits 3111a and 3111b goes into the OFF state.

Moreover, the lens side microcomputer 3110 outputs the read/write signal R/W5 and the data signal DATA5 as the input parameter Send DATA2 for the signal control circuits 3111 a and 3111 b. And the lens side microcomputer 3110 sets the input parameter Send DATA SW for the signal control circuits 3111a and 3111b to L level.

At this time, signals at H level are outputted from the NOT elements X3 of the signal control circuits 3111 a and 3111b to their AND elements X9, and the same signals as the output signals inputted as the input parameter Send DATA2 are outputted from the AND elements X9 to the OR elements X11. Moreover, a signal at L level is outputted from the AND element X10 to the OR element X11, since the input parameter Send DATA SW is L level. Thus, on the basis of the inputs from the AND elements X9 and X10, the OR element X11 outputs to the NAND element X6 and to the NOR element X8 the same signal as the output signal inputted as the input parameter Send DATA2.

The lens side microcomputer 3110 sets the input parameter Output Disable2 for the signal control circuits 3111a and 3111b to L level. And, in each of the signal control circuits 3111a and 3111b, a signal at H level is outputted from the NOT element X4 to the NAND element X6. The NAND element X6 receives as inputs the signal inputted from the OR element X11 and the signal at H level inputted from the NOT element X4, and performs negative logical multiplication calculation thereupon. As a result, the NAND element X6 outputs the inverse signal of the output signal that was inputted as the input parameter Send DATA2 to the gate of the field effect transistor Q3.

The signal inputted from the OR element X11 and the input parameter Output Disable2 that is at L level are inputted to the NOR element X8 of each of the signal control circuits 3111 a and 3111b, and calculation of their negative logical sum is performed. As a result, the NOR element X8 outputs the inverse signal of the output signal that was inputted as the input parameter Send DATA2 to the gate of the field effect transistor Q6.

In each of the signal control circuits 3111a and 3111b, when the signal inputted as the input parameter Send DATA2 is at H level, the field effect transistor Q3 goes into the ON state, and the field effect transistor Q6 goes into the OFF state. As a result, the connection terminal IN/OUT2 is connected to the power supply voltage Vdd that is connected to the drain of the field effect transistor Q3, so that the connection terminal IN/OUT2 is pulled up. In other words, the signal levels at the connection terminals IN/OUT2 of the signal control circuits 3111 a and 3111b are the same levels as the signal inputted as the input parameter Send DATA2. Moreover, the outputs of the buffer circuits X13 of each of the signal control circuits 3111a and 3111b become H level, so that the lens side microcomputer 3110 receives a signal at H level as Receiving DATA2 from each of the signal control circuits 3111 a and 3111 b.

In each of the signal control circuits 3111 a and 3111 b, when the signal inputted as the input parameter Send DATA2 is at L level, the field effect transistor Q3 goes into the OFF state, and the field effect transistor Q6 goes into the ON state. As a result, the connection terminal IN/OUT2 is pulled down. In other words, the signal levels at the connection terminals IN/OUT2 of the signal control circuits 3111 a and 3111 b are the same levels as the signal inputted as the input parameter Send DATA2. Moreover, the outputs of the buffer circuits X13 of each of the signal control circuits 3111a and 3111b become L level, so that the lens side microcomputer 3110 receives a signal at L level as Receiving DATA2 from each of the signal control circuits 3111 a and 3111 b.

To put it in another manner, in the signal control circuits 3111 a and 3111 b, due to control by the lens side microcomputer 3110, the field effect transistor Q3 and the field effect transistor Q6 constitute a logic inversion circuit of the CMOS type. By inputting the inverse signal of the signal inputted as the input parameter Send DATA2 as inverted by this logic inversion circuit, the lens side microcomputer 3110 outputs the signal that is inputted as the input parameter Send DATA2 from the connection terminal IN/OUT2. In other words, the lens side microcomputer 3110 sets each of the signal control circuit 3111 a and 3111b so that signal output of the CMOS type is performed towards the connection terminals IN/OUT2 of the signal control circuits 3111a and 3111b. It should be understood that the signal that is outputted as the input parameter Send DATA2 is re-inputted to the lens side microcomputer 3110 via the buffer circuits X13 of each of the signal control circuit 3111 a and 3111 b.

The lens side microcomputer 3110 sets the input parameter Pull-up Enable2 for the signal control circuit 3111c to L level. Due to this, the field effect transistor Q4 internal to the signal control circuit 3111c goes into the ON state, so that the connection terminal IN/OUT2 is pulled up.

And the lens side microcomputer 3110 sets the input parameter Output Disable2 for the signal control circuit 3111c to H level. Due to this, in the signal control circuit 3111c, an output signal at L level is outputted from the NOR element X8 to the gate of the field effect transistor Q6, so that the field effect transistor Q6 goes into the OFF state.

Moreover, in the signal control circuit 3111c, the output of the NOT element X4 goes to L level, so that an output signal at H level is outputted from the NAND element X6 to the gate of the field effect transistor Q3, and the field effect transistor Q3 goes into the OFF state.

In other words, the body side microcomputer 3210 sets the signal control circuit 3111 c so that both of the field effect transistors Q6 and Q3 go into the OFF state. As a result, signal output of the CMOS type from the signal control circuit 3111 c is not performed.

### (2.2) The signal control circuit 3111 d

The lens side microcomputer 3110 sets the input parameter Pull-up Enable 1 for the signal control circuit 3111 d to H level. Due to this, the field effect transistor Q2 housed within the signal control circuit 3111 d goes into the OFF state.

The lens side microcomputer 3110 outputs a pulse signal that specifies the state of the focusing lens 140 to the signal control circuit 3111 d as the input parameter Send DATA1. Moreover, the lens side microcomputer 3110 sets the input parameter Output Disable1 for the signal control circuit 3111d to L level. Due to this, in the signal control circuit 3111d, a signal at H level is outputted from the NOT element X1 to the NAND element X5.

The input parameter Send DATA1 and the signal at H level inputted from the NOT element X1 are inputted to the NAND element X5 of the signal control circuit 3111d, that performs negative logical multiplication calculation thereupon. As a result, the NAND element X5 outputs an inverse signal complementary to the pulse signal to the gate of the field effect transistor Q1.

The NOR element X7 of the signal control circuit 3111d receives the input parameter Send DATA1 and the input parameter Output Disable1 that is at L level as inputs, and performs negative logical sum calculation thereupon. As a result, the NOR element X7 outputs an inverse signal complementary to the pulse signal to the gate of the field effect transistor Q5.

In the signal control circuit 3111 d, when the output signal outputted as the input parameter Send DATA1 is at H level, the field effect transistor Q1 goes into the ON state, and the field effect transistor Q5 goes into the OFF state. As a result, the connection terminal IN/OUT1 is connected to the power supply voltage Vdd that is connected to the drain of the field effect transistor Q1, so that the connection terminal IN/OUT1 is pulled up. In other words, the signal level at the connection terminal IN/OUT1 of the signal control circuit 3111d becomes the same as the signal level of the signal inputted as the input parameter Send DATA1. Moreover, the output of the buffer circuit X12 of the signal control circuit 3111d also becomes H level, so that the lens side microcomputer 3110 receives a signal H level from the signal control circuit 3111 d as Receiving DATA1.

When in the signal control circuit 3111d the output signal outputted as the input parameter Send DATA1 is at L level, the field effect transistor Q1 goes into the OFF state, and the field effect transistor Q5 goes into the ON state. As a result, the connection terminal IN/OUT1 is pulled down. In other words, the signal level at the connection terminal IN/OUT1 of the signal control circuit 3111d becomes the same as the signal level of the signal inputted as the input parameter Send DATA1. Moreover, the output of the buffer circuit X12 of the signal control circuit 3111d also becomes L level, and the lens side microcomputer 3110 receives a signal at L level from the signal control circuit 3111d as Receiving DATA1.

To put it in another manner, in the signal control circuit 3111 d, due to control by the lens side microcomputer 3110, the field effect transistor Q1 and the field effect transistor Q5 establish a logic inversion circuit of the CMOS type. And, by the lens side microcomputer 3110 inputting the inverse signal to the pulse signal inputted as the input parameter Send DATA1 to this logic inversion circuit, a pulse signal is outputted from the connection terminal IN/OUT 1. In other words, the lens side microcomputer 3110 sets the signal control circuit 3111d so that signal output of the CMOS type is performed from the connection terminal IN/OUT1 of the signal control circuit 3111 d. Along with the pulse signal being transmitted to the body side microcomputer 3210 via the transmission line between the LE and BE terminals, also this signal is re-inputted to the lens side microcomputer 3110 via the buffer circuit X12 of the signal control circuit 3111 d.

The lens side microcomputer 3110 sets the input parameter Pull-up Enable2 for the signal control circuit 3111d to H level. Due to this, the field effect transistor Q4 housed within the signal control circuit 3111d goes into the OFF state.

The lens side microcomputer 3110 outputs a pulse signal to the signal control circuit 3111d as the input parameter Send DATA2. Moreover, the lens side microcomputer 3110 sets the input parameter Output Disable2 and the input parameter Send DATA SW for the signal control circuit 3111 d to L level.

Since the input parameter Send DATA SW is L level, the NOT element X3 of the signal control circuit 3111 d transmits a signal at H level to the AND element X9. The AND element X9 receives the input parameter Send DATA2 and the signal at H level inputted from the NOT element X3 and performs logical multiplication calculation thereupon. As a result, the AND element X9 outputs a signal to the OR element X11 that is the same signal as the input parameter Send DATA2.

Since the input parameter Send DATA SW is L level, the AND element X10 of the signal control circuit 3111d transmits a signal at L level to the OR element X11. The OR element X11 receives the signal outputted from the AND element X9 and the signal at L level outputted from the AND element X10 and performs logical sum calculation thereupon. As a result, the OR element X11 outputs a signal to the NAND element X6 and to the NOR element X8 that is the same signal as the input parameter Send DATA2.

The lens side microcomputer 3110 sets the input parameter Output Disable2 for the signal control circuit 3111 d to L level. In each of the signal control circuits 3111 d, a signal at H level is outputted from the NOT element X4 to the NAND element X6.

The NAND element X6 of the signal control circuit 3111d inputs the signal inputted from the OR element X11 and the signal at H level inputted from the NOT element X4 and performs negative logical multiplication calculation thereupon. As a result, the NAND element X6 outputs the inverse signal to the output signal inputted as the input parameter Send DATA2 to the gate of the field effect transistor Q3.

The NOR element X8 of the signal control circuit 3111d receives the same signal as the output signal inputted as the input parameter Send DATA2 inputted from the OR element X11, and the input parameter Output Disable 2 that is at L level, and performs calculation of their negative logical sum. As a result, the NOR element X8 outputs the inverse signal to the output signal inputted as the input parameter Send DATA2 to the gate of the field effect transistor Q6.

When, in the signal control circuit 3111 d, the output signal outputted as the input parameter Send DATA2 is at H level, then the field effect transistor Q3 goes into the ON state, while the field effect transistor Q6 goes into the OFF state. As a result, IN/OUT2 is connected to the power supply voltage Vdd that is connected to the drain of the connection terminal field effect transistor Q1, and the connection terminal IN/OUT2 is pulled up. In other words, the signal level at the connection terminal IN/OUT2 of the signal control circuit 3111d becomes the same as the level of the signal inputted as the input parameter Send DATA2. Moreover, the output of the buffer circuit X13 of the signal control circuit 3111d becomes H level, so that the lens side microcomputer 3110 receives a signal at H level from the signal control circuit 3111d as Receiving DATA2.

And when, in the signal control circuit 3111 d, the output signal outputted as the input parameter Send DATA2 is at L level, then the field effect transistor Q3 goes into the OFF state, while the field effect transistor Q6 goes into the ON state. As a result, the connection terminal IN/OUT2 is pulled down. In other words, the signal level at the connection terminal IN/OUT2 of the signal control circuit 3111d becomes the same as the level of the signal inputted as the input parameter Send DATA2. Moreover, the output of the buffer circuit X13 of the signal control circuit 3111d also becomes L level, so that the lens side microcomputer 3110 receives a signal at L level from the signal control circuit 3111 d as Receiving DATA2.

To put it in another manner, in the signal control circuit 3111 d, due to control by the lens side microcomputer 3110, the field effect transistor Q3 and the field effect transistor Q6 constitute a CMOS type logic inversion circuit. And the lens side microcomputer 3110 outputs a pulse signal from the connection terminal IN/OUT2 by inputting the inverse signal to the pulse signal inputted as the input parameter Send DATA2 to this logic inversion circuit. In other words, the lens side microcomputer 3110 sets the signal control circuit 3111d so that signal output of the CMOS type is performed from the connection terminal IN/OUT2 of the signal control circuit 3111d. It should be understood that the pulse signal that is inputted as the input parameter Send DATA2 is re-inputted to the lens side microcomputer 3110 via the buffer circuit X13 of the signal control circuit 3111d.

### (2.3) The signal control circuits 3211a through 3211c

As shown in Fig. 24, for each of the signal control circuits 3211a through 3211c, the body side microcomputer 3210 sets the input parameter Pull-up Enable1 to H level. Due to this, the field effect transistor housed internally to each of the signal control circuits 3211a through 3211c goes into the OFF state.

And the body side microcomputer 3210 outputs the read/write signal R/W3, the clock pulse signal CLK3, and the data signal DATA3 as the input parameter Send DATA1 to each of the signal control circuits 3211a through 3211c, respectively.

Moreover, for each of the signal control circuits 3211 a through 3211c, the body side microcomputer 3210 sets the input parameter Output Disable1 to L level. As a result, in each of the signal control circuits 3211a through 3211c, a signal at H level is outputted from the NOT element X1 to the NAND element X5. And the NAND element X5 of each of the signal control circuits 3211 a through 3211c receives as inputs the input parameter Send DATA1 and the signal at H level inputted from the NOT element X1, and performs negative logical multiplication calculation thereupon. As a result, the NAND element X5 outputs the inverse signal of the input parameter Send DATA1 to the gate of the field effect transistor Q1.

The NOR element X7 of each of the signal control circuits 3211a through 3211c receives as inputs the input parameter Send DATA1 and the input parameter Output Disable1, and performs calculation of their negative logical sum. As a result, the NOR element X7 outputs the inverse signal to the input parameter Send DATA1 to the gate of the field effect transistor Q5.

In each of the signal control circuits 3211a through 3211c, when the output signal outputted as the input parameter Send DATA1 is H level, the field effect transistor Q1 goes into the ON state, and the field effect transistor Q5 goes into the OFF state. As a result, the connection terminal IN/OUT1 is connected to the power supply voltage Vdd that is connected to the drain of the field effect transistor Q1, so that the connection terminal IN/OUT1 is pulled up. In other words, the signal level of the connection terminal IN/OUT1 of each of the signal control circuits 3211 a through 3211c becomes the same as the level of the signal inputted as the input parameter Send DATA1. Moreover, the output of the buffer circuit X12 of each of the signal control circuits 3211 a through 3211c also becomes H level, and the body side microcomputer 3210 receives a signal at H level as Receiving DATA1 from each of the signal control circuits 3211a through 3211c.

And, in each of the signal control circuits 3211a through 3211c, when the output signal outputted as the input parameter Send DATA1 is L level, the field effect transistor Q1 goes into the OFF state, and the field effect transistor Q5 goes into the ON state. As a result, the connection terminal IN/OUT1 is pulled down. In other words, the signal level of the connection terminal IN/OUT1 of each of the signal control circuits 3211a through 3211c becomes the same as the level of the signal inputted as the input parameter Send DATA1. Moreover, the output of the buffer circuit X12 of each of the signal control circuits 3211 a through 3211c also becomes L level, and the body side microcomputer 3210 receives a signal at L level as Receiving DATA1 from each of the signal control circuits 3211a through 3211c.

To put it in another manner, in the signal control circuits 3211a through 3211c, due to control by the body side microcomputer 3210, the field effect transistor Q1 and the field effect transistor Q5 constitute a CMOS type logic inversion circuit. And, by inputting the inverse signals of the read/write signal R/W3, the clock pulse signal CLK3, and the data signal DATA3 inputted as the input parameter Send DATA1 to this logic inversion circuit, the body side microcomputer 3210 outputs the read/write signal R/W3, the clock pulse signal CLK3, and the data signal DATA3 from the respective connection terminals IN/OUT1. In other words, the body side microcomputer 3210 sets the signal control circuits 3211a through 3211 c so that signal output of the CMOS type is performed from the connection terminals IN/OUT2 of the signal control circuits 3211 a through 3211c. It should be understood that the signals that are inputted as the input parameters Send DATA1 are re-inputted to the body side microcomputer 3210 via the buffer circuit X12 of each of the signal control circuits 3111 a through 3111c.

The body side microcomputer 3210 sets the input parameter Pull-up Enable2 for each of the signal control circuits 3211a through 3211c to L level. Due to this, the field effect transistor Q4 housed internally to each of the signal control circuits 3211a through 3211c goes into the ON state, and the connection terminal IN/OUT2 is pulled up.

The body side microcomputer 3210 sets the input parameter Output Disable2 for each of the signal control circuits 3211a through 3211c to H level. Due to this, in each of the signal control circuits 3211a through 3211c, an output signal at L level is outputted from the NOR element X8 to the gate of the field effect transistor Q6, so that the field effect transistor Q6 goes into the OFF state.

Moreover, in each of the signal control circuits 3211a through 3211c, the output of the NOT element X4 goes to L level, so that an output signal at H level is outputted from the NAND element X6 to the gate of the field effect transistor Q3, and the field effect transistor Q3 goes into the OFF state.

In other words, the body side microcomputer 3210 makes settings for each of the signal control circuits 3211a through 3211c so that both of the field effect transistors Q3 and Q6 go into the OFF state.

When the potential at the connection terminals IN/OUT2 of the signal control circuits 3211 a and 3211 b is at H level, the outputs of the buffer circuits X13 of the signal control circuits 3211 a and 3211 b go to H level, and the body side microcomputer 3210 receives an H level signal as Receive DATA2. And, when the potential at the connection terminals IN/OUT2 of the signal control circuits 3211 a and 3211 b is at L level, the outputs of the buffer circuits X13 of the signal control circuits 3211 a and 3211b go to L level, and the body side microcomputer 3210 receives an L level signal as Receive DATA2. The body side microcomputer 3210 receives the read/write signal R/W5 and the data signal DATA5 from the signal control circuits 3211 a and 3211b respectively as Receive DATA2.

### (2.4) The signal control circuit 3211 d

The body side microcomputer 3210 sets the input parameter Pull-up Enable 1 for the signal control circuit 3211d to L level. Due to this, the field effect transistor Q2 housed internally to the signal control circuit 3211d goes into the ON state, so that the connection terminal IN/OUT1 is pulled up.

And the body side microcomputer 3210 sets the input parameter Output Disable1 for the signal control circuit 3211d to H level. Due to this, in the signal control circuit 3211d, an output signal at L level is outputted from the NOR element X7 to the gate of the field effect transistor Q5, so that the field effect transistor Q5 goes into the OFF state.

Moreover, in the signal control circuit 3211d, the output of the NOT element X1 goes to L level, and an output signal at H level is outputted from the NAND element X5 to the gate of the field effect transistor Q1, so that the field effect transistor Q1 goes into the OFF state.

In other words, the body side microcomputer 3210 sets the signal control circuit 3211d so that both of the field effect transistors Q1 and Q5 go into the OFF state.

The body side microcomputer 3210 sets the input parameter Pull-up Enable2 for the signal control circuit 3211d to L level. Due to this, the field effect transistor Q4 housed internally to the signal control circuit 3211d goes into the ON state, so that the connection terminal IN/OUT2 is pulled up.

The body side microcomputer 3210 sets the input parameter Output Disable2 for the signal control circuit 3211d to H level. Due to this, in the signal control circuit 3211d, an output signal at L level is outputted from the NOR element X7 to the gate of the field effect transistor Q6, so that the field effect transistor Q6 goes into the OFF state.

Moreover, in the signal control circuit 3211d, the output of the NOT element X4 goes to L level, so that an output signal at H level is outputted from the NAND element X6 to the gate of the field effect transistor Q1, and the field effect transistor Q3 goes into the OFF state.

In other words, the body side microcomputer 3210 sets the signal control circuit 3211d so that both of the field effect transistors Q3 and Q6 are put into the OFF state.

When the potential at the connection terminal IN/OUT1 of the signal control circuit 3211d is H level, the output of the buffer circuit X12 of the signal control circuit 3211d becomes H level, and the body side microcomputer 3210 receives a signal at H level as Receive DATA1. And, when the potential at the connection terminal IN/OUT1 of the signal control circuit 3211d is L level, the output of the buffer circuit X12 becomes L level, and the body side microcomputer 3210 receives a signal at L level as Receive DATA1. Thus, the body side microcomputer 3210 receives a pulse signal as Receive DATA1 from the signal control circuit 3211d. In a similar manner, the body side microcomputer 3210 receives a pulse signal as Receive DATA2 from the signal control circuit 3211d.

### - Communication Pattern (3) -

Returning again to the explanation of Fig. 19, Communication Pattern (3) will be explained. In the case of Communication Pattern (3), the communication method employed for communication between the LB and BB terminals, between the LD and BD terminals, and between the LI and BI terminals, and the details of the communication performed between the LH and BH terminals, between the LI and BI terminals, and between the LJ and BJ terminals, are different from the case in Communication Pattern (2). Moreover, in the case of Communication Pattern (3), the fact that communication between the LK and BK terminals is employed is a great difference from the cases in Communication Pattern (1) and Communication Pattern (2).

Communication between the LB and BB terminals, between the LD and BD terminals, and between the LI and BI terminals is performed by half duplex communication. And the inverse signal complementary to the pulse signal transmitted between the LE and the BE terminals from the lens side microcomputer 3110 to the body side microcomputer 3210 is transmitted from the lens side microcomputer 3110 to the body side microcomputer 3210 between the LH and BH terminals. In other words, when the L level is present at the LE and BE terminals, the H level is present at the LH and BH terminals; and, when the H level is present at the LE and BE terminals, the L level is present at the LH and BH terminals. To put it in another manner, the signal control circuit 3111d of the lens side microcomputer 3110 differentially transmits the pulse signal to the body side microcomputer 3210.

Half duplex communication is performed between the LI and BI terminals to transmit and receive the inverse signal complementary to the read/write signal R/W3 transmitted and received between the LB and BB terminals. In other words, when the L level is present at the LB and BB terminals, the H level is present at the LI and BI terminals; and, when the H level is present at the LB and BB terminals, the L level is present at the LI and BI terminals. To put it in another manner, differential transmission related to the read/write signal R/W3 is performed between the signal control circuit 3111 a of the lens side microcomputer 3110 and the signal control circuit 3211a of the body side microcomputer 3210.

Due to the body side microcomputer 3210 performing one-way communication from the BJ terminal to the LJ terminal, the inverse signal complementary to the clock pulse signal CLK3 between the LC and BC terminals that is transmitted from the BC terminal to the LC terminal is transmitted between the LJ and BJ terminals. In other words, when the L level is present at the LC and BC terminals, the H level is present at the LJ and BJ terminals; and, when the H level is present at the LC and BC terminals, the L level is present at the LJ and BJ terminals. To put it in another manner, differential transmission related to the clock pulse signal CLK3 is performed between the signal control circuit 3111b of the lens side microcomputer 3110 and the signal control circuit 3211b of the body side microcomputer 3210.

Half duplex communication is performed between the LK and BK terminals to transmit and receive the inverse signal complementary to the data signal DATA3 transmitted and received between the LD and BD terminals. In other words, when the L level is present at the LD and BD terminals, the H level is present at the LK and BK terminals; and, when the H level is present at the LD and BD terminals, the L level is present at the LK and BK terminals. To put it in another manner, differential transmission related to the data signal DATA3 is performed between the signal control circuit 3111 c of the lens side microcomputer 3110 and the signal control circuit 3211c of the body side microcomputer 3210.

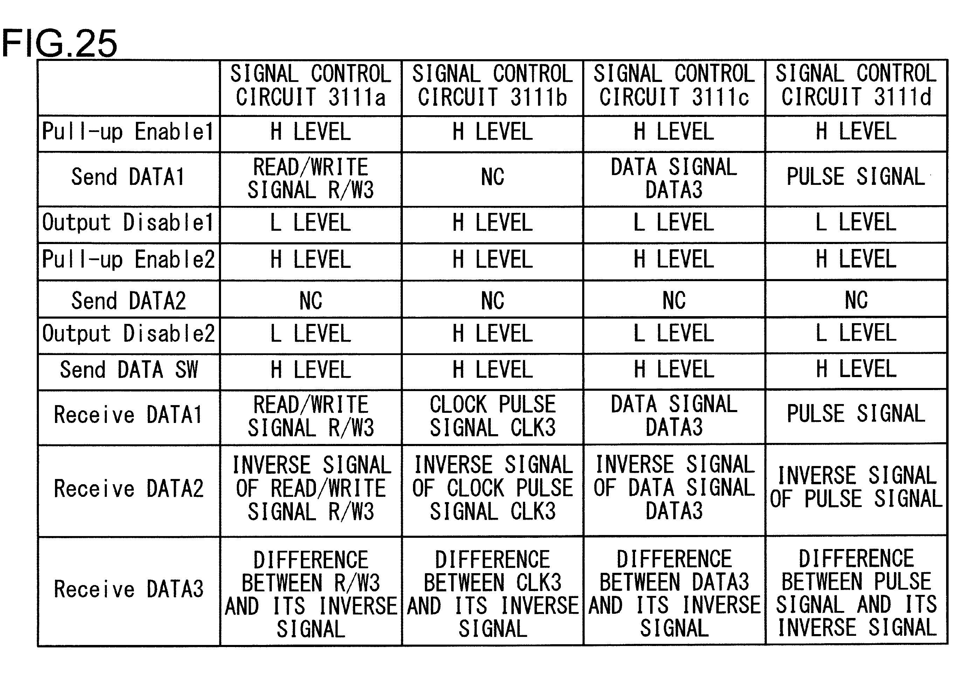

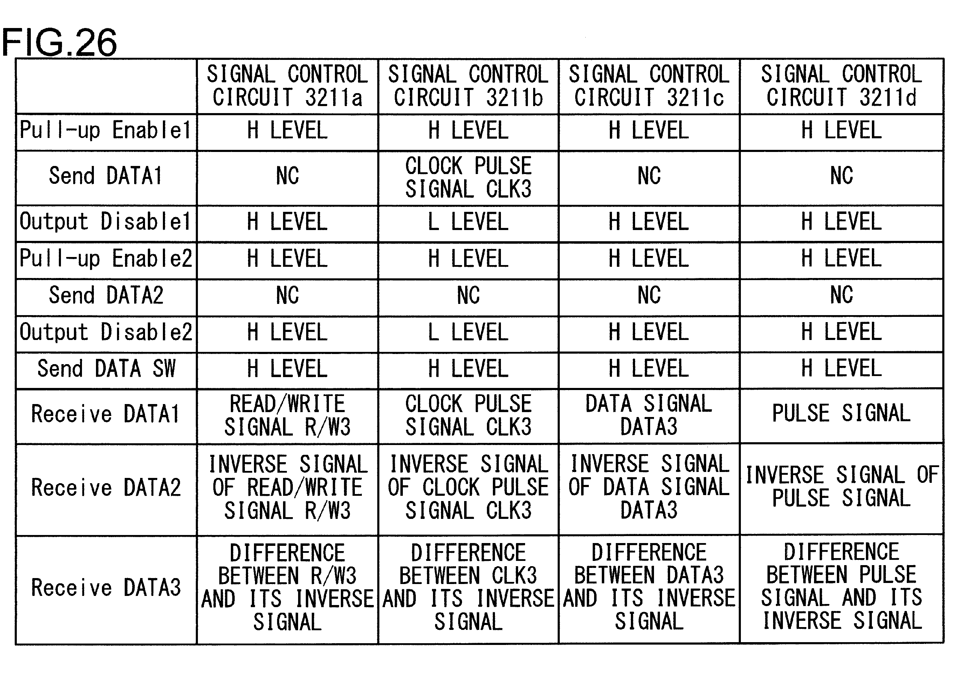

The control performed by the lens side microcomputer 3110 and the body side microcomputer 3210 when communication is performed according to Communication Pattern (3) will now be explained with reference to Fig. 18, Fig. 25, and Fig. 26. Fig. 25 shows the settings of the signal control circuits 3111a through 3111d when communication is performed according to Communication Pattern (3). And Fig. 26 shows the settings of the signal control circuits 3211a through 3211d when communication is performed according to Communication Pattern (3). It should be understood that, in the control example shown in Fig. 25 and Fig. 26, it is supposed that the lens side microcomputer 3110 is the transmission side in the half duplex communication between the lens side microcomputer 3110 and the body side microcomputer 3210. In order to prevent erroneous operation, the adapter side microcomputer 3450 of the intermediate adapter 3400 intercepts (i.e. disconnects, opens, breaks, or puts into a Hi-Z state) connection with between the LI and BI terminals and connection with between the LJ and BJ terminals.

### (3.1) The signal control circuits 3111 a, 3111 c, and 3111 d

As shown in Fig. 25, for each of the signal control circuits 3111 a, 3111 c, and 3111 d, the lens side microcomputer 3110 sets the input parameter Pull-up Enable1 to H level. Due to this, the field effect transistor Q2 housed internally to each of the signal control circuits 3111 a, 3111 c, and 3111 d goes into the OFF state.

And, for each of the signal control circuits 3111 a, 3111 c, and 3111d, as the input parameter Send DATA1, the lens side microcomputer 3110 respectively outputs, as an output signal, the read/write signal R/W3, the data signal DATA3, and a pulse signal.

Moreover, for each of the signal control circuits 3111 a, 3111 c, and 3111 d, the lens side microcomputer sets the input parameter Output Disable 1 to L level. As a result, in each of the signal control circuits 3111 a, 3111 c, and 3111 d, a signal at H level is outputted from the NOT element X1 to the NAND element X5. The NAND element X5 of each of the signal control circuits 3111a, 3111c, and 3111d receives the input parameter Send DATA1 and the signal at H level inputted from the NOT element X1, and performs negative logical multiplication calculation thereupon. As a result, the NAND element X5 outputs the inverse signal complementary to the input parameter Send DATA1 to the gate of the field effect transistor Q1.

The NOR elements X7 of the signal control circuits 3111 a, 3111 c, and 3111 d receive the input parameters Send DATA1 and the input parameters Output Disable1, and perform calculation of the negative logical sum thereof. As a result, the NOR elements X7 output the inverse signals complementary to the input parameters Send DATA1 to the gates of the field effect transistors Q5.

In each of the signal control circuits 3111a, 3111c, and 3111 d, when the output signal outputted as the input parameter Send DATA1 is at H level, the field effect transistor Q1 goes into the ON state, and the field effect transistor Q5 goes into the OFF state. As a result, the connection terminal IN/OUT1 is connected to the power supply voltage Vdd that is connected to the drain of the field effect transistor Q1, so that the connection terminal IN/OUT1 is pulled up. In other words, the signal level at the connection terminal IN/OUT1 of the signal control circuit 3111d becomes the same as the level of the signal inputted as the input parameter Send DATA1. Moreover, the output of the buffer circuit X12 of each of the signal control circuits 3111 a, 3111 c, and 3111d also becomes H level, so that the lens side microcomputer 3110 receives a signal at H level as Receiving DATA 1 from each of the signal control circuits 3111 a, 3111 c, and 3111 d.

And, in each of the signal control circuits 3111 a, 3111 c, and 3111 d, when the output signal outputted as the input parameter Send DATA1 is at L level, the field effect transistor Q1 goes into the OFF state, and the field effect transistor Q5 goes into the ON state. As a result, the connection terminal IN/OUT1 is pulled down. Moreover, the output of the buffer circuit X12 of each of the signal control circuits 3111a, 3111c, and 3111d also becomes L level, so that the lens side microcomputer 3110 receives a signal at L level as Receiving DATA 1 from each of the signal control circuits 3111 a, 3111 c, and 3111 d.

The lens side microcomputer 3110 sets the input parameter Pull-up Enable2 for each of the signal control circuits 3111a, 3111c, and 3111d to H level. Due to this, the field effect transistor Q4 housed internally to each of the signal control circuits 3111a, 3111 c, and 3111 d goes into the OFF state.

The lens side microcomputer 3110 sets the input parameter Send DATA SW for each of the signal control circuits 3111 a, 3111c, and 3111d to H level. Due to this, an output signal at L level is outputted from the NOT element X3 of each of the signal control circuits 3111 a, 3111 c, and 3111d, so that an output signal at L level is outputted from the AND element X9.

Via the NOT element X2 of each of the signal control circuits 3111 a, 3111 c, and 3111 d, the lens side microcomputer 3110 outputs the inverse signal to the input parameter Send DATA1 to the AND element X10. And the AND element X10 of each of the signal control circuits 3111 a, 3111 c, and 3111 d receives as input Send DATA SW that is at H level, and the inverse signal of the input parameter Send DATA1 outputted by the NOT element X2, and performs logical multiplication calculation thereupon. And the AND element X10 of each of the signal control circuits 3111 a, 3111 c, and 3111 d outputs the result of this calculation, in other words the inverse signal of the input parameter Send DATA1, to the OR element X11.

The OR element X11 of each of the signal control circuits 3111a, 3111c, and 3111d receives the signal at L level outputted by the AND element X9, and the inverse signal of the input parameter Send DATA1 outputted by the AND element X10, and performs logical sum calculation thereupon. And the OR element X11 outputs the result of this calculation, in other words the inverse signal of the input parameter Send DATA1, to the NAND element X6 and to the NOR element X8.

Moreover, for each of the signal control circuits 3111 a, 3111 c, and 3111 d, the lens side microcomputer 3110 sets the input parameter Output Disable2 to L level. And, in each of the signal control circuits 3111 a, 3111 c, and 3111d, a signal at H level is outputted from the NOT element X4 to the NAND element X6. The NAND element X6 receives as inputs the inverse signal to the input parameter Send DATA1 inputted from the OR element X11 and the signal at H level inputted from the NOT element X4, and performs negative logical multiplication calculation thereupon. As a result, the NAND element X6 outputs the output signal inputted as the input parameter Send DATA1 to the gate of the field effect transistor Q3.

The NOR element X8 of each of the signal control circuits 3111 a, 3111 c, and 3111 d receives as inputs the inverse signal of the input parameter Send DATA1 inputted from the OR element X11, and the input parameter Output Disable2 that is at L level, and performs calculation of their negative logical sum. As a result, the NOR element X8 outputs the output signal that was inputted as the input parameter Send DATA1 to the gate of the field effect transistor Q6.

In each of the signal control circuits 3111a, 3111c, and 3111 d, when the output signal outputted as the input parameter Send DATA1 is at H level, the field effect transistor Q3 goes into the OFF state, and the field effect transistor Q6 goes into the ON state. As a result, the connection terminal IN/OUT2 is pulled down. In other words, the signal level of the connection terminal IN/OUT2 of each of the signal control circuits 3111a, 3111c, and 3111 d becomes the inverse signal complementary to the signal inputted as the input parameter Send DATA1. Moreover, the output of the buffer circuit X13 of each of the signal control circuits 3111 a, 3111c, and 3111d also becomes L level, and the lens side microcomputer 3110 receives a signal at L level as Receiving DATA2 from each of the signal control circuits 3111a, 3111c, and 3111 d.

And, in each of the signal control circuits 3111 a, 3111 c, and 3111d, when the output signal outputted as the input parameter Send DATA1 is L level, the field effect transistor Q6 goes into the OFF state, and the field effect transistor Q3 goes into the ON state. As a result, the connection terminal IN/OUT2 is connected to the power supply voltage Vdd that is connected to the drain of the field effect transistor Q3, so that the connection terminal IN/OUT2 is pulled up. In other words, the signal level of the connection terminal IN/OUT2 of each of the signal control circuits 3111 a, 3111c and 3111 d becomes the inverse signal complementary to the signal inputted as the input parameter Send DATA1. Moreover, the output of the buffer circuit X13 of each of the signal control circuits 3111a, 3111c, and 3111d also becomes H level, and the lens side microcomputer 3110 receives a signal at H level as Receiving DATA2 from each of the signal control circuits 3111 a, 3111 c, and 3111 d.

To put it in another manner, in the signal control circuits 3111 a, 3111 c, and 3111 d, due to control by the lens side microcomputer 3110, the field effect transistor Q3 and the field effect transistor Q6 constitute a CMOS type logic inversion circuit. And, by inputting the read/write signal R/W3, the data signal DATA3, and the pulse signal that were inputted as the input parameter Send DATA1 to this logic inversion circuit, the body side microcomputer 3210 outputs the inverse signals complementary to each of the read/write signal R/W3, the data signal DATA3, and the pulse signal from the respective connection terminals IN/OUT2. In other words, the lens side microcomputer 3110 sets the signal control circuits 3111 a, 3111 c, and 3111 d so that signal output of the CMOS type is performed from the connection terminals IN/OUT2 of the signal control circuits 3111a, 3111c, and 3111d. It should be understood that the inverse signals that are inputted as the input parameters Send DATA1 are re-inputted to the body side microcomputer 3210 as Receive DATA2 via the buffer circuit X13 of each of the signal control circuits 3111a, 3111c, and 3111d.

Receive DATA1, in other words the signal that is inputted as the input parameter Send DATA1, is inputted to the non-inverting input of the operational amplifier P1 of each of the signal control circuits 3111 a, 3111 c, and 3111d. And Receive DATA2, in other words the inverse signal to the input parameter Send DATA1, is inputted to the inverting input of the operational amplifier P1 of each of the signal control circuits 3111a, 3111 c, and 3111 d. And, when the differential between the signal inputted as the input parameter Send DATA1 and its inverse signal is outputted from the operational amplifier P1 of each of the signal control circuits 3111 a, 3111 c, and 3111 d, the lens side microcomputer 3110 receives this differential as Receive DATA3.

### (3.2) The signal control circuit 3111 b

The lens side microcomputer 3110 sets the input parameter Pull-up Enable 1 for the signal control circuit 3111b to H level. Due to this, the field effect transistor Q2 housed internally to the signal control circuit 3111b goes into the OFF state.

The lens side microcomputer 3110 sets the input parameter Output Disable 1 for the signal control circuit 3111b to H level. Due to this, in the signal control circuit 3111 b, an output signal at L level is outputted from the NOR element X7 to the gate of the field effect transistor Q5, so that the field effect transistor Q5 goes into the OFF state.

Moreover, in the signal control circuit 3111b, the output of the NOT element X1 goes to L level, so that an output signal at H level is outputted from the NAND element X5 to the gate of the field effect transistor Q1, and the field effect transistor Q1 goes into the OFF state.

The lens side microcomputer 3110 sets the input parameter Pull-up Enable2 for the signal control circuit 3111 b to H level. Due to this, the field effect transistor Q4 housed internally to the signal control circuit 3111b goes into the OFF state.

The lens side microcomputer 3110 sets the input parameter Output Disable2 for the signal control circuit 3111b to H level. Due to this, in the signal control circuit 3111 b, an output signal at L level is outputted from the NOR element X8 to the gate of the field effect transistor Q6, so that the field effect transistor Q6 goes into the OFF state.

Moreover, in the signal control circuit 3111b, the output of the NOT element X4 goes to L level, and an output signal at H level is outputted from the NAND element X6 to the gate of the field effect transistor Q3, so that the field effect transistor Q3 goes into the OFF state.

The lens side microcomputer 3110 sets the input parameter Send DATA SW for the signal control circuit 3111b to H level. By setting the input parameter Send DATA SW to H level in advance, the lens side microcomputer 3110 is able to control the changeover of transmission and reception of half duplex communication by only using the input parameters Output Disable1 and Output Disable2.

When the potential at the connection terminal IN/OUT1 of the signal control circuit 3111b is at H level, the output of the buffer circuit X12 of the signal control circuit 3111b becomes H level, and the lens side microcomputer 3110 receives a signal at H level as Receive DATA1. And, when the potential at the connection terminal IN/OUT1 of the signal control circuit 3111b is at L level, the output of the buffer circuit X12 becomes L level, and the lens side microcomputer 3110 receives a signal at L level as Receive DATA1. Thus, the lens side microcomputer 3110 receives the clock pulse signal CLK3 as Receive DATA1 from the signal control circuit 3111b. In a similar manner, the lens side microcomputer 3110 receives the inverse signal complementary to the clock pulse signal CLK3 as Receive DATA2 from the signal control circuit 3111 b.

The clock pulse signal CLK3 that is the same as Receive DATA1 is inputted to the non-inverting input of the operational amplifier P1, and the inverse signal complementary to the clock pulse signal CLK3 that is the same as Receive DATA2 is inputted to the inverting input of the operational amplifier P1. And, when the differential between the clock pulse signal CLK3 and its inverse signal is outputted from the operational amplifier P1 of the signal control circuit 3111 b, the lens side microcomputer 3110 receives this differential as Receive DATA3.

### (3.3) The signal control circuits 3211a, 3211c, and 3211d

The body side microcomputer 3210 performs control for the signal control circuits 3211 a, 3211c, and 3211d, similar to the control performed in (3.2) by the lens side microcomputer 3110 for the signal control circuit 3111b.

From each of the signal control circuits 3211 a, 3211 c, and 3211 d, the body side microcomputer 3210 receives the read/write signal R/W3, the data signal DATA3, and the pulse signal respectively as Receive DATA1. In a similar manner, from each of the signal control circuits 3211 a, 3211c, and 3211d, the body side microcomputer 3210 receives the inverse signal complementary to each of the read/write signal R/W3, the data signal DATA3, and the pulse signal respectively as Receive DATA2.

A signal that is the same as Receive DATA1 is inputted to the non-inverting input of the operational amplifier P1 of each of the signal control circuits 3211a, 3211c, and 3211d, and the inverse signal complementary to the signal inputted to Receive DATA1 is inputted to the inverting input of the operational amplifier P1. The difference between the read/write signal R/W3 and its inverse signal is outputted from the operational amplifier P1 of the signal control circuit 3211a, the difference between the data signal DATA3 and its inverse signal is outputted from the operational amplifier P1 of the signal control circuit 3211c; and the the pulse signal and its inverse signal is outputted from the operational amplifier P1 of the signal control circuit 3211d. The body side microcomputer 3210 receives these differences as Receive DATA3.

### (3.4) The signal control circuit 3211b

The body side microcomputer 3210 performs control for the signal control circuit 3211b, similar to the control performed in (3.1) by the lens side microcomputer 3110 for the signal control circuits 3111 a, 3111c, and 3111d. It should be understood that the body side microcomputer 3210 inputs the clock pulse signal CLK3 to the signal control circuit 3211b as the input parameter Send DATA1.

### (Communication operation)

According to the third embodiment of the present invention, the flow chart relating to communication operation of the digital camera 3 is the same as the flow chart relating to communication operation of the digital camera 2 in the second embodiment. However, in the flow chart relating to communication operation of the digital camera 3, the initial communication operation executed in steps S8 and S9 of Fig. 9(a) is different from that in the second embodiment.

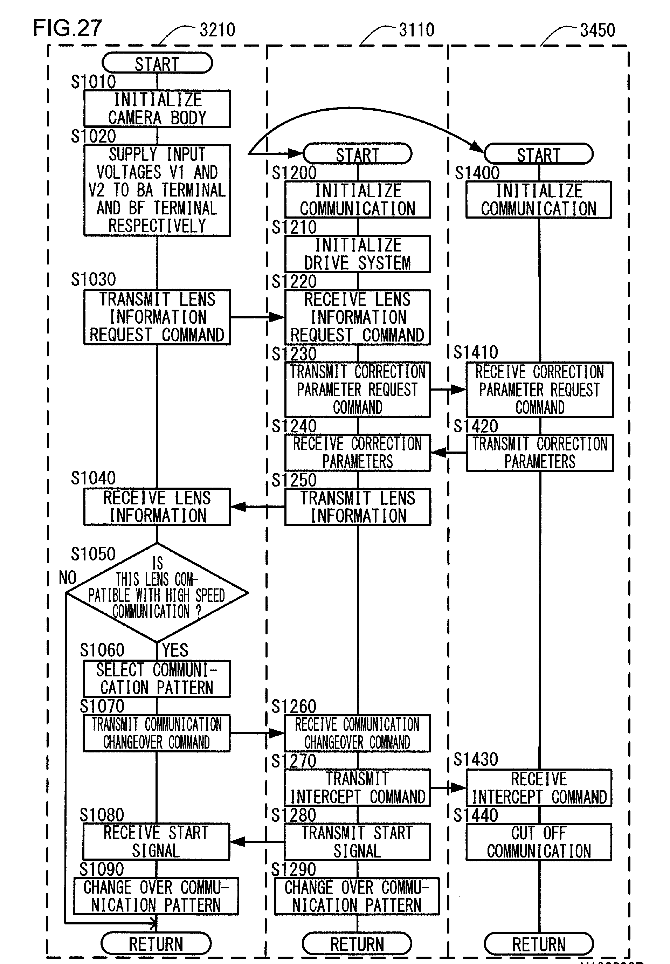

Fig. 27 is a flow chart related to the initial communication operation performed in steps S8 and S9 of Fig. 9(a). When the power for the camera body 3200 is turned on, power from the battery 240 is supplied to the DC/DC converter 3250. The DC/DC converter 3250 generates an input voltage V1 and an input voltage V2, and these input voltages V1 and V2 are supplied to the various sections, including the body side microcomputer 3210 of the camera body 3200.

In step S1010, the body side microcomputer 3210 initializes the various sections of the camera body 3200. And the body side microcomputer 3210 performs control for the signal control circuits 3211a through 3211d as shown in Fig. 21.

In step S1020, the body side microcomputer 3210 supplies the input voltage V1 and the input voltage V2 generated by the DC/DC converter 3250 to the BA terminal and to the BF terminal.

In step S1200, upon receipt of supply of power via the LA terminal and the LF terminal, the lens side microcomputer 3110 of the interchangeable lens 3100 starts control of the various sections of the interchangeable lens 3100 and performs initialization of communication. The lens side microcomputer 3110 performs control of the signal control circuits 3111 a through 3111 d as shown in Fig. 20.

In step S1210, the lens side microcomputer 3110 of the interchangeable lens 3100 performs initialization operation of the drive system, such as the focusing lens drive unit 141 and so on.

In step S1400 the adapter side microcomputer 3450, to which the input voltage V1 is inputted, starts control of the various sections of the intermediate adapter 3400 and performs initialization of communication. For example, the intermediate adapter 3400 may perform preparations for performing communication with the interchangeable lens 3100 according to Communication Pattern (1).

In step S1030, the body side microcomputer 3210 outputs a read write signal R/W3, a clock pulse signal CLK3, and a lens information request command, all at H level, to the LB and BB terminals, to the LC and BC terminals, and to the LD and BD terminals, respectively. And, when outputting the lens information request command to the LD and BD terminals as the data signal DATA3, the body side microcomputer 3210 synchronizes this command with the clock pulse signal CLK3 outputted to the LC to BC terminals. And, after completing transmission of the lens information request command, by changing over the control of the signal control circuits 3211a and 3211c to the control shown in Fig. 22, the body side microcomputer 3210 transitions to the state of waiting for transmission of lens information. And in step S1220 the lens side microcomputer 3110 receives the lens information request command outputted in step S1030 as Receive DATA1 for the signal control circuit 3111 c.

In step S1230, the lens side microcomputer 3110 outputs the clock pulse signal CLK4 to the LI and BI terminals, and outputs a correction parameter request command as the data signal DATA4 to the LJ and BJ terminals. When outputting this correction parameter request command as the data signal DATA4 to the LJ and BJ terminals, the lens side microcomputer 3110 synchronizes it with the clock pulse signal CLK4. And, after output of the correction parameter request command has been completed, by changing over control of the signal control circuit 3111b to the control shown in Fig. 22, the lens side microcomputer 3110 transitions to the state of waiting for transmission of the correction parameters.

In step S1410, the adapter side microcomputer 3450 receives the correction parameter request command and the clock pulse signal CLK4 that were transmitted from the lens side microcomputer 3110 in step S1230.

In step S1420, the adapter side microcomputer 3450 outputs the correction parameters stored in the adapter side storage unit 3451 as the data signal DATA4 to the LJ and BJ terminals.

In step S1240, the lens side microcomputer 3110 receives the correction parameters outputted from the adapter side microcomputer 3450 in step S1420 as Receive DATA2. And, after reception of the correction parameters has been completed, the lens side microcomputer 3110 changes over control of the signal control circuits 3111a and 3111 c to the control shown in Fig. 22.

Then the lens side microcomputer 3110 corrects the lens information stored in the lens side storage unit 3115 on the basis of the correction parameters received in step S1240.

In step S1250, the lens side microcomputer 3110 outputs a read/write signal R/W3 at L level to the LB and BB terminals, and outputs the lens information after correction (including the specification information) to the LD and BD terminals as the data signal DATA3. And, when outputting the lens information after correction, the lens side microcomputer 3110 synchronizes it with the clock pulse signal CLK3 outputted by the body side microcomputer 3210 to the LC and BC terminals. Moreover, after the output of the lens information after correction has been completed, by changing over the control for the signal control circuits 3111 a through 3111 d to the control shown in Fig. 20, the lens side microcomputer 3110 transitions to the state of waiting for transmission of a communication changeover command.

In step S1040, the body side microcomputer 3210 receives the lens information transmitted from the lens side microcomputer 3110 in step S1250 as the data signal DATA3.

In step S1050, the body side microcomputer 3210 analyzes the specification information included in the lens information received in step S1040, and makes a decision as to whether or not this interchangeable lens 3100 is compatible with high speed communication. For example, the body side microcomputer 3210 may make a decision as to whether or not information related to the CMOS type signal output method or information related to the differential transmission method are included in the specification information. If information related to the CMOS type signal output method or information related to the differential transmission method is included in the specification information, then the body side microcomputer 3210 decides that this interchangeable lens 3100 is one that is compatible with high speed communication, and reaches an affirmative decision in step S1050 and proceeds to execute step S1060. However, if neither information related to the CMOS type signal output method nor information related to the differential transmission method is included in the specification information, then the body side microcomputer 3210 reaches a negative decision in step S1050, and terminates the operation of Fig. 27 at this point and starts routine communication operation. In other words, the body side microcomputer 3210 decides to perform routine communication according to the current state of Communication Pattern (1) without alteration.

In step S1060, on the basis of the specification information, the body side microcomputer 3210 selects the communication pattern to be implemented between the lens side microcomputer 3110 and the body side microcomputer 3210. If information related to the signal output method of the CMOS type and also information related to the differential transmission method are both included in the specification information, then the body side microcomputer 3210 selects Communication Pattern (3) as the type of communication to be employed during routine communication operation. But if information related to the signal output method of the CMOS type is included in the specification information while information related to the differential transmission method is not included in the specification information, then the body side microcomputer 3210 selects Communication Pattern (2) as the type of communication to be employed during routine communication operation.

After the communication pattern has been selected, the body side microcomputer 3210 changes over control of the signal control circuits 3211a through 3211d to the control shown in Fig. 21.

In step S1070, the body side microcomputer 3210 outputs a read/write signal R/W3 and a communication changeover command, both at H level, to the LB and BB terminals and to the LD and BD terminals, respectively. This communication changeover command is a command for commanding the lens side microcomputer 3110 to change over to the communication pattern that was selected in step S1060.

In step S1260, the lens side microcomputer 3110 receives the communication changeover command transmitted from the body side microcomputer 3210 in step S1070.

In step S1270, the lens side microcomputer 3110 transmits a read/write signal R/W3, a clock pulse signal CLK4, and an intercept command, all at L level, to the LB and BB terminals, to the LI and BI terminals, and to the LJ and BJ terminals, respectively. This intercept command is a command to the adapter side microcomputer 3450 for intercepting (i.e. for disconnecting or putting to Hi-Z) the connection to the LI and BI terminals and the connection to the LJ and BJ terminals.

In step S1430, the adapter side microcomputer 3450 receives the intercept command transmitted from the lens side microcomputer 3110 in step S1270.

In step S1440, the adapter side microcomputer 3450 intercepts (i.e. disconnects or puts to Hi-Z) the connection to the LI and BI terminals and the connection to the LJ and BJ terminals.

In step S1280, the lens side microcomputer 3110 outputs a start signal to the LD and BD terminals as the data signal DATA3. This start signal is a signal for instructing the body side microcomputer 3210 to start communication according to the communication pattern that was selected in step S1060.

In step S1080, the body side microcomputer 3210 receives the start signal transmitted from the lens side microcomputer 3110 in step S1280.

In step S1090, the body side microcomputer 3210 changes over the signal control circuits 3211 a through 3211 d to the communication pattern that was selected in step S1060.

In step S1290, the lens side microcomputer 3110 changes over the signal control circuits 3111 a through 3111 d to the communication pattern corresponding to the communication changeover command that was received in step S1260.

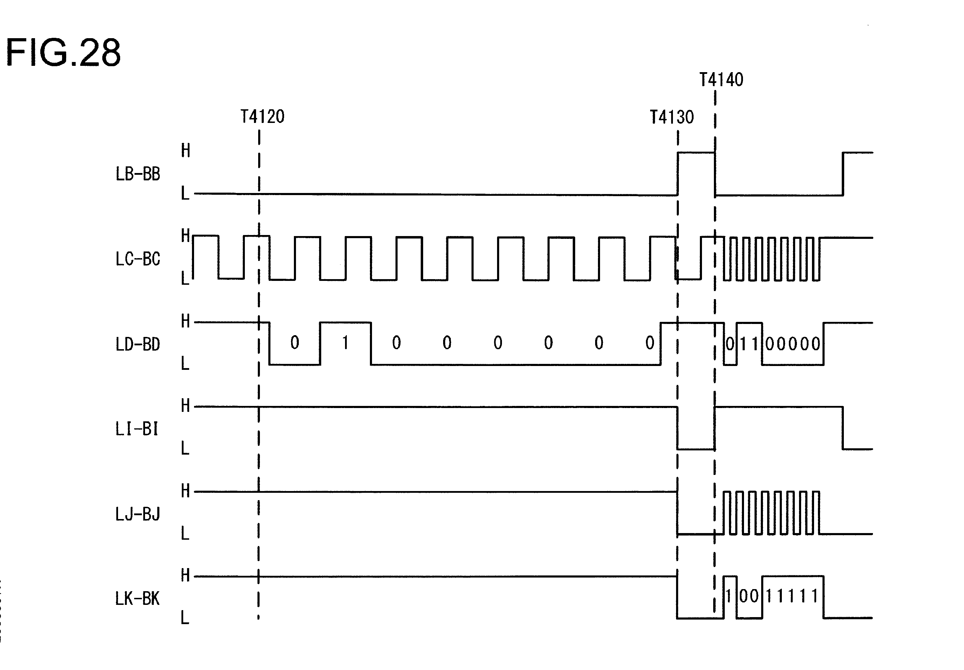

Fig. 28 is an example of a timing chart showing, in and after step S1280, the signal levels at the LB and BB terminals, at the LC and BC terminals, at the LD and BD terminals, at the LI and BI terminals, at the LJ and BJ terminals, and at the LK and BK terminals. A time point T4120, a time point T4130, and a time point T4140 are shown in this timing chart shown by way of example in Fig. 28. It should be understood that it will be supposed that Communication Pattern (3) has been selected in step S1060 of Fig. 27.

In the interval from the time point T4120 to the time point T4130, the lens side microcomputer 3110 performs step S1280 of Fig. 27, and "01000000" is transmitted between the LD and BD terminals as one example of a start signal. It should be understood that, while the start signal is shown as being eight bits in Fig. 28, the bit length of the start signal could be 16 bits or 32 bits.

In the interval from the time point T4130 to the time point T4140, the lens side microcomputer 3110 executes step S1290 of Fig. 4, and the body side microcomputer 3210 executes step S1090. In concrete terms, the lens side microcomputer 3110 changes over control of the signal control circuits 3111 a through 3111 d to the control shown in Fig. 25, and the body side microcomputer 3210 changes over control of the signal control circuits 3211 a through 3211 d to the control shown in Fig. 26. As a result, after the time point T4140, communication is performed according to Communication Pattern (3) between the lens side microcomputer 3110 and the body side microcomputer 3210. The read/write signal R/W3 is outputted to the LB and BB terminals, and the inverse signal of the read/write signal R/W3 is outputted to the LI and BI terminals. Moreover, the clock pulse signal CLK3 is outputted to the LC and BC terminals, and the inverse signal of the clock pulse signal CLK3 is outputted to the LJ and BJ terminals. A signal "01100000" is outputted to the LD and BD terminals as the data signal DATA3, and the inverse signal "10011111" of this data signal is outputted to the LK and BK terminals.

The pulse frequency of the clock pulse signal CLK3 that is outputted to the LC and BC terminals subsequent to the time point T4140 is higher than that of the clock pulse signal CLK3 before the time point T4140. It should be understood that while, in Fig. 28, the amplitudes of the signals outputted to the various terminals subsequent to the time point T4140 and before the time point T4140 are shown as being the same, it would also be acceptable to make the amplitudes of the signals outputted to the various terminals subsequent to the time point T4140 smaller, thus shortening the time periods required for rise and fall of these output signals. By doing this, it is possible to anticipate yet further increase in the speed of communication.

According to the embodiments explained above, the following beneficial operational effects are obtained.

The interchangeable lens 100 according to the first and second embodiments of the present invention is one type of accessory, and is detachably mounted to the camera body 200 via the lens side mounting portion 120. And the lens side microcomputer 110 of the interchangeable lens 100 includes the first lens side communication contact point group 111, and performs data communication by employing a transmission line that is formed between that group and the first body side communication contact point group 211 of the camera body 200. Moreover, the lens side microcomputer 110 also includes the second lens side communication contact point group 112 and forms a transmission line with the second body side communication contact point group 212 of the camera body 200, and performs routine communication with the second body side communication contact point group 212 according to the differential transmission method, if information related to the signal output method of the CMOS type and information related to the differential transmission method are included in the specification information included in the lens information. Moreover, the lens side microcomputer 110 also includes the changeover device 302 and the changeover control circuit 303, and changes over the communication circuits (i.e. the first communication circuit 300 and the second communication circuit 301) that are connected to the various terminals of the first lens side communication contact point group 111 and of the second lens side communication contact point group 112, if information related to the signal output method of the CMOS type and information related to the differential transmission method are included in the specification information included in the lens information.

Since the interchangeable lens 100 has a structure such as described above, and is capable of changing over to communication according to the differential transmission method, accordingly it is capable of performing routine communication with the camera body 200 at high speed.

In a similar manner, the camera body according to the first and second embodiments of the present invention is detachably mounted to the interchangeable lens 100 via the body side mounting portion 220. And the body side microcomputer 210 of the camera body 200 includes the first body side communication contact point group 211, and performs data communication by employing a transmission line that is formed between that group and the first lens side communication contact point group 111 of the interchangeable lens 100. Moreover, the body side microcomputer 210 also includes the second body side communication contact point group 212 and forms a transmission line with the second lens side communication contact point group 112 of the interchangeable lens 100, and performs communication with the second body side communication contact point group 212 according to the differential transmission method, if information related to the signal output method of the CMOS type and information related to the differential transmission method are included in the specification information included in the lens information. Moreover, the body side microcomputer 210 also includes the changeover device 302 and the changeover control circuit 303, and changes over the communication circuits (i.e. the first communication circuit 300 and the second communication circuit 301) that are connected to the various terminals of the first body side communication contact point group 211 and of the second body side communication contact point group 212, if information related to the signal output method of the CMOS type and information related to the differential transmission method are included in the specification information included in the lens information.

And, since the camera body 200 has a structure such as described above, and is capable of changing over to communication according to the differential transmission method, accordingly it is capable of performing routine communication with an accessory such as the interchangeable lens 100 at high speed.

Furthermore, the interchangeable lens 3100 according to the third embodiment of the present invention is one type of accessory, and is detachably mounted to the camera body 3200. This interchangeable lens 3100 includes the signal control circuits 3111 a through 3111d that have the circuit structure shown in Fig. 18. The signal control circuits 3111 a through 3111 d have the electric circuitry shown in Fig. 18, and implement communication with the camera body according to Communication Patterns (1) through (3). The signal control circuits 3111a through 3111d perform communication with the camera body 3200 by employing the transmission lines between the LB and BB terminals, between the LC and BC terminals, between the LD and BD terminals, and between the LE and BE terminals. Moreover, if information is included in the specification information included in the lens information related to the signal output method of the CMOS type or related to the differential transmission method, then the signal control circuits 3111a through 3111d perform communication with the camera body 3200 by employing the transmission lines between the LB and BB terminals, between the LC and BC terminals, between the LD and BD terminals, between the LE and BE terminals, between the LI and BI terminals, between the LJ and BJ terminals, between the LK and BK terminals, and between the LH and BH terminals. And the lens side microcomputer 3110 can change over the signal control circuits 3111a through 3111d from Communication Pattern (1) to Communication Pattern (2) or Communication Pattern (3) (step S1260 and step S1290 of Fig. 27), if information is included in the specification information included in the lens information related to the signal output method of the CMOS type, or related to the differential transmission method.

In Communication Pattern (1) the interchangeable lens 3100 performs communication with the camera body 3100, using the transmission lines between the LB and BB terminals, between the LC and BC terminals, and between the LD and BD terminals, in which the signal output method is the open drain type, and the transmission method is the single ended method.

And, in Communication pattern (2), the signal output method is changed over to the CMOS type. In Communication Pattern (2), by also employing the transmission line between the LI and BI terminals and the transmission line between the LJ and BJ terminals for communication with the camera body, all of the communication is implemented as one-way communication. Since, by doing this, there is no requirement to perform processing for preventing erroneous operation, such as the body side microcomputer 3210 and the lens side microcomputer 3110 simultaneously transmitting data on a single transmission line during half duplex communication or the like, accordingly it is possible to implement communication at a higher speed than in the case of Communication Pattern (1).

In Communication Pattern (3), further, the transmission method is changed over to the differential transmission method. Due to this, it is possible to implement communication at yet higher speed.

Variants of the embodiments explained above may be implemented as described below.

### (Variant Embodiment #1)

In the first and the second embodiments, the high speed communication that employs the second communication circuit 301 is not limited to only being according to the differential transmission method. For example, it would also be possible to increase the speed by performing parallel communication using the first communication contact point group and the second communication contact point group. Since, by dedicating the first communication contact point group to data transfer from the interchangeable lens 100 to the camera body 200 and by dedicating the second communication contact point group to data transfer from the camera body 200 to the interchangeable lens 100, processing for preventing erroneous operation during half duplex communication (such as simultaneous transmission of data or the like) becomes unnecessary, accordingly it is possible to implement communication at yet higher speed.

### (Variant Embodiment #2)

While, in Fig. 4(b), Fig. 9(b), and Fig. 27, only processing when the power supply to the camera body 200 or 3200 was turned on was described, similar processing can also be applied when an accessory such as the interchangeable lens 100 or 3100 or the like is newly installed to the camera body 200 or 3200 with the power supply already having been turned on, or when the digital camera system 1, 2, or 3 returns from the sleep state. It should be understood that, if the camera body or the accessory are of the type in which the various parameters that have been set up till that moment are deleted when the camera body or the accessory transitions to the sleep state, then the microcomputer of the camera body or of the accessory executes processing such as that shown by way of example in Fig. 4(b), Fig. 9(b), or Fig. 27 for a second time. On the other hand, if the camera body or the accessory are of the type in which the various parameters that have been set up till that moment are preserved even when the camera body or the accessory transitions to the sleep state, then it would also be acceptable to arrange for the microcomputer of the camera body or of the accessory to implement high speed communication immediately after return from the sleep state.

### (Variant Embodiment #3)

The processing of Fig. 4 and Fig. 9 is not to be considered as being limited only to operation for starting high speed communication between the interchangeable lens and the camera body. For example, it can also be applied to operation for starting high speed communication between an intermediate adapter that is detachably mounted to the camera body and that has a first communication contact point group and a second communication contact point group, and the camera body.

### (Variant Embodiment #4)

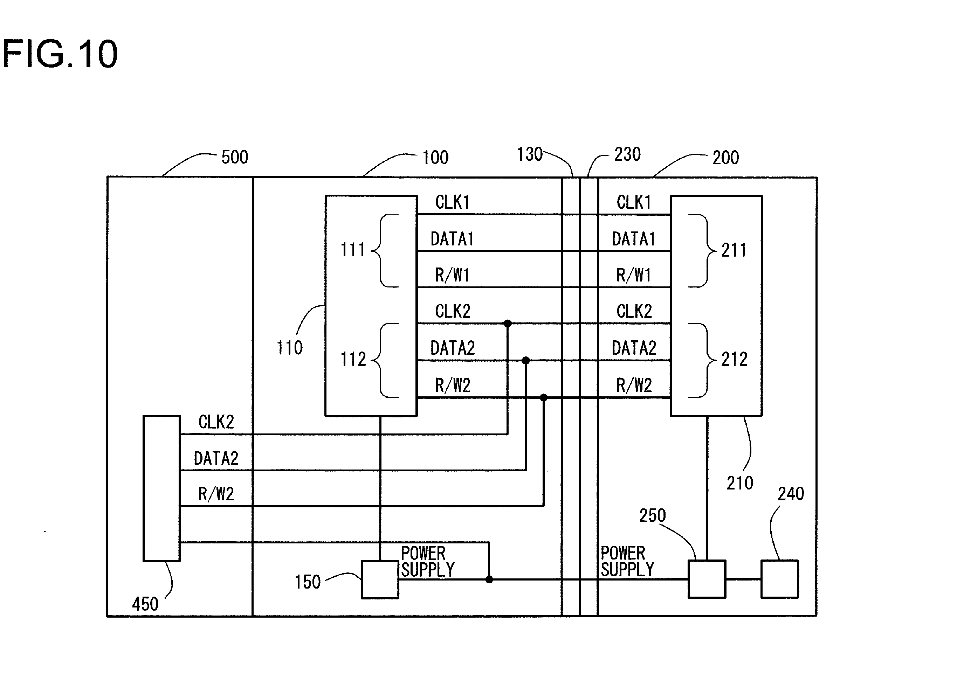

Moreover, the accessory according to the present invention is not limited to being only the interchangeable lens 100 or the intermediate adapter 400. For example, as shown in Fig. 10, an accessory 500 that is installed on the photographic subject side of the interchangeable lens 100 is also included. As examples of such an accessory 500, a tele-converter or a wide angle converter or the like may be cited.

### (Variant Embodiment #5)

The operation for starting high speed communication between the interchangeable lens and the camera body is not to be considered as being limited to the processing shown in Fig. 4(b), Fig. 9(b), and Fig. 27.
[1] It would also be acceptable to arrange for the interchangeable lens 100 to transmit the lens information before correction to the camera body 200, during the interval from when it receives the lens information request command from the camera body 200 (step S120 of Fig. 4(b) and Fig. 9(b), and step S1030 of Fig. 27) until it transmits the correction parameter request command to the intermediate adapter 400 (step S130 of Fig. 4(b), step S330 of Fig. 9(b), and step S1230 of Fig. 27). In this case, the camera body 200 receives the lens information twice, and determines the presence or absence of the intermediate adapter 400 or 3400 on the basis of both the lens information that is received the first time and also the lens information that is received the second time.
[2] It would be possible to omit transmission and reception of the start signal. In the first and the second embodiments, it would also be acceptable to arrange for the camera body 200, after the processing of step S50, to skip the processing of step S60 and to proceed to the processing of step S70. Moreover, it would also be acceptable to arrange for the interchangeable lens 100, after the processing of step S170 (Fig. 4) or the processing of step S370 (Fig. 9), to skip the processing of step S180 and to proceed to the processing of step S190. Furthermore, in the third embodiment, it would also be acceptable to arrange for the camera body 3200, after the processing of step S1070, to skip the processing of step S1080 and to proceed to the processing of step S1090. Yet further, it would also be acceptable to arrange for the interchangeable lens 3100, after the processing of step S1260, to skip step S1280 and to proceed to the processing of step S1290.
[3] It would also be possible to omit transmission and reception of the intercept command. In the first and the second embodiments, it would also be acceptable to arrange for the interchangeable lens 100, after the processing of step S160, to skip the processing of step S170 (Fig. 4) or the processing of step S370 (Fig. 9) and to proceed to the processing of step S180. Moreover, it would also be acceptable to arrange for the intermediate adapter 400, after the processing of step S430, to skip the processing of step S440 and to proceed to the processing of step S450. Furthermore, in the third embodiment, it would also be acceptable to arrange for the interchangeable lens 3100, after the processing of step S1260, to skip the processing of step S1270 and to proceed to the processing of step S1280. Yet further, it would also be acceptable to arrange for the intermediate adapter 3400, after the processing of step S1420, to skip the processing of step S1430 and to proceed to the processing of step S1440. It should be understood that it would be possible to combine this variant embodiment with [2] described above: for example, in the case of the third embodiment, it would be acceptable to arrange for the interchangeable lens 3100, after the processing of step S1260, to skip steps S1270 and S1280, and to proceed to the processing of step S1290.
[4] While, in the flow chart of Fig. 4, it was arranged for the body side microcomputer 210 to intercept (i.e. to disconnect, open, break, or put into a Hi-Z state) the communication circuits to be connected in step S10 to the terminals of the second body side communication contact point group 212, it would also be acceptable to arrange to change over to the first communication circuit 300 side. In this case, the body side microcomputer 210 receives the correction parameter request command transmitted in step S130 and the intercept command transmitted in step S170 by employing the second body side communication contact point group 212. It would also be acceptable to arrange for the body side microcomputer 210 to transmit the communication changeover command immediately when it has received the correction parameter request command or the intercept command. It should be understood that, if the communication changeover command is transmitted immediately after the lens side microcomputer 110 has received the correction parameter request command, then it is desirable for the camera body 210 to receive the lens information from the interchangeable lens 100 by employing communication in which the differential transmission method or the like is used.

### (Variant Embodiment #6)

In the third embodiment, it would also be possible for the circuit structure of the signal control circuits 3111 a through 3111d and of the signal control circuits 3211 a through 3211d not to be the same as the structure shown in Fig. 18. For example, it would be acceptable to arrange to replace the various logic elements such as the NOT elements X1 through X4 and so on with a logic circuit that employs NAND elements.

### (Variant Embodiment #7)

While, in the third embodiment, in Communication Patterns (1) and (2), the path between the LE and the BE terminals and the path between the LH and the BH terminals were both employed for transmission and reception of the pulse signal specifying the state of the focusing lens 140, it would also be acceptable to arrange to employ only one of the path between the LE and the BE terminals and the path between the LH and the BH terminals for transmission and reception of the pulse signal specifying the state of the focusing lens 140.

If it is arranged to employ only one of the path between the LE and the BE terminals and the path between the LH and the BH terminals for transmission and reception of the pulse signal specifying the state of the focusing lens 140, then it would also be possible to arrange to employ a path between terminals that is not being used for transmission and reception of the pulse signal, in place of the path between the LK and BK terminals. In other words, in Communication Pattern (3), it would also be acceptable to arrange for the lens side microcomputer 3110 and the body side microcomputer 3210 to transmit and receive the inverse signal complementary to the data signal DATA3 by employing the path between the LH and the BH terminals. If the inverse signal complementary to the data signal DATA3 is transmitted and received by employing the path between the LH and the BH terminals, then it is desirable for the signal control circuit 3111c to be connected to the LD terminal and to the LH terminal, and for the signal control circuit 3211c to be connected to the BD terminal and to the BH terminal. Moreover it is possible to reduce the number of terminals, since the LK terminal, the BK terminal, the FK terminal, and the RK terminal are unnecessary when transmitting and receiving the inverse signal complementary to the data signal DATA3 by employing the path between the LH and BH terminals. It should be understood that, if the number of terminals is reduced by eliminating the LK terminal, the BK terminal, the FK terminal, and the RK terminal, then it would be possible for the signal control circuit 3111d and the signal control circuit 3211c not to include the circuitry shown in Fig. 18; for example, it would be possible for these control circuits to include only circuitry for performing single ended communication by employing open drain (open collector) output.

The embodiments and variant embodiments explained above are only given as examples; the present invention is not limited by the details thereof, provided that the essential characteristics of the present invention are not lost. Moreover, it would also be acceptable to arrange to execute the embodiments and/or variant embodiments explained above in various combinations, provided that the essential characteristics of the present invention are not lost.

The contents of the disclosure of the following application, upon which priority is claimed, are hereby incorporated herein by reference:
Japanese Patent Application No. 2012-106851 (filed on 8 May 2012).

### EXPLANATION OF REFERENCE NUMERALS

1, 2, 3: digital camera systems
100, 3100: interchangeable lenses
110, 3110: lens side microcomputers
111: first lens side communication contact point group
112: second lens side communication contact point group
120: lens side mounting portion
130, 3130: lens side contact point groups
200, 3200: camera bodies
210, 3210: body side microcomputers
211: first body side communication contact point group
212: second body side communication contact point group
20: body side mounting portion
230, 3230: body side contact point groups
300: first communication circuit
301: second communication circuit
302: changeover device
303: changeover control circuit
304: switch
305: opening/closing control circuit
400, 3400: intermediate adapters
410: front mounting portion
420: rear mounting portion
430: front contact point group
440: rear contact point group
450, 3450: adapter side microcomputers
3111a, 3111b, 3111c, 3111d, 3211a, 3211b, 3211c, 3211d, 3451a, 3451b: signal control circuits

## Claims

1. An accessory that is detachably mounted to a camera body, comprising:
a first communication unit that communicates with the camera body using a first transmission line;
a second communication unit that, when a predetermined condition is satisfied, communicates with the camera body by using the first transmission line and a second transmission line that is different from the first transmission line; and
a changeover unit that, when the predetermined condition is satisfied, changes over communication with the camera body from communication by the first communication unit to communication by the second communication unit.

2. An accessory according to Claim 1, wherein:
the second communication unit includes the first communication unit.

3. An accessory according to Claim 1 or Claim 2, wherein:
the second communication unit outputs, to the second communication line, an inverse signal complementary to a signal outputted to the first transmission line.

4. An accessory according to any one of Claims 1 through 3, further comprising:
an information storage unit that stores specification information specifying that the accessory comprises the second communication unit; wherein:
the first communication unit transmits the specification information to the camera body; and
the predetermined condition includes that the first communication unit has transmitted the specification information.

5. An accessory according to any one of Claims 1 through 4, wherein:
a second accessory to be electrically connected to the second transmission line is detachably connected to the accessory; and
the first communication unit further communicates with the second accessory by using the second transmission line.

6. An accessory that is employed in a camera system comprising a camera body and an interchangeable lens that is detachably mounted to the camera body and including a first transmission line and a second transmission line between the interchangeable lens and the camera body, and that is detachably mounted at least to the interchangeable lens, comprising:
a communication unit that communicates with the interchangeable lens by using the first transmission line; and
an interception unit that, when the interchangeable lens starts communication with the camera body by using the first transmission line and the second transmission line, intercepts communication with the interchangeable lens by the communication unit.

7. A camera body to which an accessory is detachably mounted, comprising:
a first communication unit that communicates with the accessory using a first transmission line;
a second communication unit that, when a predetermined condition is satisfied, communicates with the accessory by using the first transmission line and a second transmission line that is different from the first transmission line; and
a changeover unit that, when the predetermined condition is satisfied, changes over communication with the accessory from communication by the first communication unit to communication by the second communication unit.

8. A camera body according to Claim 7, wherein:
the second communication unit includes the first communication unit.

9. A camera body according to Claim 7 or Claim 8, wherein:
the second communication unit outputs, to the second communication line, an inverse signal complementary to a signal outputted to the first transmission line.

10. A camera body according to any one of Claims 7 through 9, wherein:
the predetermined condition includes that the first communication unit has received specification information concerning that the accessory comprises an accessory side communication unit that performs communication with the second communication unit by using the first transmission line and the second transmission line.

11. An accessory that is detachably mounted to a camera body including a first body contact point, a second body contact point, a third body contact point, a fourth body contact point, a fifth body contact point, and a sixth body contact point, the accessory comprising:
a first accessory contact point that is connected to the first body contact point when the accessory is installed to the camera body;
a second accessory contact point that is connected to the second body contact point when the accessory is installed to the camera body;
a third accessory contact point that is connected to the third body contact point when the accessory is installed to the camera body;
a fourth accessory contact point that is connected to the fourth body contact point when the accessory is installed to the camera body;
a fifth accessory contact point that is connected to the fifth body contact point when the accessory is installed to the camera body;
a sixth accessory contact point that is connected to the sixth body contact point when the accessory is installed to the camera body;
a first communication unit that sets up a plurality of first transmission lines, one between the first accessory contact point and the first body contact point, one between the second accessory contact point and the second body contact point, and one between the third accessory contact point and the third body contact point, and that communicates with the camera body by using the plurality of first transmission lines;
a second communication unit that, when a predetermined condition is satisfied, sets up a plurality of second transmission lines, one between the fourth accessory contact point and the fourth body contact point, one between the fifth accessory contact point and the fifth body contact point, and one between the sixth accessory contact point and the sixth body contact point, and that communicates with the camera body by using the plurality of first transmission lines and the plurality of second transmission lines; and
a changeover unit that, when the predetermined condition is satisfied, changes over communication with the camera body from communication with the first communication unit to communication with the second communication unit;
wherein the first communication unit:
transmits and receives a read/write signal between the first accessory contact point and the first body contact point;
receives a first clock pulse signal from the second body contact point via the first accessory contact point;
receives a first data signal synchronized with the first clock pulse signal from the third body contact point via the third accessory contact point when the read/write signal is at a level corresponding to a first truth value; and
transmits the first data signal to the third body contact point via the third accessory contact point when the read/write signal is at a level corresponding to a second truth value that is different from the first truth value;
and wherein the second communication unit:
transmits and receives the read/write signal between the first accessory contact point and the first body contact point, and also transmits and receives a first inverse signal complementary to the read/write signal between the fourth accessory contact point and the fourth body contact point;
receives a second clock pulse signal whose frequency is higher than that of the first clock pulse signal from the second body contact point via the second accessory contact point, and also receives a second inverse signal complementary to the second clock pulse signal from the fifth body contact point via the fifth accessory contact point;
when the read/write signal is at a level corresponding to the first truth value, receives a second data signal synchronized with the second clock pulse signal from the third body contact point via the third accessory contact point, and also receives a third inverse signal complementary to the second data signal from the sixth body contact point via the sixth accessory contact point; and
when the read/write signal is at a level corresponding to the second truth value, transmits the second data signal to the third body contact point via the third accessory contact point, and also transmits the third inverse signal to the sixth body contact point via the sixth accessory contact point.

12. An accessory according to Claim 11, wherein:
the second communication unit includes the first communication unit.

13. An accessory according to Claim 11 or Claim 12, further comprising:
an information storage unit that stores specification information specifying that the accessory comprises the second communication unit; wherein:
the first communication unit transmits the specification information to the camera body;and
the predetermined condition includes that the first communication unit has transmitted the specification information.

14. An accessory according to any one of Claims 11 through 13, wherein:
a second accessory to be electrically connected to the second transmission line is detachably connected to the accessory; and
the first communication unit:
transmits a third clock pulse signal to the second accessory via the fourth accessory contact point when the second accessory is installed to the accessory; and
transmits and receives a third data signal that is synchronized with the third clock pulse signal to and from the second accessory via the fifth accessory contact point when the second accessory is installed to the accessory.

15. An accessory that is employed in a camera system comprising a camera body including a first body contact point, a second body contact point, a third body contact point, a fourth body contact point, a fifth body contact point, and a sixth body contact point, and an interchangeable lens detachably mounted to the camera body, and that is detachably mounted at least to the interchangeable lens, wherein:
the interchangeable lens comprises:
a first lens contact point that is connected to the first body contact point when the interchangeable lens is installed to the camera body;
a second lens contact point that is connected to the second body contact point when the interchangeable lens is installed to the camera body;
a third lens contact point that is connected to the third body contact point when the interchangeable lens is installed to the camera body;
a fourth lens contact point that is connected to the fourth body contact point when the interchangeable lens is installed to the camera body;
a fifth lens contact point that is connected to the fifth body contact point when the interchangeable lens is installed to the camera body;
a sixth lens contact point that is connected to the sixth body contact point when the interchangeable lens is installed to the camera body;
a first communication unit that sets up a plurality of first transmission lines, one between the first lens contact point and the first body contact point, one between the second lens contact point and the second body contact point, and one between the third lens contact point and the third body contact point, and that communicates with the camera body by using the plurality of first transmission lines; and
a second communication unit that, when a predetermined condition is satisfied, sets up a plurality of second transmission lines, one between the fourth lens contact point and the fourth body contact point, one between the fifth lens contact point and the fifth body contact point, and one between the sixth lens contact point and the sixth body contact point, and that communicates with the camera body by using the plurality of first transmission lines and the plurality of second transmission lines; and
the accessory comprises:
a first accessory contact point that is connected to the fifth lens contact point when the accessory is installed to the interchangeable lens;
a second accessory contact point that is connected to the sixth lens contact point when the accessory is installed to the interchangeable lens;
a communication unit that communicates with the interchangeable lens by using the first accessory contact point and the second accessory contact point; and
an interception unit that intercepts communication by the communication unit with the interchangeable lens when the interchangeable lens starts communication with the camera body by using the second communication unit.

16. A camera body that is detachably mounted to an accessory including a first accessory contact point, a second accessory contact point, a third accessory contact point, a fourth accessory contact point, a fifth accessory contact point, and a sixth accessory contact point, comprising:
a first body contact point to be connected to the first accessory contact point when the accessory is installed;
a second body contact point to be connected to the second accessory contact point when the accessory is installed;
a third body contact point to be connected to the third accessory contact point when the accessory is installed;
a fourth body contact point to be connected to the fourth accessory contact point when the accessory is installed;
a fifth body contact point to be connected to the fifth accessory contact point when the accessory is installed;
a sixth body contact point to be connected to the sixth accessory contact point when the accessory is installed;
a first communication unit that sets up a plurality of first transmission lines, one between the first accessory contact point and the first body contact point, one between the second accessory contact point and the second body contact point, and one between the third accessory contact point and the third body contact point, and that communicates with the accessory by using the plurality of first transmission lines;
a second communication unit that, when a predetermined condition is satisfied, sets up a plurality of second transmission lines, one between the fourth accessory contact point and the fourth body contact point, one between the fifth accessory contact point and the fifth body contact point, and one between the sixth accessory contact point and the sixth body contact point, and that communicates with the accessory by using the plurality of first transmission lines and the plurality of second transmission lines; and
a changeover unit that, when the predetermined condition is satisfied, changes over communication with the camera body from communication with the first communication unit to communication with the second communication unit;
wherein the first communication unit:
transmits and receives a read/write signal between the first accessory contact point and the first body contact point;
transmits a first clock pulse signal to the second accessory contact point via the second body contact point;
transmits a first data signal synchronized with the first clock pulse signal via the third body contact point to the third accessory contact point when the read/write signal is at a level corresponding to a first truth value; and
receives the first data signal from the third accessory contact point via the third body contact point when the read/write signal is at a level corresponding to a second truth value that is different from the first truth value; and
the second communication unit:
transmits and receives the read/write signal between the first accessory contact point and the first body contact point, and also transmits and receives a first inverse signal complementary to the read/write signal between the fourth accessory contact point and the fourth body contact point;
transmits a second clock pulse signal whose frequency is higher than that of the first clock pulse signal to the second accessory contact point via the second body contact point, and also transmits a second inverse signal complementary to the second clock pulse signal to the fifth accessory contact point via the fifth body contact point;
when the read/write signal is at a level corresponding to the first truth value, transmits a second data signal synchronized with the second clock pulse signal via the third body contact point to the third accessory contact point, and also transmits a third inverse signal complementary to the second data signal via the sixth body contact point to the sixth accessory contact point via the sixth body contact point; and
when the read/write signal is at a level corresponding to the second truth value, receives the second data signal from the third accessory contact point via the third body contact point, and also receives the third inverse signal from the sixth accessory contact point via the sixth body contact point.
